(19) Europäisches Patentamt
European Patent Office
Office européen des brevets

(11) EP 0 983 983 B1

(12) **EUROPEAN PATENT SPECIFICATION**

(45) Date of publication and mention of the grant of the patent:
**12.12.2001 Bulletin 2001/50**

(51) Int Cl.[7]: **C07B 61/00**, C07F 15/00, C07F 15/04, C07F 19/00, C08F 10/00, G01N 21/64

(21) Application number: **99203631.9**

(22) Date of filing: **22.07.1997**

(54) **Combinatorial synthesis and analysis of organometallic compounds and catalysts**

Kombinatorische Synthese and Analyse von metallorganischen Verbindungen und Katalysatoren

Synthèse combinatoire et analyse de composés organométalliques et de catalyseurs

(84) Designated Contracting States:
**AT BE CH DE DK ES FI FR GB GR IE IT LI LU MC NL PT SE**

(30) Priority:
**23.07.1996 US 16102 P**
**09.10.1996 US 28106 P**
**25.10.1996 US 29255 P**
**10.01.1997 US 35366 P**
**09.06.1997 US 48987 P**

(43) Date of publication of application:
**08.03.2000 Bulletin 2000/10**

(62) Document number(s) of the earlier application(s) in accordance with Art. 76 EPC:
**97934335.7 / 0 923 590**

(73) Proprietor: **Symyx Technologies**
**Sunnyvale, CA 94062 (US)**

(72) Inventors:
- **Weinberg, Henry W.**
  **Palo Alto, CA 94306 (US)**
- **McFarland, Eric**
  **San Jose, CA 95112 (US)**
- **Goldwasser, Isy**
  **Palo Alto, CA 94306 (US)**
- **Boussie, Thomas**
  **Menlo Park, CA 94025 (US)**
- **Turner, Howard**
  **Campbell, CA 95008 (US)**
- **Van Beek, Johannes A. M.**
  **Mountain View, CA 94043 (US)**
- **Murphy, Vince**
  **Cupertino, CA 95014 (US)**
- **Powers, Timothy**
  **Walnut Creek, CA 94595 (US)**

(74) Representative: **Bawden, Peter Charles**
**Bawden & Associates,**
**4 The Gatehouse**
**2 High Street**
**Harpenden, Hertfordshire AL5 2TH (GB)**

(56) References cited:
**WO-A-96/11878** **WO-A-98/12156**

- **BURGER M T ET AL: "SYNTHETIC IONOPHORES. ENCODED COMBINATORIAL LIBRARIES OF CYCLEN-BASED RECEPTORS FOR CU2+ AND CO2+" JOURNAL OF ORGANIC CHEMISTRY, 1 January 1995 (1995-01-01), XP002046207**
- **MENGER F M ET AL: "PHOSPHATASE CATALYSIS DEVELOPED VIA COMBINATORIAL ORGANIC CHEMISTRY" JOURNAL OF ORGANIC CHEMISTRY,US,AMERICAN CHEMICAL SOCIETY. EASTON, vol. 60, no. 21, 1995, pages 6666-6667, XP002915842 ISSN: 0022-3263**
- **GENNARI C ET AL: "Combinatorial libraries: studies in molecular recognition and the quest for new catalysts" LIEBIGS ANNALEN/RECUEIL: ORGANIC AND BIOORGANIC CHEMISTRY - A EUROPEAN JOURNAL,US,VCH PUBLISHERS, FLORIDA,1997, pages 637-647-647, XP002113537 ISSN: 0947-3440**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 983 983 B1

Printed by Jouve, 75001 PARIS (FR)

(Cont. next page)

- **FRANCIS M B ET AL: "COMBINATORIAL APPROACH TO THE DISCOVERY OF NOVEL COORDINATION COMPLEXES" JOURNAL OF THE AMERICAN CHEMICAL SOCIETY,US,AMERICAN CHEMICAL SOCIETY, WASHINGTON, DC, vol. 118, no. 37, September 1996 (1996-09), pages 8983-8984, XP002136649 ISSN: 0002-7863**

Remarks:

The file contains technical information submitted after the application was filed and not included in this specification

## Description

### FIELD OF THE INVENTION

The present invention relates, *inter alia*, to methodologies for the synthesis, screening and characterization of organometallic compounds and catalysts. The methods of the present invention provide for the combinatorial synthesis, screening and characterization of libraries of supported and unsupported organometallic compounds and catalyssts. The methods of the present invention can be applied to the preparation and screening of large numbers of organometallic compounds which can be used not only as catalysts (e.g., homogeneous catalysts), but also as additives and therapeutic agents.

### BACKGROUND OF THE INVENTION

Ancillary ligand-stabilized metal complexes (i.e., organometallic complexes) are useful as catalysts, additives, stoichiometric reagents, monomers, solid state precursors, therapeutic reagents and drugs. The ancillary ligand system comprises organic substituents, bind to the metal center(s), remain associated with the metal center(s), and therefore provide an opportunity to modify the shape, electronic and chemical properties of the active metal center(s) of the organometallic complex.

Certain organometallic complexes are catalysts for reactions such as oxidation, reduction, hydrogenation, hydrosilylation, hydrocyanation, hydroformylation. polymerization, carbonylation, isomerization, metathesis, carbon-hydrogen activation, cross coupling, Friedel-Crafts acylation and alkylation, hydration, dimerization, trimerization and Diels-Alder reactions. Organometallic complexes can be prepared by combining an ancillary ligand precursor with a suitable metal precursor in a suitable solvent at a suitable temperature. The yield, activity and selectivity of the targeted organometallic complex is dependent on a variety of factors including the form of the ancillary ligand precursor, the choice of the metal precursor, the reaction conditions (*e.g.*, solvent, temperature, time, *etc.*) and the stability of the desired product. In some cases, the resulting organometallic complex is inactive as a catalyst until it is "activated" by a third component or cocatalyst. In many cases, third component "modifiers" are added to active catalysts to improve performance. The effectiveness of the cocatalyst, the type and amount of modifier, and the suitability of the ancillary ligand precursor, metal precursor and reaction conditions to form an effective catalyst species in high yield are unpredictable from first principles. Given the number of variables involved and the lack of theoretical capability, it is not surprising that the discovery and optimization of catalysts is laborious and inefficient.

One important example of this is the field of single-sited olefin polymerization catalysis. The active site typically comprises an ancillary ligand-stabilized coordinatively unsaturated transition metal alkyl complex. Such catalysts are often prepared by the reaction of two components. The first component is an ancillary ligand-stabilized transition metal complex having a relatively low coordination number (typically between three and four). The second component, known as the activator or cocatalyst, is either an alkylating agent, a Lewis acid capable of abstracting a negatively charged leaving group ligand from the first component, an ion-exchange reagent comprising a compatible non-coordinating anion or a combination thereof. Although a variety of organometallic catalysts have been discovered over the past 15 years, this discovery is a laborious process which consists of synthesizing individual potentially catalytic materials and subsequently screening them for catalytic activity. The development of a more efficient, economical and systematic approach for the synthesis of novel organometallic catalysts and for the screening of such catalysts for useful properties would represent a significant advance over the current state of the art. A particularly promising method for simplifying the discovery process would rely on methods of producing combinatorial libraries of ligands and catalysts and screening the compounds within those libraries for catalytic activity using an efficient parallel or rapid serial detection method.

The techniques of combinatorial synthesis of libraries of organic compounds are well known. For example, Pirrung, *et al.* developed a technique for generating arrays of peptides and other molecules using, for example, light-directed, spatially-addressable synthesis techniques (U.S. Patent No. 5,143,854 and PCT Publication No. WO 90/15070). In addition, Fodor, *et al.* have developed automated techniques for performing light-directed, spatially-addressable synthesis techniques, photosensitive protecting groups, masking techniques and methods for gathering fluorescence intensity data (Fodor, *et al.*, PCT Publication No. WO 92/10092). In addition, Ellman, *et al*. recently developed a methodology for the combinatorial synthesis and screening of libraries of derivatives of three therapeutically important classes of organic compounds, benzodiazepines, prostaglandins and β-turn mimetics (*see*, U.S. Patent No. 5,288,514).

Using these various methods of combinatorial synthesis, arrays containing thousands or millions of different organic elements can be formed (U.S. Patent No. 5, 424, 186). The solid phase synthesis techniques currently being used to prepare such libraries involve a stepwise process (*i.e.*, sequential, coupling of building blocks to form the compounds of interest). In the Pirrung, *et al.* method, for example, polypeptide arrays are synthesized on a substrate by attaching photoremovable groups to the surface of the substrate, exposing selected regions of the substrate to light

to activate those regions, attaching an amino acid monomer with a photoremovable group to the activated region, and repeating the steps of activation and attachment until polypeptides of the desired length and sequences are synthesized. The Pirrung, *et al.* method is a sequential, step-wise process utilizing attachment, masking, deprotecting, attachment, etc. Such techniques have been used to generate libraries of biological polymers and small organic molecules to screen for their ability to specifically bind and block biological receptors (*i.e.*, protein, DNA, *etc.).* These solid phase synthesis techniques, which involve the sequential addition of building blocks (*i.e.*, monomers, amino acids) to form the compounds of interest, cannot readily be used to prepare many inorganic and organic compounds. As a result of their relationship to semiconductor fabrication techniques, these methods have come to be referred to as "Very Large Scale Immobilized Polymer Synthesis," or "VLSIPS" technology.

Schultz, *et al*. was the first to apply combinatorial chemistry techniques to the field of material science (PCT WO/9611878). More particularly, Schultz, *et al*. discloses methods and apparatus for the preparation and use of a substrate having thereon an array of diverse materials in predefined regions. An appropriate array of materials is generally prepared by delivering components of materials to predefined regions on the substrate and simultaneously reacting the reactants to form different materials. Using the methodology of Schultz, *et al.,* many classes of materials can be generated combinatorially including, for example, inorganic materials, intermetallic materials, metal alloys, ceramic materials, *etc*. Once prepared, such materials can be screened for useful properties. Liu and Ellman, *J. Org. Chem*. 1995, 60:7, working in the area of asymmetric catalysis, have developed a solid-phase synthesis strategy for the 2-pyrrolidinemethanol ligand class, and have demonstrated that the ligands can be directly evaluated for enantioselective additions of diethyl zinc reagent to aldehyde substrates using conventional analytical methods and not rapid parallel or serial screening methods.

From the above, it is apparent that there is a need for the development of methods for synthesizing and screening libraries of organometallic materials for catalytic properties. These methods would greatly accelerate the rate of discovering and optimizing a catalytic process. Quite surprisingly, the instant invention provides such methods.

## SUMMARY OF THE INVENTION

The present invention relates to methods for the synthesis and characterization of arrays, *i.e.*, libraries of catalysts and organometallic compounds. More particularly, the methods of the present invention provide for the combinatorial synthesis, screening and characterization of large arrays or libraries of diverse supported and unsupported ligands, catalysts and organometallic compounds.

Thus, in one aspect, the present invention provides a method of making and screening an array of metal-ligand compounds, the method comprising:

(a) synthesizing a spatially segregated array of ligands;
(b) delivering a suitable metal precursor to each element of the array of ligands to create an array of metal-ligand compounds;
(c) optionally activating the array of metal-ligand compounds with a suitable cocatalyst;
(d) optionally modifying the array of metal-ligand compounds with a third component; and
(e) screening the array of metal-ligand compounds for a useful property using a parallel or rapid serial screening technique selected from the group consisting of optical imaging, optical spectroscopy, mass spectrometry, chromatography, acoustic imaging, acoustic spectroscopy, infrared imaging and infrared spectroscopy.

In yet another aspect, the invention comprises an array of between 10 and $10^6$ different metal-ligand compounds at known locations on the substrate. In certain embodiments, the array will comprise more than 50 different metal-ligand compounds at known locations on the substrate. In other embodiments, the array will comprise more than 100 or more than 500 different metal-ligand compounds. In still further embodiments, the array will comprise more than 1,000, more than 10,000 or more than $10^6$ different metal-ligand compounds at known locations on the substrate.

Other features, objects and advantages of the invention and its preferred embodiments will become apparent from the detailed description which follows.

## BRIEF DESCRIPTION OF THE DRAWINGS

FIGS. 1A and 1B illustrate examples of transition-metal based metallocene catalysts and catalysts based on the late transition metals, e.g., zirconium and nickel, respectively.
FIGS. 2A and 2B illustrate sequences of solid-phase reactions which can be used to achieve combinatorial variations of diimine and/or diamine ligands.

FIGS. 3A and 3B illustrate various combinatorial routes for the synthesis of various ligand types.

FIGS. 4A-4G illustrate examples of ligand cores which can be made using combinatorial chemistry formats.

FIG. 5 illustrates a synthesis of an exemplary ancillary ligand on a support, wherein CN = 1 or 2, charge= 0 or -1.

FIG. 6 illustrates a synthesis of an exemplary ancillary ligand on a support. wherein CN = 1,2 or 3, charge= 0, -1 or -2.

FIG. 7 illustrates a synthesis of an exemplary ancillary ligand with metal complex on *a* support, wherein CN = 2, charge = -2, denoted [2,2].

FIG. 8 illustrates the synthesis of two exemplary ancillary ligands off support, wherein CN = 2, charge = 0, -1 or -2.

FIG. 9 illustrates a synthesis of an exemplary ancillary ligand off support, wherein CN = 2, charge = -1, denoted [2,1].

FIG. 10 illustrates a synthesis of an exemplary ancillary ligand off support with a functional linker, wherein CN = 2, charge = 0, -1, -2 or -3.

FIG. 11 illustrates a synthesis of an exemplary ancillary ligand off support with a "functionless" linker, wherein CN = 2, charge = 0, -1 or -2.

FIG. 12 illustrates a synthesis of an exemplary ancillary ligand off support wherein CN = 2 or 3, charge = 0, -1, -2, -3 or -4.

FIGS. 13A and 13B illustrate exemplary synthetic schemes useful in the placement of acidic functionality on the R-group substituents within the array or library.

FIG. 14 illustrates the synthesis of a library of 48 diimine ligands which is subsequently converted to a library of 96 diimine-metal compounds.

FIG. 15 illustrates a generalized solution-phase synthesis of diimines utilizing immobilized catalysts, proton sponges and reactant adsorbing reagents.

FIG. 16 illustrates an array of commercially-available diketones of use in practicing the present invention.

FIG. 17 illustrates examples of immobilized Lewis acid catalysts and dehydrating reagents.

## DETAILED DESCRIPTION OF THE INVENTION AND PREFERRED EMBODIMENTS

### *TABLE OF CONTENTS*

I. Glossary: Abbreviations and Definitions
II. Assembly of Combinatorial Libraries

- A. General Overview
- B. Synthesis Supports and Substrates
- C. Ligands
- D. Linkers
- E. Metals
- F. Immobilized Reagents
- G. Non-coordinating Anions (NCA)
- H. Diimine Catalyst Library Design and Synthesis

III. Screening of Combinatorial Libraries
IV. EXAMPLES

### *I. GLOSSARY: ABBREVIATIONS AND DEFINITIONS*

Abbreviations and generalized chemical formulae used herein have the following meanings: Cp, η5-cyclopentadienyl; Cp*, η5-pentamethylcyclopentadienyl; MAO, methylaluminaoxane; $[Q]^+[NCA]^-$, reactive cation/non-coordinating anion compound; EDG, electron-donating group; EWG, electron-withdrawing group; DME, dimethoxyethane; PEG, poly(ethyleneglycol); DEAD, diethylazodicarboxylate; COD, cyclooctadiene; DBU, 1,8-diazabicyclo[5.4.0]undec-7-ene; FMOC, 9-fluorenylmethoxycarbonyl; HOBT, 1-hydroxybenzotriazole; BTU, O-benzotriazole-N,N,N',N'-tetramethyl-uronium-hexafluorophosphate; DIAD, diisopropylazodicarboxylate. Other abbreviations and chemical formulae used herein have the meaning normally assigned to them by those of skill in the art.

Catalyst: As used herein, the term "catalyst" refers to a compound which speeds a chemical reaction or causes it to occur. The catalysts of the present invention are formally organometallic compounds which require "activation" prior to being catalytically active.

**Ligand:** Organometallic compounds are conventionally formulated as comprising a central metal atom or ion surrounded by and bonded to other atoms, ions, or small molecules known as "ligands". Ligands are either organic (*e.*

*g.*, η-aryl, alkenyl, alkynyl, cyclopentadienyl, CO, alkylidene, carbene) or inorganic (*e.g.*, $Br^-$, $Cl^-$, $OH^-$, $NO_2^-$, *etc*.). and can be charged or neutral. The number of times an inorganic or organic moiety *occurs* as a ligand in a metallic complex is generally indicated by the prefixes di, tri, tetra, *etc.* Multiple occurrences of complex organic ligands *are* indicated by the prefixes bis, tris, tetrakis, *etc*.

As used herein, the term "ancillary ligand" is distinguished from a "leaving group ligand." An ancillary ligand will remain associated with the metal center(s) as an integral constituent of the catalyst'or organometallic compound. Ancillary ligands are defined according to the number of coordination sites they occupy and their formal charge. A leaving group ligand is a ligand which is replaced in a ligand substitution reaction. A leaving group ligand can be replaced with an ancillary ligand or an activator component.

In most cases, the formalisms for assigning the charge on the ligand and the number of coordination sites it occupies are easily established and unambiguous. As with most chemical formalisms, there are examples where these assignments are subject to interpretation and debate. Such is the case with the η5 cyclopentadienyl (Cp) ligand which is considered to occupy 3 or 1 coordination site(s) on the metal, depending on the overall symmetry about the metal center. When the symmetry of the metal complex is best described as octahedral, the Cp-ligand will be assigned to occupy 3-coordination sites (one face of the octahedron). If, however, the metal complex symmetry is best described as tetrahedral, square planar or trigonal, the Cp-ligand is considered to occupy 1-coordination site. For the purposes of this invention, the Cp-ligand will formally be considered to occupy 1-coordination site on the metal complex.

Activator: In general, activators are used in the synthesis of various catalysts. Activators render a metallic center active as a catalyst and can be, for example, a chemical or an energy source which renders a metal center active and which, in certain embodiments, is directed from a source to a catalyst precursor which is located at a defined region on a substrate.

In certain embodiments wherein an activator is a chemical reagent which converts a metal complex into an olefin polymerization catalyst, the activator will generally fall into one of two broad classes of agents: (1) alkylating agents; and (2) ionizing agents.

"Alkylating agents," as used herein, define agents which function by exchanging unreactive ligands, such as, for example, halide or alkoxide, for reactive σ-bonded alkyl groups, such as, for example, methyl or ethyl groups. *An* example of this type of activation is illustrated by the conversion of $Cp_2$*ScCl into $Cp_2$*ScMe (where Cp* = $\eta^5$ - $C_5Me_5$) using methyllithium. In general, activation by alkylation works in systems where the metal center of the catalyst precursor is highly coordinatively unsaturated and does not require further reduction of coordination number to function as a catalyst; however, this mode of activation is not limited to such metal centers.

"Ionizing agents" function as activators by reducing the coordination number of the transition metal precursor by at least one coordination site to form ionic products. There are two types of ionizing agents: (1) Lewis acids; and (2) ion-exchange activators.

"Lewis acids" function by abstracting a leaving group ligand from the metal center to form a compatible non-coordinating anion ("NCA" which is comprised of the leaving group ligand and the Lewis acid) and a coordinatively unsaturated active transition metal cation. "Ion-exchange activators" deliver to the catalyst precursor a preformed compatible non-coordinating anion and accept from the catalyst precursor a coordinating anion (such as a methyl or halide group). Ion-exchange activators have the general formula $Q^+NCA^-$, wherein $Q^+$ is a reactive cation and $NCA^-$ is a compatible non-coordinating anion. The Lewis acids and ion exchange activators of use with the present invention include both soluble and supported (e.g., silica resin bound) Lewis acids and ion exchangers.

In some cases, activation can also be accomplished by Lewis acid or ion-exchange agents. For example, consider two possible chemical pathways leading to the synthesis of the catalyst, $[Cp_2ZrCH_3]^+[B(C_6F_5)_3CH_3]$, where $[B(C_6F_5)_3CH_3]$ is the "compatible non-coordinating anion" or "counter-ion". Using the Lewis acid pathway, the catalyst precursor is $[Cp_2Zr(CH_3)_2]$ and the activator is $[B(C_6F_5)_3]$. Using the "ion-exchange" pathway, the catalyst precursor is $[Cp_2Zr(CH_3)_2]$ and the activator is $[Ph_3C]^+[B(C_6F_5)_3CH_3]^-$. These examples demonstrate that all or part of the activator can become the "non-coordinating anion" or "counterion."

Compatible non-coordinating anion: A compatible non-coordinating anion is an anion that either does not coordinate to the metal cation, or is only weakly coordinated to the metal cation such that it remains sufficiently labile to be displaced by a neutral Lewis base or the molecule being transformed in the catalytic cycle. The term "compatible non-coordinating anion" specifically refers to an anion which when functioning as a stabilizing anion in the catalyst system of this invention does not transfer an anionic fragment to the metal cation to form inactive neutral products.

Organometallic compounds: Classically, compounds having bonds between one or more metal atoms and one or more carbon atoms of an organic group are defined as "organometallic compounds". For the purposes of this application, "organometallic" is defined to include all ancillary ligand stabilized metallic complexes regardless of presence or absence of a metal-carbon bond. As used herein, "organometallic compounds" are distinguished from catalysts by their lack of useful levels of catalytic activity in an initial screening. This definition does not, however, preclude a compound which was initially identified as an organometallic compound without catalytic activity in reference to a certain class of reactions (*e.g.*, alkene polymerization) but which is lateridentified as having catalytic activity with a

different class of reactions (*e.g.*, alkyne polymerization).

Metallocenes: Organometallic compounds in which a transition metal, such as, for example, zirconium, cobalt or nickel, is bonded to at least one substituted or unsubstituted $\eta^5$-cyclopentadienyl group.

Substrate: A material having a rigid or semi-rigid surface. In some embodiments, at least one surface of the substrate will be substantially flat. In other embodiments, the substrate will be divided into physically separate synthesis regions. Division of the substrate into physically separate synthesis regions can be achieved with, for example, dimples, wells, raised regions, etched trenches, or the like. In still other embodiments, small beads or pellets may be provided on the surface by, for example, placing the beads within dimples, wells or within or upon other regions of the substrate's surface. Alternatively, the small beads or pellets may themselves be the substrate. An appropriate substrate can be made out of any material which is compatible with the processes intended to occur thereon. Such materials include, but are not limited to, organic and inorganic polymers, quartz, glass, silica, *etc*. The choice of an appropriate substrate for certain given conditions will be apparent to those of skill in the art.

Synthesis support: A material such as, for example, silica, alumina, a resin or controlled pore glass (CPG) which is functionalized to allow a ligand or a ligand component to be attached either reversibly or irreversibly thereto. Specific examples of synthesis supports include Merrifield resin and functionalized silica gel. A synthesis support can be held within or upon a "substrate." "Synthesis support," "support," "bead" and "resin" are used interchangeably herein.

Predefined region: A predefined region is a localized, addressable area on a substrate which can be used for formation of a selected material and is otherwise referred to herein in the alternative as "known" region, "reaction" region, *a* "selected" region, or simply a "region." The predefined region may have any convenient shape, *e.g.,* circular, rectangular, elliptical, wedge-shaped, *etc*. Additionally, the predefined region can be a bead or pellet which is coated with the reactant component(s) of interest. In this embodiment, the bead or pellet can be identified with a tag, such as, for example, an etched binary bar code that can be used to indicate the history of the bead or pellet (*i.e.*, to identify which components were deposited thereon). In general, a predefined region is from about 25 $cm^2$ to about 10 $\mu m^2$. In a preferred embodiment, a predefined region and, therefore, the area upon which each distinct material is synthesized is smaller than about 10 $cm^2$. In another preferred embodiment, a predefined region is less than 5 $cm^2$. In a further preferred embodiment, a predefined region is less than 1 $cm^2$. In yet a further preferred embodiment, a predefined region is less than 1 $mm^2$. In still other preferred embodiments, the regions have an area less than about 10,000 $\mu m^2$. In an additional preferred embodiment, the regions are of a size less than 10 $\mu m^2$.

Linker: As used herein, the term "linker" or "linker arm" refers to a moiety interposed between the substrate and the ligand, catalyst or the organometallic compound. Linkers are either cleavable or noncleavable.

Metal ion: As used herein, the term "metal ion" refers to ions which are derived from, for example, simple salts (*e.g.*, $AlCl_3$, $NiCl_2$, *etc*.), complex or mixed salts comprising both organic and inorganic ligands (*e.g.*, $[(\eta^5-C_5Me_5)IrCl_2]_2$, *etc*.) and metal complexes (*e.g.*, $Gd(NTA)_2$, CuEDTA, *etc*.). Metal ions of use in practicing the present invention include, for example, main group metal ions, transition metal ions, lanthanide ions, *etc.* Zero valent metal precursors, such as $Ni(COD)_2$, are included in this definition.

## *II. ASSEMBLY OF COMBINATORIAL LIBRARIES*

### *A. General Overview*

The present invention provides methods, compositions and devices used for the combinatorial synthesis, screening and characterization of supported and unsupported organometallic compounds and ancillary ligand-stabilized catalysts (*e.g*., homogeneous and heterogenous catalysts) and libraries thereof. Preferably, the synthesis and screening of such libraries is carried out in a spatially selective, simultaneous, parallel or rapid serial fashion. In the embodiment wherein the library synthesis is carried out in parallel, a parallel reactor is preferably employed. The illustrations herein provide the first methods for generating and screening combinatorial libraries of organometallic compounds and catalysts.

The methods of the present invention provide for the assembly of libraries of organometallic compounds and catalysts. The catalysts of the present invention are of a type which requires activation by an activating agent. The invention also provides methods for the synthesis of both supported and unsupported organometallic compounds and catalysts. When the library compounds are supported, they are either attached to a substrate or, alternatively, to an intermediate synthesis support which is itself optionally on or within a substrate. Supported library compounds are bound to the substrate or synthesis support either directly through a functional group attached to a ligand core or, alternatively, through a linker arm which is itself a ligand core or pendent from a ligand core. When the library comprises catalysts, the library can be assembled such that the catalysts are homogeneous, heterogenous or a mixture thereof.

Thus, in one aspect the present invention provides a method of making an array of metal-ligand compounds, the method comprising:

(a) synthesizing a first metal-binding ligand and a second metal-binding ligand on first and second regions of a substrate;
(b) delivering a first metal ion to the first metal-binding ligand and a second metal ion to the second metal-binding ligand to form first and second metal-ligand compounds.

In this embodiment, ligands are assembled on the substrate by the step-wise delivery of ligand fragments and the reagents necessary to couple those fragments. Once the ligands are synthesized, they are reacted with metal ions to form metal-ligand compounds and activated.

In another aspect, the invention provides a method for immobilizing intact ligands on a substrate by binding the ligands to reactive groups on the surface of the substrate. Thus, in this aspect, the invention is a method for making an array of metal-ligand compounds, the method comprising:

(a) delivering a first metal-binding ligand and a second metal-binding ligand on first and second regions of a substrate;
(b) delivering a first metal ion to the first metal-binding ligand and a second metal ion to the second metal-binding ligand to form a first metal-ligand compound and a second metal ligand compound.

The metal-ligand compounds thus synthesized are reacted with an activating agent. Preferred activators include, but are not limited to, Lewis acids, such as $B(C_6F_5)_3$ and MAO, and ion-exchange reagents of the form $[Q]^+[NCA]^-$, such as $[H(OEt)_2]^+[BAr_4]^-$ and $[H(OEt_2)]^+[B(C_6F_5)_4]^-$. In a still further preferred embodiment, the activators are independently selected for each member of the library. In another preferred embodiment, the activated metal-ligand compounds comprise olefin polymerization catalysts.

In another aspect, the invention provides a method of making and screening an array of metal-ligand compounds, the method comprising:

(a) synthesizing a spatially segregated array of ligands;
(b) delivering a suitable metal precursor to each element of said array of ligands to create an array of metal-ligand compounds;
(c) activating said array of organometallic complexes with an activator (*e.g.*, a suitable cocatalyst);
(d) optionally modifying said array of metal-ligand compounds with a third component; and
(e) screening said array of metal-ligand compounds for a useful property using parallel or rapid serial optical imaging and/or spectroscopy, mass spectrometry, chromatography, acoustic imaging/spectroscopy, infrared imaging/spectroscopy.

Numerous types of ligands are of use in practicing the present invention *(see,* Figs. 1-13). In a preferred embodiment, the ligands arc neutral bidentate ligands. In another preferred embodiment, the ligands are monoanionic bidentate ligands. In yet another preferred embodiment, the ligands are chelating diimine ligands. In still another preferred embodiment, the ligands are salen ligands. Preferred ligands have a coordination number which is independently selected from the group consisting of 1, 2, 3 and 4. These preferred ligands have a charge which is independently selected from the group consisting of 0, -1, -2, -3 and -4. Certain preferred ligands have a charge which is greater than their coordination number.

The ligands are either attached directly or through a linker group to a substrate or a synthesis support or, alternatively, they are in solution. In a preferred embodiment, the ligands are attached directly to a synthesis support. In another preferred embodiment, the ligands are attached to a synthesis support through a linker group. In a further preferred embodiment, the ligands are attached to a substrate either directly or through a linker.

Any of the functional groups on the ligands or the linkers, or components of the ligands or the linkers, can be protected to avoid interference with the coupling reactions. The protection can be achieved by standard methods or variations thereof. A plethora of protection schemes for most known functional groups are known to and used by those of skill in the art. *See,* for example, Greene, *T.*, *et al.*, PROTECTIVE GROUPS IN ORGANIC SYNTHESIS, Second Ed., John Wiley and Sons, New York, 1991.

The chemical synthesis steps can be conducted using solid-phase, solution-phase or a combination of solid-phase and solution-phase synthetic techniques. The ligand, metal, activator, counterion, substrate, synthesis support, linker to the substrate or synthesis support and additives can be varied as part of the library. The various elements of the library are typically varied by, for example, the parallel dispensing of reagents to spatially addressable sites or by known "split-and-pool" combinatorial methodology. Other techniques for assembling combinatorial libraries will be apparent to those of skill in the art. *See,* for example, Thompson, L.A., *et al.*, "Synthesis and Applications of Small Molecule Libraries," *Chem. Rev.* 1996, **96**:555-600, Any number of a wide range of metal ions are appropriate for use in the present invention. In a preferred embodiment, the metal ions are transition metal ions. In another preferred embodiment,

the metal ions are ions of Pd, Ni, Pt, Ir, Rh, Co, Cr, Mo and W. When the metal ion is a transition metal ion, in one preferred embodiment, the metal-binding ligands are neutral bidentate ligands and the transition metal ion is stabilized by a labile Lewis base in the metal precursor. In another preferred embodiment, the ligands are monoanionic bidentate ligands and the transition metal center is stabilized by a labile anionic leaving group ligand in the metal precursor. In a still further preferred embodiment, the ligands are [2,2] or [2,1] ligands and each of the ligands is contacted with a main group metal alkyl complex such that the ligands are in the mono- or di-protic form. A particularly preferred metal alkyl complex is a trialkylaluminum complex. In a particularly preferred embodiment, the resulting metal-ligand compounds are useful for an organic transformation requiring a Lewis acid site such as, for example, stereoselective coupling reactions, olefin oligomerization reactions and olefin polymerization reactions. In yet another preferred embodiment, the aluminum-ligand compounds are further modified with an ion-exchange activator to produce an array of ligand-stabilized cationic aluminum compounds. A preferred ion-exchange activator is $[PhNMe_2H][B(C_6F_5)_4]$.

The catalysts prepared using the methods of the invention can be useful for catalyzing a wide variety of reactions including, but not limited to, oxidation, reduction, hydrogenation, hydrosilation, hydrocyanation, polymerizations (*e.g.,* olefins and acetylenes), water gas shift, oxo reaction, carboalkoxylation of olefins, carbonylation reactions (*e.g.*, of acetylenes and alcohols, *etc.),* decarbonylation, *etc.* As explained in greater detail hereinbelow, following the synthesis of the library, the library compounds are screened for a useful property. In a preferred embodiment, the useful property is a property relating to a polymerization reaction. In another preferred embodiment, the useful property is a mechanical property, an optical property, a physical property or a morphological property. In certain preferred embodiments, the useful property is a chemical property such as, for example, the lifetime of the metal-ligand compounds, the stability of these compounds under specific reaction conditions, the selectivity'of the library compounds for a particular reaction, the conversion efficiency of the library compounds in a particular reaction or the activity of the library compounds in a particular reaction. The library can be screened for compounds with useful properties using a wide range of techniques. Thus, in one preferred embodiment, the screening is performed by a method chosen from the group consisting of scanned mass spectrometry, chromatography, ultraviolet imaging, visible imaging, infrared imaging, electromagnetic imaging, ultraviolet spectroscopy, visible spectroscopy, infrared spectroscopy, electromagnetic spectroscopy and acoustic methods.

In general, the analysis of catalysts and organometallic compounds requires the ability to rapidly characterize each member to identify compounds with specific, desired properties. An exemplary use of the present invention is in the discovery and optimization of new catalysts. In a preferred embodiment wherein catalysts are synthesized, the constituents of the combinatorial library will be analyzed using high throughput methods for measuring such properties as activity (*i.e.*, turnover), selectivity in converting reactants into desired products, and stability during operation under a wide variety of substrate concentrations and reaction conditions. Spatially selective characterization methods inchude, for example, those capable of: (i) identification and characterization of gas phase products and volatile components of the condensed phase products; (ii) identification and characterization of condensed phase products; and (iii) measurement of physical properties of the catalyst elements on the library. Similar high throughput methodologies can be used for measuring properties other than catalysis (e.g., target binding, solubility, hydrophilicity, *etc.)* of libraries of both organometallic compounds and catalysts.

In yet another aspect, the invention comprises an array of between 10 and $10^6$ different activated metal-ligand compounds at known locations on the substrate. In certain embodiments, the array will comprise more than 50 different activated metal-ligand compounds at known locations on the substrate. In other embodiments, the array will comprise more than 100 or more than 500 different activated metal-ligand compounds. In still further embodiments, the array will comprise more than 1,000, more than 10,000 or more than $10^6$ different activated metal-ligand compounds at known locations on the substrate.

The assembly of combinatorial libraries of organometallic compounds and catalysts allows the rapid assessment of the effects of changes in numerous characteristics of the compounds themselves, the reactions used to prepare the compounds and the reactions in which the compounds take part. Examples of characteristics and properties (together referred to herein as "parameters") which can be modified include, but are not limited to, the identity of the ligand core itself, substituents on the ligand core, identity and/or charge of the metal ion, counterion, activator, reaction conditions, solvents, additives, supports, substrates and linkers. Other parameters of interest whose effects can be investigated by the use of the methods of the present invention will be apparent to those of skill in the art.

In a preferred embodiment of the present invention, only one parameter is varied per addressable location. In another preferred embodiment, the compounds synthesized are catalysts and variations in the various parameters are used to identify optimal species and conditions for catalyzing, or otherwise carrying out, a desired reaction or class of reactions.

Combinatorial libraries can be used in the synthesis of both organometallic compounds and catalysts to identify the optimal metal ion, metal ion charge, geometry and/or coordination number for achieving a property of interest. Similarly, the library can be used to measure the effects of changes in counterions, activators, reaction conditions, solvents and additives. Properties of the library constituents which are of interest include, for example, catalytic parameters, solubility, conductivity, hydrophilicity, mechanical properties and general pharmacological parameters (*e.g.*, target binding, pharmacokinetics, distribution volume, clearance, *etc.)*.

A specific example of a type of compound which can be synthesized and analyzed in a combinatorial format are the diimine Ni and Pd complexes discovered by Brookhart. This family of catalysts comprises 1,2 diimine ligand moieties bound to either 4-coordinate $Ni^{2+}$ or $Pd^{2+}$ centers. These precursors are then activated with a Lewis acid, such as MAO, and ion-exchange reagents of the form $[Q]^+[NCA]^-$, such as $[H(OEt)_2]^+[BAr_4]^-$ and $[H(OEt_2)]^+[B(C_6F_5)_4]^-$, *etc.,* to form polymerization catalysts. The properties of the catalyst (*e.g.*, polymer molecular weight capability, polymer branching statistics, *etc.*) are dependent upon the choice of the constituents of the catalyst. The use of combinatorial libraries allows for the optimization of the nature of these constituents.

Combinatorial libraries can also be used to identify the optimal means of attaching an organometallic compound or a catalyst to a substrate or support (silicate, aluminate, polystyrene, *etc*.). The catalysts or organometallic compounds are attached to the substrate or synthesis support directly through a functional group on a ligand or, alternatively, through a linker arm. Linker arm parameters which can be varied over a library include, for example, length, charge, solubility, conformational lability and chemical composition. Substituents of these linkers can be varied and particular combinations of catalysts, linkers, synthesis supports, metals, polymerization conditions, *etc.* can then be assayed directly for optimal catalytic activity and process operability using a two-dimensional or three-dimensional array format or with bead supports.

Optimization of compound constituents such as the metal ion, counterion, activator identity and concentration, *etc.* is accomplished by varying the identity or concentration of the constituent whose effect on the compound produced is being examined. Typically, the parameter will be varied over the array of addressable locations comprising the library. In addition to the above-described constituents, the nature of the substrate can also be varied using a combinatorial strategy.

The effect(s) of altering the characteristics of the constituents of a combinatorial library can be analyzed either directly or indirectly. Thus, in one embodiment, the structure or properties of the library compounds themselves are studied. In another embodiment, the effect of the library compounds on another molecule or system is studied. For example, when a library of polymerization catalysts is synthesized, the effect of variations in constituents over the library can be assessed by analyzing the polymer products produced using the constituents of the catalyst library. Such analysis can examine catalyst characteristics including, for example, molecular weight capability, copolymerization capability, lifetime, comonomer compatibility, chemical stability, and ability to form polymers of differing topology, molecular weight distribution and/or microstructure. Other means of analyzing combinatorial libraries will be apparent to those of skill in the art.

Libraries can be synthesized on diverse substrates made of different materials or having different topological characteristics and the effect of the nature of the support on the compounds synthesized can be examined as described above. In certain embodiments, the substrate can also comprise a synthesis support.

### *B. Synthesis Supports and Substrates*

In a preferred embodiment, the library comprises an array of supported metal-ligand compounds. In general, if supported organometallic compounds or catalysts are synthesized, the metal-ligand compounds are attached directly to either a substrate or a synthesis support for the library of organometallic compounds or catalysts. In other embodiments, the metal-ligand compounds are attached to the substrate or synthesis support via a linker-arm.

The structure, shape and functional characteristics of the substrate are limited only by the nature and scale of the reactions performed using the substrate. In certain embodiments, the substrate comprises a porous material. In other embodiments, *the* substrate *is a* nonporous material. The substrate can be substantially flat or can contain wells or raised regions. The substrate can have an integral means for liquid transfer such as, for example, holes, needles, valves, pipets or combinations thereof. The substrate can also comprise a means for conducting reactions under an inert or controlled atmosphere. Thus, in one embodiment, the substrate further comprises a cover which has a means for purging the substrate and its contents with a particular atmosphere. In other embodiments, the substrate contains means for heating or irradiating with light, sound or ionizing radiation the materials on or within the substrate. In yet *a* further embodiment, the substrate comprises a means for agitating the material within or upon the substrate.

In a preferred embodiment, the substrate has a substantially flat upper surface with a plurality of indentations or wells of sufficient depth to allow a quantity of synthesis support to be contained within the indentations or wells during reaction with one or more added reagents.

The substrate is constructed of any material which can be formed into a configuration which allows for the synthesis and screening of the library of the invention. The only limitation upon the materials useful for constructing substrates is that they must be compatible with the reaction conditions to which they will be exposed. Thus, substrates useful in practicing the methods of the invention include, but are not limited to, organic and inorganic polymers, metal oxides (*e.g.*, silica, alumina), mixed metal oxides, metal halides (*e.g.*, magnesium chloride), minerals, quartz, zeolites,

TEFLON, crosslinked, noncrosslinked or dentrimeric polyethylene, polypropylene copolymers, polypropylene, polystyrene, and ceramics. Other configurations for substrates and materials from which substrates can be constructed will be apparent to those of skill in the art. Soluble catalysts can be adsorbed onto inorganic or organic substrates to form useful heterogeneous catalysts.

In an exemplary two-dimensional combinatorial library of supported organometallic compounds or catalysts, wherein a synthesis support is utilized, the following substrate synthesis support configurations are possible: i) a porous support is placed in wells wherein the reactants flow through the support from the top of the well out through a hole in the bottom of the well (or flow may be in the reverse direction); ii) a porous support is placed in wells wherein the reactants flow only into and out of the top of the well; iii) a non-porous support is placed in wells wherein the reactants flow around the substrate from the top of the well out through a hole in the bottom of the well (or flow may be in the reverse direction); iv) a non-porous support is placed in wells wherein the reactants do not flow through from top to bottom of the well, but only to and from the top of the well; or v) a non-porous or porous support that is not contained in wells wherein the reactants are deposited directly onto the substrate surface in a spatially addressable manner.

In embodiments in which a ligand or synthesis support is intended to be attached to the substrate, the substrate is functionalized to allow this attachment. In embodiments wherein the ligand is synthesized by bringing together ligand fragments on the substrate, the substrate is functionalized to allow the attachment of a first ligand fragment. In embodiments wherein the ligand or synthesis support is not bound to the substrate, the substrate can be either functionalized or unfunctionalized.

Functionalizable substrates are known in the art. For example, glass plates have been functionalized to allow the conjugation of oligonucleotides thereto (*see, e.g.,* Southern, *Chem. Abstr.* 1990, 113:152979r). Another method to functionalize glass is taught by Brennan, T. M., *et al.* (U.S. Patent No. 5,474,796. reference), which comprises using polar silanes containing either a hydroxyl or amino group. Organic polymers are also amenable to functionalization. For instance, polypropylene can be surface derivatized by, for example, chromic acid oxidation, and subsequently converted to hydroxy- or amino-methylated surfaces which provide anchors for ligands, ligand fragments or synthesis supports. Other polymers for use in practicing the instant invention include, for example, highly crosslinked polystyrene-divinylbenzene which can be surface derivatized by chloromethylation and subsequent functional group modifications. Nylon surfaces can also be derivatized as they provide an initial surface of hexylamino groups.

Similar to the substrate, the synthesis support can be an organic polymeric material or inorganic material including, but not limited to, alumina, silica, glass quartz, zeolites, TEFLON, *etc*. Depending on the material the synthesis support is composed of, it can be a porous, textured, or solid material, and may be flat or in the form of beads or any other geometric shape. Synthesis supports comprising, for example, functionalized polystyrene, polyacrylamide and controlled pore glass are known in the art. Jones, J., "AMINO ACID AND PEPTIDE SYNTHESIS, "Oxford Science Publications, Oxford, 1992; Narang, S., Ed., "SYNTHESIS AND APPLICATIONS OF DNA AND RNA," Academic Press, Inc., New York, 1987. Additionally, methods appropriate for functionalizing substrates are also appropriate for functionalizing materials intended for use as synthesis supports. Once the substrate or synthesis support is functionalized, a ligand or ligand component is attached thereto.

*C. Ligands*

The method of the present invention is broadly applicable to all ligands which are capable of binding metal ions. The combinatorial variation of the ligand can be achieved through a solid-phase or solution-phase reaction or reactions. Alternatively, a sequence comprising a combination of solid-phase and solution-phase reactions can be used to synthesize an array of metal-binding ligands. Ligand characteristics which can be varied using the methods of the present invention include, but are not limited to, the number of coordination sites on the metal which the ligand can occupy, the charge and electronic influence of the ligand, the geometry imposed on the metal by the ligand, the geometry imposed on the ligand by the metal, *etc.* A plethora of metal-binding ligands are known in the art and other ligands and ligand parameters amenable to variation using the methods of the instant invention will be apparent to those of skill in the art. *See,* for example, Collman, J.P., *et al*. PRINCIPLES AND APPLICATIONS OF ORGANOTRANSITION METAL CHEMISTRY, University Science Books, California, 1987, and references therein.

In a preferred embodiment, the general approach is: 1) synthesis of ligand libraries comprising ligands (*e.g.*, ancillary ligands) capable of stabilizing low coordination number (*e.g.*, three to five) metal alkyl complexes in a variety of geometric configurations (*e.g.*, trigonal, tetrahedral, square planar, square pyramidal, pentagonal and bipyramidal); 2) forming metal complexes of these libraries; 3) optionally reacting libraries of the metal complexes with various activators and/or modifiers; and 4) screening the resulting libraries of metal complexes for various properties and characteristics, for example, olefin polymerization activity, polymerization performance characteristics, *etc.* In an alternative embodiment, the activated metal complexes can be immobilized on a library of supports and/or linkers and then assayed for various properties (*e.g.,* olefin polymerization activity, polymerization performance characteristics). In a particularly preferred embodiment, the metal ion is a transition metal ion.

In a preferred embodiment, the ancillary ligand binds to the metal center and stabilizes it in a low coordination number and does not directly participate in the catalytic chemistry. Although lower numbers of coordination sites are typically preferred, embodiments utilizing larger numbers of coordination sites are not precluded. When the number of coordination sites is three or greater, the metal-ligand compound can have more than one geometry.

In another preferred embodiment, the coordination sites of the ancillary ligand are 1, 2, 3 or 4, and the charge on the ligands are 0, -1, -2, -3 or -4. Other ancillary ligands include those wherein the charge is greater than the number of sites it occupies. Due to the nature of their structure, certain ligands will have more than one possible coordination number and/or more than one possible charge. For example, a ligand's charge and/or coordination number can be different when it is bound to different metals such as an early- or a late-transition metal ion. By way of further example, a ligand which is deprotonated under strongly basic conditions, *e.g.*, n-butyllithium, and contacted with a metal ion can have a different coordination number and/or charge than the same ligand has when reacted with a metal ion under milder conditions.

Examples of ligands, metal-ligand complexes and catalyst families which can be used in the methods of the present invention include, but are not limited to, the following:

(1) One-site, monoanionic ancillary ligands such as $Cp^*MR_2^+NCA^-$ (wherein M represents the metal, R is an alkyl and $NC\bar{A}$ = non-coordinating anion), and mono-Cp systems in combination with methylalumoxane (MAO);
(2) Two-site, dianionic ancillary ligands, which include, for example, bis-Cp systems (referred to in U.S. Patents Numbers 4,752,597 and 5,470,927, the teachings of which are incorporated herein by reference); mono-Cp systems where a heteroatom based ancillary ligand occupies the second site (referred to in U.S. Patent No. 5,064,802, reference); non-Cp, bis-amide systems (referred to in U.S. Patents Numbers 5,318,935 and 5,495,036, the teachings of which are incorporated herein by reference); and bridged bis-amido ligands and Group IV catalysts stabilized by ligands (referred to in *Organometallics* 1995, 14:3154-3156 and *J. Am. Chem. Soc.* 1996, 118:10008-10009,
(3) Two site, monoanionic ancillary ligands including, for example, $Cp(L)CoR^+X^-$ and related systems (referred to in WO 96/13529);
(4) Two site, neutral ancillary ligands, for example, the $Ni^{2+}$ and $Pd^{2+}$ systems. *See,* for example, Johnson, *et al., J. Am. Chem. Soc.* 1995, 117:6414-6415 and WO 96/23010;
(5) Three site, neutral ancillary ligands;
(6) Three site, monoanionic ancillary ligands;
(7) Three site, dianionic ancillary ligands;
(8) Three site, trianionic ancillary ligands;
(9) Four site, neutral, monoanionic and dianionic ancillary ligands; and
(10) Ancillary ligands where the charge is greater than the number of sites it occupies *(see,* for example, U.S. Patent No. 5,504,049).

One application of the present invention is the preparation and screening of large numbers of ligands which are components of organometallic compounds or catalysts. Ligands which are used in practicing the instant invention include as part of their the binding domain of their structural motif groups such as, for example, alkyl, carbene, carbyne, cyanide, olefin, ketone, acetylene, allyl, nitrosyl, diazo, dioxo, disulfur, diseleno, sulfur monoxide, sulfur dioxide, aryl, heterocycles, acyl, carbonyl nitrogen, oxygen, sulfur, phosphine, phosphido and hydride. Additional atoms and groupscomprising a metal-binding domain are known in the art and are useful in practicing the instant invention. *See*, for example, Collman, J.P., *et al.* PRINCIPLES AND APPLICATIONS OF ORGANOTRANSITION METAL CHEMISTRY, University Science Books, California, 1987, and references therein.

As explained above, the libraries of ancillary ligands are made using combinatorial chemistry formats. Within the library, a wide range of ligand characteristics can be varied. Characteristics which are variable across the library include, for example, the ligand's bulk, electronic character, hydrophobicity/hydrophilicity, geometry, chirality, the number of coordination sites on the metal that the ligand occupies, the charge on both the ligand core and its substiruents, and the geometry the ligand imposes on the metal.

Bi-, tri- and tetra-dentate ligand systems which lend themselves to combinatorial synthesis can be constructed, for example, from the following ligand fragments which are listed according to their charge.

The synthesis of said ligand libraries can be carried out combinatorially (parallel or split pool methods) using variations of established synthetic organic methods. Neutral ligand fragments include, but are not limited to, amine ($R_3N$), phosphine ($R_3P$), arsine ($R_3As$), stilbines ($R_3Sb$), ethers ($R_2O$), thioethers ($R_2S$), selenoethers ($R_2Se$), telluroethers ($R_2Te$), ketones ($R_2C=O$), thioketones, imines ($R_2C=NR$), phosphinimine ($R_3P=NR$, $RP=NR$, $R_2C=PR$), pyridines, pyrazoles, imidazoles, furans, oxazoles, oxazolines, thiophenes, thiazoles, isoxazoles, isothiazoles, arenes, nitriles ($R-C\equiv N$), isocyanides ($R-N\equiv C$), acetylenes, olefins.

Monoanionic ligand fragments include, but are not limited to, amides ($NR_2$), phosphide ($PR_2$), silyl ($SiR_3$), arsido ($AsR_2$), $SbR_2$, alkoxy (OR), thiol (SR), selenol (SeR), tellurol (TeR), siloxy ($OSiR_3$), cyclopentadienyl ($C_5R_5$),

boratobenzenes ($C_5BR_6$) pyrazoylborates, carboxylate ($RCO_2^-$), acyl (RCO), amidates, alkyl, aryl, triflates ($F_3CSO_3^-$), thiocarboxylate ($RCS_2^-$), halide, nitrate, and the like.

Dianionic ligand fragments include, but are not limited to, cycloctatetraenyl ($R_8C_8^{2-}$), alkylidenes ($R_2C$), borylides ($C_4BR_5$), imido (RN), phosphido (RP), carbolide, oxide, sulfide, sulphate, carbonate, and the like.

Trianionic ligand fragments include, but are not limited to, alkylidynes (RC≡), $-P^{3-}$ (phosphides), $-A^5$ (arsenides), phosphites.

Multidentate ligands can generally be constructed by bridging ligand fragments through one or more of the pendent R-groups. Specific examples of bidentate neutral ligands [2,0] which may be constructed from the list of ligand fragments set forth above, include, but are not limited to, diimines (derived from two imine fragments), pyridylimines (derived from a pyridine and an imine fragment), diamines (derived from two amine fragments), imineamines (derived from an imine and an amine), iminethioether (derived from an imine and a thioether), imineethers (derived from an imine and an ether), iminephosphines (derived from an imine and a phosphine), bisoxazoline (derived from two oxazolines), diethers (derived from two ethers), bisphosphineimines (derived from two phosphineimines), diphosphines (derived from two phosphines) and phosphineamine (derived from a phosphine and an amine). Other bidentate neutral ligand systems can be similarly constructed from the list of neutral ligand fragments set forth above.

Bidentate monoanionic ligands [2,1] can be constructed by bridging a neutral ligand fragment with a monoanionic ligand fragment from the lists set forth above. Examples include, but are not limited to, salen and other alkoxy imine ligands (derived from imine and alkoxy ligand fragments), amidoamines (derived from an amide and an amine) and amidoether (derived from an amide and an ether). Other bidentate monoamine ligands can be similarly constructed.

Bidentate dianionic ligands [2,2] can be constructed either by combining two monoanionic ligand fragments or a dianionic ligand fragment and a neutral ligand fragment. Specific examples include, but are not limited to, dicyclopentadienyl ligands (derived from two cyclopentadienyl ligand fragments), cyclopentadienyl amido ligands (derived from a cyclopentadienyl and amide ligand fragments), imidothioether ligands (derived from an imido and thioether ligand fragments), imidophosphine ligands (derived from imide and phosphine ligand fragments) and alkoxyamide ligands (derived from alkoxide and amide ligand fragments). Other bidentate diamine ligands can be similarly constructed.

Bidentate ligands having charges greater than -2 can be constructed by combining monoanionic ligand fragments with di- or tri-anionic ligand fragments, or by combining two dianionic ligand fragments. Examples include bisimido ligands (derived from two imide ligands), and carbyne ether ligands (derived from carbyne and ether ligand fragments).

Tridentate neutral ligands [3,0] can be constructed by combining three neutral ligand fragments from the list set forth above. Examples include, but are not limited to, 2,5 diimino pyridyl ligands (derived from two imine and one pyridyl ligand fragments), triimidazoyl phosphines (derived from three imidazole ligand fragments bonded to a central phosphorus atom), tris pyrazoyl alkanes (derived from three pyrazole ligands bonded to a central carbon atom). Other tridentate ligands (*e.g.*, [3,1], [3,2], [3,3]) can be similarly constructed.

In preferred embodiments, the coordination numbers (CN) of the ancillary ligand are independently 1, 2, 3 or 4, and the charge on the ligands are independently 0, -1, -2, -3, or -4. The ancillary ligand or ligand fragment needn't be negatively charged, for example, positively charged ligands, such as, tropylium ($C_7H_7^+$), are also of use in practicing the present invention.

The presently preferred "families" of the coordination numbers and charges are: (i) CN = 2, charge = -2; (ii) CN = 2, charge = -1; (iii) CN = 1, charge = -1; (iv) *CN* = 2, charge neutral; (v) CN = 3, charge = -1; (vi) CN = 1, charge = -2; (vii) CN = 3, charge = -2; (viii) CN = 2, charge = -3; (ix) CN = 3, charge = -3; (x) CN = 3, charge = 0; (xi) CN = 4, charge = 0; (xii) CN = 4, charge = -1; and (xiii) CN 4, charge = -2. In other preferred embodiments, the ancillary ligand has a charge which is greater than the number of coordination *sites* it occupies on a metal ion.

Other preferred embodiments of ligand families that lend themselves to combinatorial synthesis strategies and are depicted herein are: (1) Ancillary ligand on a support wherein, CN = 2, charge = neutral, denoted, [2,0]; (2) Ancillary ligand on a support wherein, CN = 2, charge = -1, denoted, [2,1]; (3) Ancillary ligand with metal complex on a support wherein, CN = 2, charge = -2, denoted, [2,2]; (4) Ancillary ligand off support wherein, CN = 2, charge = -1, denoted, [2,1]; (5) Ancillary ligand off support wherein, CN = 2, charge = -2, denoted, [2,2]; (6) Ancillary ligand off support with a functional linker, wherein, CN = 2, charge = -2, denoted, [2,2]; (7) Ancillary ligand off support with a "functionless" linker, wherein, CN = 2, charge = -2, denoted, [2,2]; and (8) Ancillary ligand off support wherein, CN = 3, charge = -3, denoted, [3,3].

FIG. 3 sets forth another possible route for catalyst precursor synthesis using the combinatorial synthesis approach of the present invention. In general, one can imagine other libraries of ligand cores that can be made using similar combinatorial chemistry formats. Examples include the ligand cores displayed in FIGS. 4A-G.

An important example of this invention is the placement of the acidic functionality on the R-group substituents within a library. The acidic functionality can have profound effects on the catalytic performance of the polymerization catalyst system, including improving the ability of the catalyst to rapidly incorporate polar functional comonomers. Late

transition metal catalysts, such as the Brookhart catalysts, tolerate certain polar functional comonomers; however, the rate of polymerization is greatly reduced due to intramolecular coordination of the polar functionality to the metal center *(see,* FIG. 13A). Proper placement of an acidic moiety on the ancillary ligand would compete with the metal center for coordination of the polar functional group and accelerate the rate of polymerization by creating a vacant coordination site at the metal center as depicted in FIG. 13B. Suitable acidic functionalities include, but are not limited to, trivalent boron groups, trivalent aluminum groups, carboxylic acids and sulfuric acids. The inclusion of acidic functionality on the R-groups of the ancillary ligand system is a general concept applicable to all ligand/metal complexes of this invention.

The ligands aced in the invention, particularly the diimine ligands, can be either symmetric or asymmetric. The symmetric ligands contain two moieties each derived from identical imines. In contrast, the asymmetric ligands will contain two moieties each derived from non-identical imines. A number of synthetic routes can be used to arrive at the asymmetric ligands. For example, one carbonyl group of the diketone can be protected while the other is reacted with an amine. Following deprotection, the second carbonyl group is reacted with a second amine. Another useful reaction pathway consists of adding an approximately stoichiometric amount of a first amine followed by the addition of a similar amount of a second amine. Other routes to both symmetric and asymmetric ligands will be apparent to those of skill in the art.

The R groups pendent from the ancillary ligand's core are chosen for the characteristics which they impart to the organometallic compounds. R groups affect the reactivity and stability of catalysts and organometallic compounds but do not bind directly and irreversibly to the metal center. The size and electronic nature of the R groups can be varied to alter the bulk around the metal center and the electronic properties of the ligand-metal compound. R groups which are chiral can impart chirality to the ligand-metal complex. Further R groups are used to adjust the hydrophobicity/hydrophilicity of the ligand-metal compound.

The R groups on the ligands are independently selected from the group consisting of hydrogen, alkyl, substituted alkyl, aryl, substituted aryl, arylalkyl, substituted arylalkyl, acyl, halogen, amino, cyano, nitro, hydroxy, alkoxy, alkylamino, acylamino, silyl, germyl, stannyl, siloxy, phosphino, aryloxy, aryloxyalkyl, substituted aryloxyalkyl, heteroaryl, substituted heteroaryl, heteroarylalkyl, substituted heteroarylalkyl, heterocycles, substituted heterocycles, heterocyclicalkyl, substituted heterocyclicalkyl S-aryl and S-alkyl mercaptans.

The term "independently selected" is used herein to indicate that the R groups, *e.g.*, $R_1$, $R_2$ and $R_3$, can be identical or different (*e.g.*, $R_1$, $R_2$ and $R_3$ may all be substituted alkyls or $R_1$ and $R_2$ may be a substituted alkyl and $R_3$ may be an aryl, *etc.*). Adjacent R-groups may be coupled to form cyclic structures.

A named R group will generally have the structure which is recognized in the art as corresponding to R groups having that name. For the purposes of illustration, representative R groups as enumerated above are defined herein. These definitions are intended to supplement and illustrate, not preclude, the definitions known to those of skill in the art.

The term "alkyl" is used herein to refer to a branched or unbranched, saturated or unsaturated, monovalent hydrocarbon radical. When the alkyl group has from 1-6 carbon atoms, it is referred to as a "lower alkyl." Suitable alkyl radicals include, for example, methyl, ethyl, n-propyl, i-propyl, 2-propenyl (or allyl), n-butyl, t-butyl, i-butyl (or 2-methylpropyl), *etc.* As used herein, the term encompasses "substituted alkyls."

"Substituted alkyl" refers to alkyl as just described including one or more functional groups such as lower alkyl, aryl, acyl, halogen (*i.e.*, alkylhalos, *e.g.*, $CF_3$), hydroxy, amino, alkoxy, alkylamino, acylamino, acyloxy, aryloxy, aryloxyalkyl, mercapto, both saturated and unsaturated cyclic hydrocarbons, heterocycles and the like. These groups may be attached to any carbon of the alkyl moiety.

The term "aryl" is used herein to refer to an aromatic substituent which may be a single aromatic ring or multiple aromatic rings which are fused together, linked covalently, or linked by a common group such as a methylene or ethylene moiety. The common linking group may also be a carbonyl as in benzophenone. The aromatic ring(s) may include substituted or unsubstituted phenyl, naphthyl, biphenyl, diphenylmethyl and benzophenone among others.

"Substituted aryl" refers to aryl as just described including one or more functional groups such as lower alkyl, acyl, halogen, alkylhalos (*e.g.* $CF_3$), hydroxy, amino, alkoxy, alkylamino, acylamino, acyloxy, mercapto and both saturated and unsaturated cyclic hydrocarbons which are fused to the aromatic ring(s), linked covalently or linked by a common group such as a methylene or ethylene moiety. The linking group may also be a carbonyl such as in cyclohexyl phenyl ketone.

The term "acyl" is used to describe a ketone substituent, -C(O)R, where R is alkyl or substituted alkyl, aryl or substituted aryl as defined herein.

The term "amino" is used herein to refer to the group —NRR', where R and R' may independently be hydrogen, lower alkyl, substituted lower alkyl, aryl, substituted aryl or acyl. When an amino group is bonded to a metal through the nitrogen atom, it is referred to as an "amido" ligand.

The term "alkoxy" is used herein to refer to the —OR group, where R is an alkyl. substituted lower alkyl, aryl, substituted aryl, wherein the substituted alkyl, aryl, and substituted aryl groups are as described herein. Suitable alkoxy radicals include, for example, methoxy, ethoxy, phenoxy, substituted phenoxy, benzyloxy, phenethyloxy, t-butoxy, *etc.*

As used herein, the term "mercapto" defines moieties of the general structure R—S—R' wherein R and R' are the same or different and are alkyl, aryl or heterocyclic as described herein.

The term "saturated cyclic hydrocarbon" denotes groups such as the cyclopropyl, cyclobutyl, cyclopentyl, *etc.,* and substituted analogues of these structures.

The term "unsaturated cyclic hydrocarbon" is used to describe a monovalent nonaromatic group with at least one double bond, such as cyclopentene, cyclohexene, *etc.* and substituted analogues thereof.

The term "heteroaryl" as used herein refers to aromatic rings in which one or more carbon atoms of the aromatic ring(s) are substituted by a heteroatom such as nitrogen, oxygen or sulfur. Heteroaryl refers to structures which may be a single aromatic ring, multiple aromatic ring(s), or one or more aromatic rings coupled to one or more nonaromatic ring(s). In structures having multiple rings, the rings can be fused together, linked covalently, or linked to a common group such as a methylene or ethylene moiety. The common linking group may also be a carbonyl as in phenyl pyridyl ketone. As used herein, rings such as thiophene, pyridine, isoxazole, phthalimide, pyrazole, indole, furan, *etc.* or benzo-fused analogues of these rings are defined by the term "heteroaryl."

"Heteroarylalkyl" defines a subset of "alkyl" wherein the heteroaryl group is attached through an alkyl group as defined herein.

"Substituted heteroaryl" refers to heteroaryl as just described wherein the heteroaryl nucleus is substituted with one or more functional groups such as lower alkyl, acyl, halogen, alkylhalos (*e.g.*, $CF_3$), hydroxy, amino, alkoxy, alkylamino, acylamino, acyloxy, mercapto, *etc.* Thus, substituted analogues of heteroaromatic rings such as thiophene, pyridine, isoxazole, phthalimide, pyrazole, indole, furan, *etc.* or benzo-fused analogues of these rings are defined by the term "substituted heteroaryl."

"Substituted heteroarylalkyl" refers to a subset of "substituted alkyls" as described above in which an alkyl group, as defined herein, links the heteroaryl group to the nucleus.

The term "heterocyclic" is used herein to describe a monovalent saturated or unsaturated nonaromatic group having a single ring or multiple condensed rings from 1-12 carbon atoms and from 1-4 heteroatoms selected from nitrogen, phosphorous, sulfur or oxygen within the ring. Such heterocycles are, for example, tetrahydrofuran, morpholine, piperidine, pyrrolidine, *etc.*

The term "substituted heterocyclic" as used herein describes a subset of "heterocyclics" wherein the heterocycle nucleus is substituted with one or more functional groups such as alkyl, acyl, halogen, alkylhalos (*e.g.*, $CF_3$), hydroxy, amino, alkoxy, alkylamino, acylamino, acyloxy, mercapto, *etc.*

The term "heterocyclicalkyl" defines a subset of "alkyls" wherein an alkyl group, as defined herein, links the heterocyclic group to the nucleus.

The term "substituted heterocyclicalkyl" defines a subset of "heterocyclic alkyl" wherein the heterocyclic nucleus is substituted with one or more functional groups such as lower alkyl, acyl, halogen, alkylhalos (*e.g.*, $CF_3$), hydroxy, amino, alkoxy, alkylamino, acylamino, acyloxy, mercapto, *etc.*

In a preferred embodiment, an array of ligand moieties is synthesized on a substrate. This array is a combinatorial array of spatially separated substrate or synthesis support-bound ligand moieties. Any of the previously discussed ligand types are amenable to this synthesis strategy; however, in a preferred embodiment, the array of ligand moieties comprises neutral bidentate ligands or chelating diimine ligands. Following its synthesis, the array of ligand moieties can be bound to a metal ion (*e.g.*, transition metal ion, main group metal ion, and lanthanide ions).

In another preferred embodiment of this invention, a metal-ligand array or library is prepared such that each member of the ligand array is contacted with a metal ion precursor in the presence of a suitable solvent, wherein the metal-ligand array comprises neutral bidentate ligand moieties and the metal precursor is stabilized by at least one labile neutral Lewis base. Transition metal ion precursors are particularly preferred. In another preferred embodiment, the ligand moieties are diimine ligands and the transition metal precursor is selected from a Group 10 transition metal. In yet another preferred embodiment, the ligands are monoanionic bidentate ligand moieties and the transition metal precursor is stabilized by at least one labile anionic leaving group ligand.

In a preferred embodiment of this invention, ligand libraries described herein can be reacted with main group metal precursors to produce catalyst libraries. Such catalyst libraries are used for a variety of organic transformations requiring Lewis acidic sites, including stereo-selective coupling reactions (where a chiral Lewis acid is required), olefin oligomerization and olefin polymerization. An example of such reactions involves the reaction of trialkylaluminum with [2,2] or [2,1] ligand libraries, wherein each member of the ligand library is in the di- or mono-protic form respectively. This reaction will produce organometallic libraries comprising bidentate ligands bound to mono- or di-alkylaluminum centers. Such libraries can further be modified by reaction with an ion-exchange activator, such as $[PhNMe_2H]^+[B(C_6F_5)_4]^-$, to produce ligand-stabilized cationic aluminum reagents that are capable of acting as catalysts for organic coupling reactions, olefin oligomerization, and olefin polymerization. Examples of such [2,2] and [2,1] reactions are displayed below in Scheme 1:

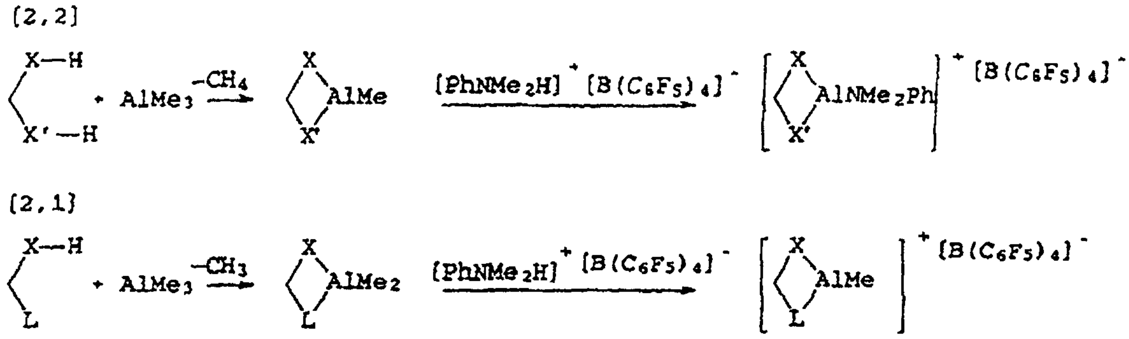


Scheme 1

These compounds are useful as catalysts in, for example, the polymerization of organic monomers. Organic monomers include, but are not limited to, ethylene, propylene, butene, isobutylene, hexene, methylacrylate, methyl vinyl ether, dienes, *etc*. Reactions can be carried out in gas phase or in solution, either on or off the substrate or synthesis support. The ability to assay catalytic properties of a metal-ligand compound on the substrate or synthesis support allows one to make libraries of catalysts bound to a variety of substrates or synthesis supports such as polystyrenes, silica, alumina, *etc.*

In still another preferred embodiment of this invention, a polymer blend is produced such that at least two members of the metal-ligand libraries are contacted with at least one cocatalyst and at least one monomer. In yet another preferred embodiment, olefins, diolefins and acetylenically unsaturated monomers are polymerized such that at least two members of the metal-ligand library are contacted with at least one cocatalyst and with at least one monomer.

Another exemplary library comprises diimine ligands of the general formula set forth below (I). These libraries can be synthesized by solution- or solid-phase methodologies or a combination thereof.

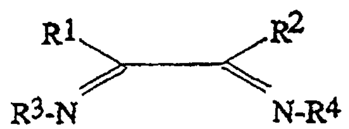

(I)

Substituent groups $R^1$, $R^2$, $R^3$ and $R^4$ can be chosen from a wide variety of organic fragments as discussed above. The role of the R group substituent is to modify the steric, stereochemical, solubility and electronic properties of the ligand system. The R group can be polar or nonpolar, and comprise neutral, acidic or basic functionalities. Suitable R groups include those described above and also organometalloid radicals, such as, for example, silyl or germyl radicals. The molecular weight of the R group substituent will, in general, range from I to 10,000 daltons. Polymeric or oligomeric R groups having molecular weights greater than 10,000 can also be prepared.

The diimine ligand libraries described above can be contacted with a variety of metallic precursors to form organometallic libraries. In one method, the ligand library is contacted with a coordinatively unsaturated metallic precursor or a metallic precursor complexed by a weakly bound leaving group ligand as depicted below in Scheme 2.

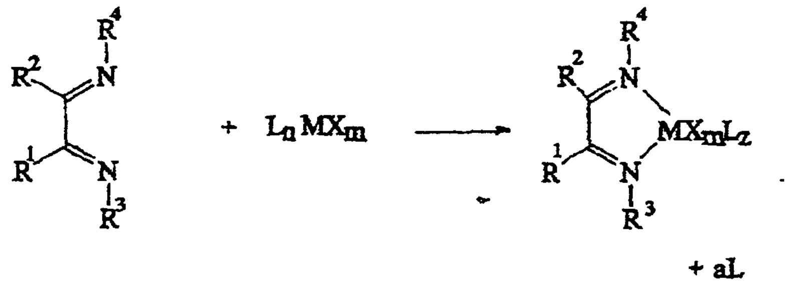

Scheme 2

wherein:

L is a neutral Lewis base, n is an integer greater than or equal to zero;
z is an integer greater than or equal zero;
"a" represents the number of displaced L groups, and a+z = n;
M is a metal;
X is an anionic ligand such as halide, hydrocarbyl or hydride; and
m represents the number of X ligands, and is an integer greater than or equal to zero.

Metal catalysts comprising non-coordinating anions can be synthesized by contacting a low valent metal precursor with the protonated form of a ligand library. For example, diimine stabilized transition metal catalysts can be prepared by a two step procedure comprising: I) reacting the diimine library with the Bronsted acid of a non-coordinating anion to form an iminium salt library, and 2) contacting the iminium salt library with a suitable low valent metallic precursor. An example of such a process is depicted below in Scheme 3.

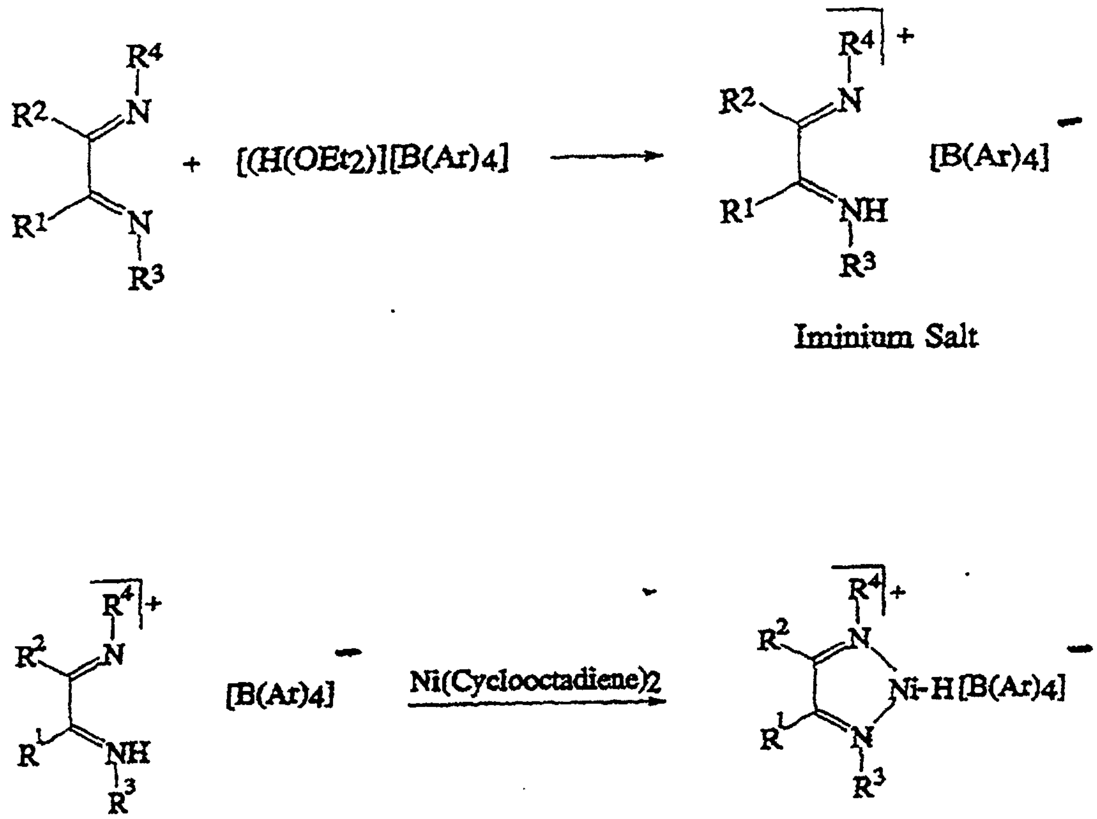


Scheme 3

In certain embodiments, the ligands of the invention are made as pure stereo-, regio- or conformational isomers or, alternatively, the ligands can be a mixture of isomers. Metals suitable for use in the present invention include, but are not limited to, Cr, Mo, W, Pd, Ni, Pt, Ir, Rh, Co, *etc.* Activators suitable for use in the methods of the present invention include, but are not limited to, MAO, $[H(OEt_2)]^+[BAr_4]^-$, *etc.* Solvents suitable for use in the methods of the present invention include, but are not limited to, hexane, $CH_2Cl_2$, toluene, $CHCl_3$, *etc.*

The techniques described above are used to synthesize more than 3, more than 10, more than 20, more than 50, more than 100, more than 200, more than 500, more than 1,000, more than 10,000, more than 100,000 different compounds. Chemical synthesis steps can be conducted with a combination of solid-phase and solution-phase steps on substrates or synthesis supports such as pins, beads, or in wells. The methodology for varying ligands can be performed through either the parallel dispensing of reagents to spatially addressable sires, or by known "split-and-pool" combinatorial methodology.

The methods of the present invention also encompass embodiments wherein the linkage between the ligand and the substrate or synthesis support is varied in length and/or chemical composition.

## *D. Linkers*

Combinatorial libraries can also be used to identify the optimal attachment of an organometallic catalyst to a substrate or solid support (*e.g.*, silica, alumina, polystyrene, *etc.*). In another embodiment of the present invention, linker groups are interposed between the substrate and the ligand and/or the synthesis support and the ligand and/or the substrate and the synthesis support. A wide variety of cleavable and noncleavable linker groups are known to and used by those of skill in the various chemical arts and can be used in the present invention to assemble ligand and organometallic libraries. The length and structure of the linkers are potential variables which can affect catalyst performance and can be an element of library design. Examples of linkers suitable fort use in the methods of the present

invention are described in greater detail in PCT US94/05597 (WO 94/27498).

### E. metals

Once formed, the ligand libraries of the present invention can be contacted with metal ions to produce organometallic compounds. These compounds are typically catalysts The metal ions are in the form of simple salts, mixed salts or organometallic compounds.

When the methods of the invention are used to discover an active catalyst, all classes of metal ions can be used. Broad classes of metal ions for use in practicing the instant invention include, but are not limited to, transition metal ions, lanthanide ions, main group metals, and actinide ions.

### F. Immobilized Reagents

In practicing the instant invention to produce combinatorial solution libraries it is useful to use one or more immobilized reagents-which accomplish different tasks. Thus, encompassed within the present invention is the use of, for example, immobilized bases, acids, proton sponges, oxidants, reductants, acylation and alkylation catalysts and the like. Many such immobilized agents are known to and used by those of skill in the art.

### G. Non-coordinating Anions (NCA)

The presence, in a catalyst, of anions which are non- or weakly-coordinated to the metal center is known in the art to yield enhanced catalyst reactivity compared to those catalysts in which the anion is coordinated to the metal center (*See*, for example, U.S. Patent Nos. 5,198,401; 5,278,119; 5,502,017 and 5,447,895).

Anions which are bulky, highly stable and non-coordinating-to the cationic metal center and which exhibit strong Lewis acidity and high reactivity are of particular utility in practicing the present invention. In preferred embodiments, the non-coordinating anions are boron-containing structures. In more preferred embodiments, the non-coordinating anions are boron tetraaryl structures in which the four aryl structures are substituted with one or more electron withdrawing substituents (*e.g.*, fluorine) and at least one bulky R group to increase the solubility and the thermal stability of the organometallic or catalyst system. Representative R groups are as discussed above in the context of ligands. In preferred embodiments, the R groups are $C_1$ to $C_{20}$ alkyl or $C_1$ to $C_{20}$ alkyl-substituted group 14-metalloids (*e.g.*, silicon, germanium or tin). Other non-coordinating ions of use in practicing the present invention will be apparent to those of skill in the art.

### H. Diimine Catalyst Library Design and Synthesis

Having broadly set forth the principles and methods for the combinatorial synthesis of arrays of ligands and organometallic compounds, the design and synthetic methodologies for creating solution and solid phase libraries of diimine ligands and organometallic complexes will now be described.

FIG. 14 illustrates the design of a 96-well ligand and ligand-metal solid-phase library using Merrifield resin and the chemistry described in the Examples section. The library is composed of 48 diimine ligands derived from a Merrifield Resin-bound diketone precursor and 48 substituted anilines. The Merrifield Resin-bound diketone precursor is added to each of the 96-wells in the microtiter plate. An excess of each aniline is added to two of the wells within the microtiter plate, and the reactions are carried out and worked up using the protocols described in the Examples section. Ni and Pd metal ion precursors are combined with each resulting resin-bound diimine to produce the desired catalyst precursor. The catalyst precursors can be activated using appropriate activators and screened for activity and performance using the techniques described in the present invention.

Solution-phase diimine ligand and catalyst libraries can also be prepared using the methods of this invention. Solution-phase combinatorial chemistry is greatly facilitated by the use of solid-phase reagents which either catalyze reactions, deliver reagents or adsorb byproducts and/or unreacted starting materials. The general approach as it relates to the parallel synthesis of diimine ligands and the corresponding metallic complexes is displayed in FIG. 15 and described in Section 1.1 of the Examples section. Variation of the ligand backbone substitution (*i.e.*, $R_1$ and $R_2$) can be accomplished by utilizing a large variety of commercially-available 1,2-diketones, examples of which are illustrated in FIG. 16. The solution-phase imine condensation can be catalyzed by, for example, a variety of solid-phase immobilized Lewis-acid catalysts/dehydrants (FIG. 17). Examples include:

[PS]-$CH_2$-O-$TiCl_3$;
[PS]-$CH_2$-O-$AlCl_2$;
[PS]-$SO_2$-O-$TiCl_3$;

[PS]-$SO_2$-O-$AlCl_2$;
[PS-PEG]-$TiCl_4$;
[PS-PEG]-$AlCl_3$;
[$SiO_2$]-$(O)_{4-n}$-$TiCl_n$; and
[$SiO_2$]-$(O)_{3-n}AlCl_n$.

In one embodiment, these catalysts are employed in conjunction with a solid-phase proton scavenging reagent such as [PS]-$CH_2$-piperidine.

Selective scavenging of excess aniline in the presence of diimines can be accomplished with a variety of solid-phase reagents. Examples include:

[PS]-C(O)Cl+[PS]-$CH_2$-piperidine;
[PS]-$SO_2$Cl+[PS]-$CH_2$-piperidine;
[PS]-NCO; and
[PS]-NCS.

## *III. <u>SCREENING OF COMBINATORIAL LIBRARIES</u>*

The success of combinatorial chemistry depends upon the ability to first synthesize collections (libraries) of molecular compounds (members) where each member has a unique elemental composition, and second, to rapidly characterize each member to identify compounds having specific, desired properties. Accordingly, in preferred embodiment, the array of materials is synthesized on a single substrate. By synthesizing the array of materials on a single substrate, screening the array for materials having useful properties is more easily carried out.

As such, following the synthesis of the library, the library of compounds is screened for a useful property. Properties which can be screened for include, for example, electrical, thermal mechanical, morphological, optical, magnetic, chemical, *etc.* In a preferred embodiment, the useful property is a property relating to a polymerization reaction. In another preferred embodiment, the useful property is a mechanical property, an optical property, a physical property or a morphological property. In certain preferred embodiments, the useful property is a chemical property such as, for example, the lifetime of the metal-ligand compounds, the stability of these compounds under specific reaction conditions, the selectivity of the library compounds for a particular reaction, the conversion efficiency of the library compounds in a particular reaction or the activity of the library compounds in a particular reaction. Other properties which can be screened for are set forth in Table I, *infra*. Any material found to possess a useful property can subsequently be prepared on a large-scale.In the interest of simplicity, the analytical methods of the present invention are generally exemplified by reference to their use with libraries of catalytic compounds. Such use is not intended to limit the scope of the analytical methods which are also applicable to the analysis of libraries of organometallic compounds.

TABLE I.

| ***EXAMPLES OF PROPERTIES WHICH CAN BE SCREENED FOR*** | |
|---|---|
| ***ELECTRICAL:*** | SUPERCONDUCTIVITY |
| | CRITICAL CURRENT |
| | CRITICAL MAGNETIC FIELD |
| | CONDUCTIVITY |
| | RESISTIVITY FOR RESISTIVE FILMS |
| | DIELECTRIC CONSTANT |
| | DIELECTRIC STRENGTH |
| | DIELECTRIC LOSS |
| | STABILITY UNDER BIAS |
| | POLARIZATION |
| | PERMITTIVITY |
| | PIEZOELECTRICITY |
| | ELECTROMIGRATION |
| ***THERMAL:*** | COEFFICIENT OF EXPANSION |
| | THERMAL CONDUCTIVITY |
| | TEMPERATURE VARIATION |
| | VOLATILITY & VAPOR PRESSURE |

TABLE I. (continued)

| EXAMPLES OF PROPERTIES WHICH CAN BE SCREENED FOR | |
|---|---|
| ***MECHANICAL:*** | STRESS |
| | ANISOTROPY |
| | ADHESION |
| | HARDNESS |
| | DENSITY |
| | DUCTILITY |
| | ELASTICITY |
| | POROSITY |
| ***MORPHOLOGY:*** | CRYSTALLINE OR AMORPHOUS |
| | MICROSTRUCTURE |
| | SURFACE TOPOGRAPHY |
| | CRYSTALLITE ORIENTATION |
| ***OPTICAL:*** | REFRACTIVE INDEX |
| | ABSORPTION |
| | BIREFRINGENCE |
| | SPECTRAL CHARACTERISTICS |
| | DISPERSION |
| | FREQUENCY MODULATION |
| | EMISSION |
| ***MAGNETIC:*** | SATURATION FLUX DENSITY |
| | MAGNETORESISTANCE |
| | MAGNETORESTRICTION |
| | COERCIVE FORCE |
| ***MAGNETIC:*** | PERMEABILITY |
| ***CHEMICAL:*** | COMPOSITION |
| | COMPLEXATION |
| | ACIDITY-BASICITY |
| | CATALYSIS |
| | IMPURITIES |
| | REACTIVITY WITH SUBSTRATE |
| | CORROSION & EROSION RESISTANCE |

The properties listed in Table I can be screened for using a wide range of methods and devices known to and used by those of skill in the art. Such methods include, but are not limited to, from the group consisting of scanned mass spectrometry, chromatography, ultraviolet imaging, visible imaging, infrared imaging, electromagnetic imaging, ultraviolet spectroscopy, visible spectroscopy, infrared spectroscopy, electromagnetic spectroscopy and acoustical methods. In addition, scanning systems which can be used to screen for the properties set forth in Table I include, but are not limited to, the following: scanning Raman spectroscopy; scanning NMR spectroscopy; scanning probe spectroscopy including, for example, surface potentialometry, tunnelling current, atomic force, acoustic microscopy, shearing-stress microscopy, ultra fast photo excitation, electrostatic force microscope, tunneling induced photo emission microscope, magnetic force microscope, microwave field-induced surface harmonic generation microscope, nonlinear alternating-current tunnelling microscopy, near-field scanning optical microscopy, inelastic electron tunneling spectrometer, *etc.*; optical microscopy in different wavelength; scanning optical ellipsometry (for measuring dielectric constant and multilayer film thickness); scanning Eddy-current microscope; electron (diffraction) microscope, *etc.*

In a presently preferred embodiment, a scanning detection system is employed. In one embodiment, the substrate having an array of materials thereon is fixed and the detector has X-Y motion. In this embodiment, the substrate is placed inside a sealed chamber, close to the detector. The detector (*e.g.*, an RF Resonator, a SQUID detector, *etc.*) is attached to a rigid rod with low thermal conductivity coupled to an X-Y positioning table at room temperature with a scanning range of up to 1 inch (2.54cm) and a 2 μm spatial resolution. The position of the detector is controlled using stepping motors (or servomotors) connected to a computer-controlled positioner. In another embodiment, the detector is fixed and the substrate having an array of materials thereon has R-θ motion. In this embodiment, the substrate is placed on a rotating stage (e.g., a spur gear) driven by a gear rack which is coupled to a micrometer and a stepping motor. In each of these embodiments, the temperature of the detector and the substrate can be lowered by, for example, helium exchange gas . This scanning system can be operated at temperatures ranging from 600°K down to 4.2°K (when immersed in liquid helium).

The use of combinatorial chemistry for discovering and optimizing new catalysts, is enhanced by the use of high throughput methods for measuring such properties as activity (*i.e.*, turnover, selectivity in converting reactants into desired products, and stability during operation under a wide variety of substrate concentrations and reaction conditions). Spatially selective characterization methods include those capable of: (i) Identification and characterization of gas phase products and volatile components of the condensed phase products; (ii) Identification and characterization of condensed phase products; and (iii) Measurement of physical properties of the catalyst elements on the library.

The high throughput (0.1 to greater than 1000 library elements per second), position sensitive (resolution 0.01 - 10 mm), methods described herein, include several fundamentally different approaches including scanned mass spectrometry and chromatography, ultraviolet, visible, infrared, and other electromagnetic imaging and spectroscopy, and acoustic methods. Methods for measuring catalytic activity and specificity may involve, for example, direct measurement of product concentrations or indirect measurement of the heat of reaction. Parallel screening methods have the common approach of integrating position sensitive photon detectors into the measurement system while the serial methods rely on controlled scanning of the library or detector/source relative to one another.

The activity of each of the compounds within an array is measured using one or more of several optical, thermal, or mass spectral techniques. In one implementation, the fact that the exothermic or endothermic nature of a reaction will translate into temperature differences localized to the area adjacent to a compound, is used to identify in parallel the active sites within an array of compounds by monitoring that change in temperature with infrared imaging techniques. The same technique can also be used to quantify in parallel the stability of each catalyst with an array of compounds. By measuring the decay of activity over time for each site within the array, the lifetime of the catalysts can be quantified.

Selectivity measurements within a combinatorial array of catalysts are measured using techniques such as ultraviolet/visible/infrared imaging and/or spectroscopy, chromatography, or mass spectrometry. One of the most general methods of the present invention is the use of a scanning mass spectrometry to locally measure the relative concentrations of reactants and products in close proximity to a catalyst compound on the library. Such a system can be enhanced using laser desorption techniques which vaporize liquid, bound reactants and/or products in spatially localized format and facilitate the intake of chemicals in the scanning mass spectrometry measurement system.

Optical methods are used for activity and selectivity characterization. Infrared spectroscopy or spectroscopic imaging is used to monitor the relative concentration of end groups, and saturated backbone monomer units along a polymer chain on a polymer. In this manner, the average molecular weight and average composition of a copolymer in a library element can be estimated. UV/visible spectroscopic techniques are used, for example, in the analysis of reactions involving compounds with a suitable chromophore (e.g., aromatic and unsaturated compounds). Another example is the partial oxidation of benzene into phenol which leads to different electronic absorption spectra for the product. In this case, benzene provides a distinct spectroscopic fingerprint from phenol, and, thus, the relative amounts of each compound can be measured using UV/visible spectroscopy.

Rapid chromatographic analysis of reactants and products, either as separate entities or mixtures, are used to assay in parallel product conversion, product identity, isomeric purity, *etc*. Also, flow rates through vertical tubes of product polymer solutions are used to gauge the viscosity and hence the molecular weight of the polymer when polymerization reactions are effected. In addition, mass spectroscopy. can be used for gas phase characterization.

In addition to the foregoing, those of skill in the art will readily appreciate that numerous other methods and devices can be used to screen the libraries of compounds for useful properties. Such mehtods and devices are within the scope of the present invention.

The present invention is directed to the synthesis of supported and unsupported ligand molecules and their subsequent conversion to organometallic and catalyst compounds. In the examples which follow, the synthesis of two representative classes of ligands, diimines and pyridylimines, using the methods of the invention are detailed. Representative examples using both solution- and solid-phase methodologies are provided. The use of these two broad ligand classes to further describe the invention is intended to be exemplary and is not intended to define or limit the scope of the invention or of the ligands, organometallic compounds or catalysts which can be assembled using the methods of the instant invention.

*IV. EXAMPLES*

The following examples illustrate a variety of reactions that may be used in the present invention. Example 1 illustrates the solution-phase synthesis of bis-imine ligands. Example 2 illustrates the concept of solid phase combinatorial synthesis of diimine ligands. Example 3 illustrates the solid phase synthesis of diimine ligands, wherein the

diimine is synthesized on the support. Example 4 illustrates the utility of the catalysts polymerizing olefins. Both the supported and unsupported catalysts were assayed for their ability to polymerize ethylene to poly(ethylene). The polymerization of higher olefins such as hexene was also examined. Example 5 details the preparation of a pyridyl imine ligand and its nickel complex. The catalyst was used to polymerize both hexene and ethylene. Example 6 illustrates reaction schemes which can be used to prepare a variety of [2,0], [2,1], and [2,2] ligand libraries. Such [2,0], [2,1], and [2,2] ligand libraries can be prepared using solution or solid phase methodologies from a salen-based scaffold.

**EXAMPLE I**

Example 1 details the solution-phase synthesis of bis-imine ligand components of a combinatorial library of ligands. General strategies were developed for aryl bis-imines with both electron-donating and electron-withdrawing groups on the aryl moiety.

1.1 Synthesis of $[(2.4.6\text{-}Me_3Ph)_2DABMe_2]NiBr_2$ Through Solution-Phase Methodology

a. Synthesis of Resin-Bound Lewis-Acid Catalyst $PS\text{-}CH_2\text{-}O\text{-}TiCl_3$

To 10 g hydroxymethylpolystyrene (1.12 mmol OH/g resin) swollen in 100 mix of anhy. $CH_2Cl_2$ was added 4.24 g (2.24 mmol) $TiCl_4$, and this suspension was heated to reflux under $N_2$ with gentle stirring for 1 h. The resin was filtered under $N_2$, washed with 5 x 50 mL anhy. $CH_2Cl_2$ and then dried under high vacuum for 24 h. Chloride analysis (9.98%) provided a loading of 0.94 mmol $TiCl_3$/g resin.

b. Synthesis of Aniline Scavenging Reagent $PS\text{-}SO_2Cl$

To 10 g of $PS\text{-}SO_2\text{-}OH$ (Amberlyst 15, washed with MeOH and dried in vacuo; ca. 5 mmol OH/g resin) in 50 mL of anhy. $CH_2Cl_2$ was added 3 g (25 mmol) of $SOCl_2$. This mixture was heated at reflux under $N_2$ for 18 h. The resin was filtered under $N_2$, washed with 5 x 50 mL of anhy. $CH_2Cl_2$, then dried under high vacuum for 24 h. Chloride analysis (16.05%) provided a loading of 4.53 mmol $SO_2Cl$/g resin.

c. Ligand Synthesis

To a suspension of 250 mg (0.24 mmol) of $PS\text{-}CH_2\text{-}OTiCl_3$ and 93 mg (0.25 mmol) $PS\text{-}CH_2$-piperidine in 5 mL of anhy. $CH_2Cl_2$ was added 676 mg (0.5 mmol) of 2,4,6-trimethylaniline followed by 8.6 mg (0.1 mmol) 2,3-butanedione. This mixture was shaken at RT for 24 h. then filtered and washed with 2 x 1 mL anhy. $CH_2Cl_2$. GC analysis showed 2,4,6-trimethylaniline and the product $(2,4,6\text{-}Me_3Ph)_2DABMe_2$ in an approximately 3:1 ratio.

d. Excess Aniline Scavenging

To the 3:1 mixture of 2,4,6-trimethylaniline and $(2,4,6\text{-}Me_3Ph)_2DABMe_2$ was added 111 mg of $PS\text{-}SO_2Cl$ and 185 mg of $PS\text{-}CH_2$-piperidine and this mixture shaken at RT for 12 h. The resin was filtered and washed with 2 x 0.5 mL $CH_2Cl_2$. The filtrate was evaporated to provide 285 mg (89%) of $(2,4,6\text{-}Me_3Ph)_2DABMe_2$ as yellow crystals.

e. Synthesis of $[(2,4,6\text{-}Me_3Ph)_2DABMe_2]NiBr_2$ Complex

A suspension of 285 mg (0.89 mmol) of $(2,4,6\text{-}Me_3Ph)_2DABMe_2$ and 274 mg (0.89 mmol) $(DME)NiBr_2$ in 5 mL $CH_2Cl_2$ was shaken in a sonication bath at RT for 24 h. The resultant solid was collected by filtration and washed with 3 x 1 mL $CH_2Cl_2$ to provide 456 mg (95%) $[(2,4,6\text{-}Me_3Ph)_2DABMe_2]NiBr_2$ as a red powder.

1.2 Preparation of (2,4,6-$Me_3Ph)_2DAB(Me)$ Et($C_2H_4$)Ph Nickel (II) Dibromide

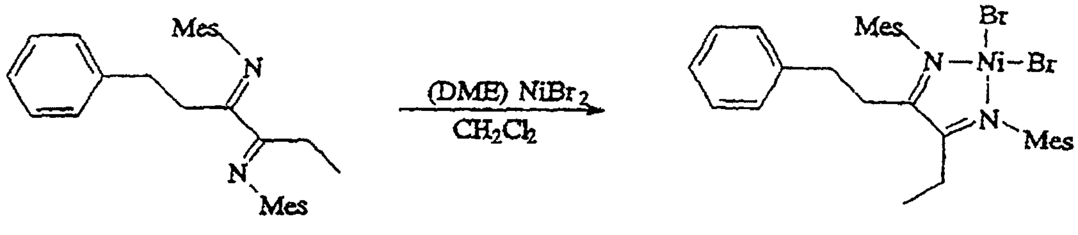


Scheme 4

(2,4,6-$Me_3Ph)_2DAB(Et)C_2H_4Ph$ (0.50 g, 1.17 mmol) and (DME)$NiBr_2$ (0.36 g, 1.17 mmol) were dissolved in 8 ml dry $CH_2Cl_2$ under nitrogen and stirred at room temperature for 8 hr. The resulting reddish-brown solution was concentrated and the remaining residue was recrystallized from $CH_2Cl_2$/hexane to afford 0.40 g of (2,4,6-$Me_3Ph)_2DABEt$ ($C_2H_4$)Ph nickel (II) dibromide as reddish-brown crystals in 53% yield. Anal. Cald for $C_{30}H_{36}N_2NiBr_2$: C 55.88; H 5.62; N 4.34. Found: C 55.08; H 5.55; N 4.21.

1.3 Solution-Phase Synthesis (Spectroscopic model compounds)

Compounds with all of the structural features of the immobilized compounds are prepared in tandem with the immobilized compounds. The model compounds allowed the proper spectroscopic parameters to be determined for the immobilized analogues. Additionally, these compounds have a catalytic activity which is similar to that exhibited by the analogous immobilized metal-ligand compounds.

1.3(a) Alkylation of (2,4,6-$Me_3Ph)_2DAB(Me)Et$ with Benzyl Bromide

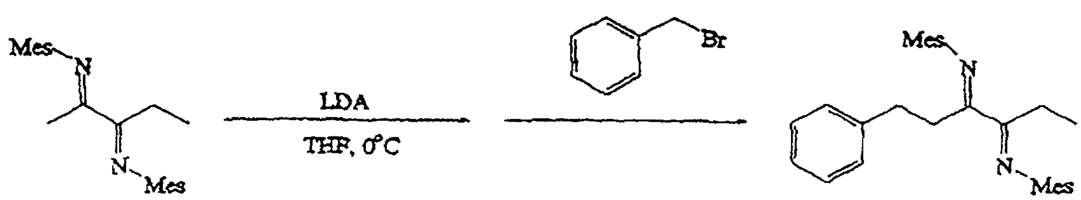


Scheme 5

To a cooled solution (0°C) of (2,4,6-$Me_3Ph)_2DAB(Me)Et$ (2.00 g, 5.99 mmol) in IS ml dry THF under nitrogen was added LDA (4.40 ml, 6.59 mmol, 1.5 M in THF). After stirring at 0°C for 2 hr, benzyl bromide (0.86 ml, 7.19 mmol) was added and the resulting solution was stirred 3 hr at 0°C and 10 hr at room temperature. The reaction mixture was concentrated on a rotovap and the remaining oily residue was taken up in 50 ml $Et_2O$ and washed with $H_2O$ (2 x 50 ml). The $Et_2O$ layer was dried over $MgSO_4$, filtered and concentrated. The crude material was passed through a plug of silica gel with $CH_2Cl_2$ and concentrated once more to afford 2.54 g of the desired product in 95% yield as a yellow oil. $^1H$ NMR 300 MHz, ($CDCl_3$) $\delta$ 7.23-7.28 (m, 3H), 7.19 (d, 2H, J = 6.9 Hz), 6.98 (s, 2H), 6.94 (s, 2H), 2.87 (br s, 4H), 2.64 (q, 2H, J = 7.6 Hz), 2.37 (s, 3H), 2.35 (s, 3H), 2.14 (s, 6H), 2.06 (s, 6H), 1.12 (t, 3H, J = 7.6 Hz); $^{13}C$ NMR 75 MHz, ($CDCl_3$) $\delta$ 171.97, 169.97, 145.85, 145.56, 141.15, 132.28, 132.20, 128.66, 128.28, 128.15, 125.97, 124.37, 32.76, 31.28, 22.24, 20.67, 18.22, 18.06, 11.24; IR (C = N) @ 1635 $cm^{-1}$.

1.3(b) Hydrolysis of $(2,4,6\text{-}Me_3Ph)_2DAB(Et)C_2H_4Ph$

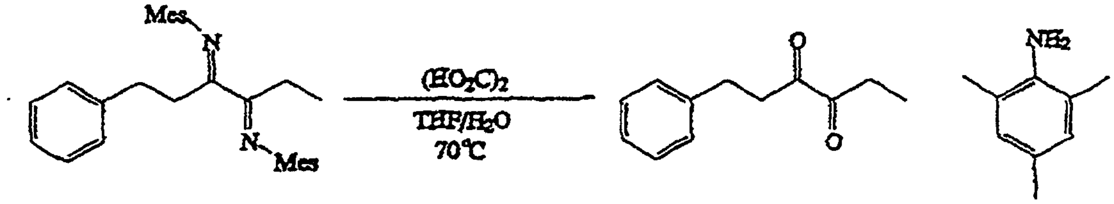


Scheme 6

A stirring solution of $(2,4,6\text{-}Me_3Ph)_2DAB(Et)C_2H_4Ph$ (0.20 g, 0.47 mmol) and oxalic acid (0.20 g, 2.35 mmol) in 10 ml $THF/H_2O$ (5:1 v/v) was heated to 70°C for 8 hr. After cooling to room temperature and diluting with 30 ml $Et_2O$, the organic layer was washed with $H_2O$ (2 x 10 ml), dried over $MgSO_4$, filtered and concentrated. GC/MS analysis revealed I-phenyl-3,4-hexanedione and 2,4,6-trimethylaniline as the only detectable species in the crude reaction mixture. Pure 1-phenyl-3,4-hexanedione (89 mg) was obtained by passing the crude mixture through a plug of silica gel in > 95 % yield as a colorless oil. 'H NMR 300 MHz, ($CDCl_3$) δ 7.20-7.31 (m, 5H), 3.14 (t, 2H, J = 7.6 Hz), 3.01 (t, 2H, J = 7.4 Hz), 2.75 (q, 2H, J = 6.7 Hz), 1.07 (t, 3H, J = 6.6 Hz); $^{13}C$ NMR 75 MHz, ($CDCl_3$) δ 199.44, 198.25, 140.19, 128.20, 128.06, 125.94, 37.34, 29.10, 28.67, 6.53; IR (C=O) @ 1712 $cm^{-1}$.

1.3(c) Alkylation of $(2,4,6\text{-}Me_3Phe)_2DAB(Me)Et$ with 1-(Bromoethyloxy)-2-Methoxyethane

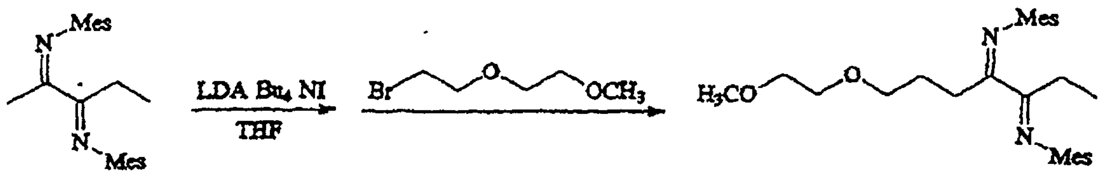


Scheme 7

To a cooled solution (0°C) of $(2,4,6Me_3Ph)_2DAB(Me)Et$ (0.50 g, 1.48 mmol) in 15 ml dry THF under nitrogen was added LDA (1.09 ml, 1.65 mmol, 1.5 M in THF). After stirring at 0°C for 4 hr, 1-(bromoethyloxy)-2-methoxyethane (0.24 ml g, .1.79 mmol) was added with $Bu_4NI$ (0.27 g. 0.75 mmol) and the reaction mixture was warmed to 50°C and stirred for 10 hr. After cooling to room temperature, the reaction mixture was diluted with 30 ml $Et_2O$ and washed with $H_2O$ (3 x 15 ml), dried over $MgSO_4$, filtered and concentrated on a rotovap. The crude product was chromatographed with 20% $Et_2O$/hexane ($R_f$ = 0.45) to afford 0.93 g of the desired product as a yellow oil in 45% yield. $^1H$ NMR 300 MHz, ($CDCl_3$) δ 6.81 (s, 2H), 3.33 (s, 4H), 3.25-3.32 (m, 2H), 3.23 (s, 3H), 2.41-2.47 (m, 4H), 2.20 (s, 6H), 1.94 (s, 12H), 1.54-1.69 (m, 2H), 0.94 (t, 3H, J = 7.5 Hz). $^{13}C$ NMR 75 MHz ($CDCl_3$) δ 171.97, 170.35, 145.65, 145.52, 132.15, 128.56, 128.53, 124.36, 71.72, 70.95, 69.48, 58.89, 27.33, 25.51, 22.19, 20.61, 18.06, 11.11.

1.3(d) Preparation of (2,4,6-$Me_3Ph)_2$DAB(1-Methoxyethoxypropyl)Et Nickel (II) Dibromide

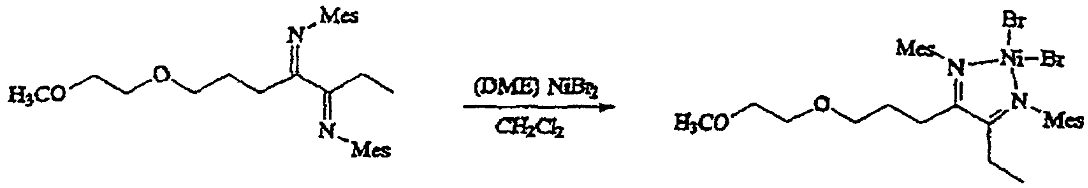


Scheme 8

(2,4,6-$Me_3Ph)_2$DAB(1-methoxyethyloxypropyl) ethane (0.29 g, 0.67 mmol) and (DME) $NiBr_2$ (0.21 g, 0.67 mmol) were taken up in 6 ml dry $CH_2Cl_2$ under nitrogen and stirred at room temperature for 24 hours. The reaction mixture was filtered through celite and concentrated to afford crude (2,4,6-$Me_3Ph)_2$DAB(1-methoxyethoxypropyl)ethyl nickel (II) dibromide which was purified through recrystallization from $CH_2Cl_2$/hexane to afford 0.35 g of pure product as a reddish-brown solid in 80% yield. Anal. Cald for $C_{28}H_{40}N_2O_2NiBr_2$: C 51.33; H 6.15; N 4.27. Found: C 52.01; H6.26; N 3.91.

1.3(e) Preparation of (2.4.6-$Me_3Ph)_2$DAB(Et)$C_2H_4$ Ph Palladium (II) (Me)Cl

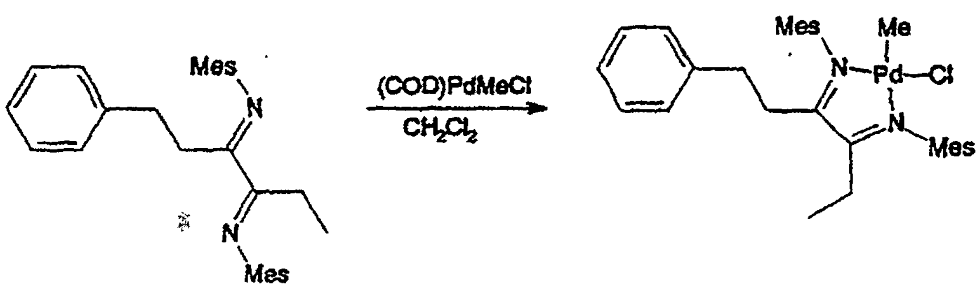


Scheme 9

(2,4,6-$Me_3Ph)_2$DAB(Et)$C_2H_4$Ph (0.23 g, 0.65 mmol) and (COD)PdMeCl (0.17 g, 0.65 mmol) were dissolved in 8 ml dry $CH_2Cl_2$ under nitrogen and stirred at room temperature for 8 hr. The resulting orange-red solution was concentrated and the remaining residue was recrystallized from $CH_2Cl_2$/hexane to afford 0.30 g of (2,4,6-$Me_3Ph)_2$DAB (Et)$C_2H_4$ palladium (II) (Me)Cl as a orange solid in 80% yield. Anal. Cald for $C_{31}H_{39}N_2PdCl$: C 64.02; H 6.76; N 4.81. Found: C 63.47; H 6.70; N 4.62.

1.4 Solution-Phase Combinatorial Synthesis

Catalytic bis-imine formation generally works well for aniline derivatives containing electron donating groups (X = EDG). However, anilines containing electron withdrawing groups (X = EWG) are much less nucleophilic and bis-imine formation is not observed under standard conditions (Entry 1, Table 2). Therefore, conditions were sought to initiate bis-imine formation with a representative electron deficient aniline derivative (X = 3,5-$CF_3$). The general scheme is displayed in Scheme 10. These results are summarized in Table 2.

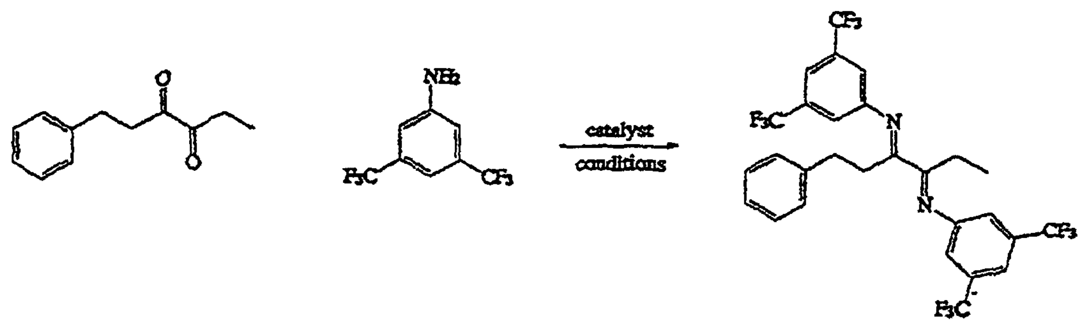


A B C

Scheme 10

TABLE 2

| Entry | A Equiv. | B Equiv. | Catalyst (Equiv.) | Conditions | C Yield (GC/MS) |
|---|---|---|---|---|---|
| 1 | 1 | 20 | $HCO_2H$ (10) | $CH_2Cl_2$/MeOH RT, 12 hr. | 0% |
| 2 | 1 | 20 | $H_2SO_4$ (10) | $CH_2Cl_2$/MeOH RT, 12 hr. | 20% |
| 3 | 1 | 20 | $(CO_2H)_2$ (10) | $CH_2Cl_2$/MeOH RT, 12 hr. | 65% |
| 4 | 1 | 20 | $(CO_2H)_2$(10) | $Si(OEt)_4$ RT, 12 hr. | 60% |
| 5 | 1 | 13 | $TiCl_4$ (2) | $CH_2Cl_2$ RT, 12 br. | 80% |
| 6 | 1 | 15 | $TiCl_4$ (5) | $CH_2Cl_2$ RT, 12 hr. | 95% |

**EXAMPLE 2**

Example 2 illustrates the concept of solid phase combinatorial synthesis of diimine ligands. Through the approach outlined below, alkylation of a diimine ligand with I % cross-linked (bromomethyl)polystyrene is carried out. The supported diimine is hydrolyzed to give the corresponding resin bound diketone which serves as starting material for synthesizing a broad range of chemically diverse bis-imine ligands. The analogous solution-phase reactions are performed in parallel and are fully characterized spectroscopically and serve to provide spectroscopic handles ($^1H$ and $^{13}C$ NMR, FTIR, Raman IR) to help facilitate the characterization of the desired resin bound compounds.

2.1 Solid Phase Combinatorial Strategy

This approach involves the parallel synthesis of organometallic libraries immobilized on a polymer support. Advantages to this approach include exposing a large excess of the reagents to immobilized substrates and effectively driving reactions to completion. Excess reagents and/or side products are then removed from the desired immobilized substrate by filtration followed by extensive washings.

2.2 Preparation of (Bromomethyl)Polystyrene

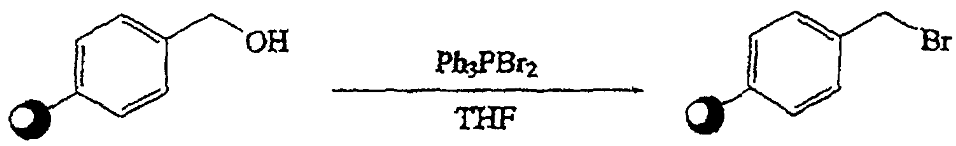


Scheme 11

(Hydroxymethyl)polystyrene (2.50 g, 2.84 mmol, 0.80 mmol/g) and triphenylphosphinedibromide (2.40 g, 5.68 mmol) were combined under nitrogen and 20 ml of dry THF was added. After stirring at room temperature for 24 hr, the resin was filtered and washed extensively with THF (3 x 20 ml), DMF (3 x 20 ml), $CH_2Cl_2$ (3 x 20 ml), and dried under high vacuum to afford 2.75 g of (bromomethyl)polystyrene as a beige resin. A loading capacity of 0.58 mmol/g was calculated based on bromide analysis (4.65 % Br).

2.3 Alkylation of (2,4,6-$Me_3Ph)_2$DAB(Me)Et with (Bromomethyl)Polystyrene

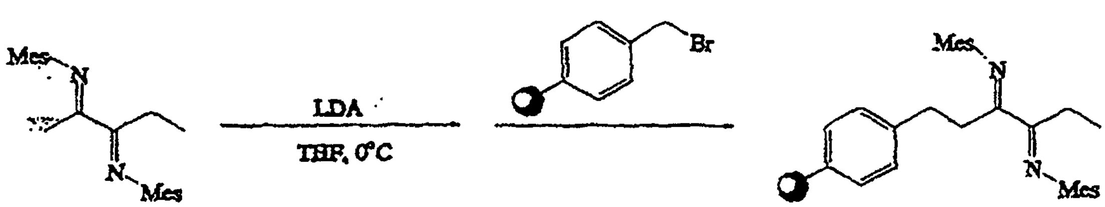


Scheme 12

To a cooled solution (0°C) of (2,4,6-$Me_3Ph)_2$DAB(Me)Et (0.50 g, 1.49 mmol) in 15 ml dry THF under nitrogen was added LDA (1.09 ml, 1.49 mmol, 1.5 M in THF). After stirring at 0°C for 2 hr, (bromomethyl)polystyrene (1.06 g, 0.75 mmol) was added and the resulting suspension was stirred for 3 hr at 0°C and 10 hr at room temperature. The resin was filtered, washed with THF (2 x 10 ml), $H_2O$ (2 x 20 ml), $CH_2Cl_2$ (2 x 20 ml), and dried under high vacuum to afford 0.60 g of the desired bright yellow resin. The loading capacity of this resin was calculated to be 0.38 mmol/g based on nitrogen analysis (1.07 % N). A strong absorbance at 1635 $cm^{-1}$ (C=N) is observed by single bead FTIR.

2.4 Hydrolysis of (2,4,6-$Me_3Ph)_2DAB(Me)Et$ (Methyl)Polystyrene

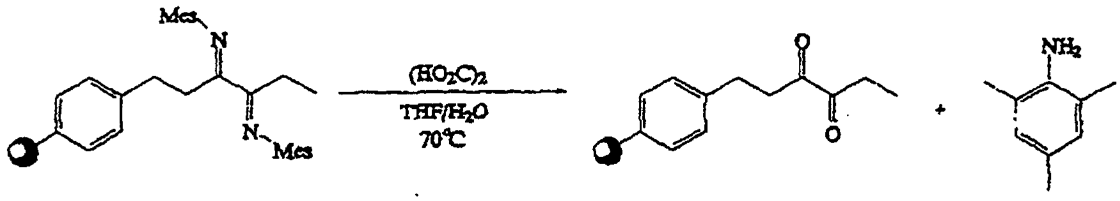


Scheme 13

A stirring suspension of (2,4,6-$Me_3Ph)_2DAB(Me)Et$ (methyl)polystyrene (1.0 g, 0.38 mmol) and oxalic acid (340 mg, 3.80 mmol) in 17 ml THF/$H_2O$ (5:1 v/v) was heated to 70°C for 12 hr. After cooling to room temperature and diluting with 30 ml $Et_2O$, the resin was filtered and the filtrate was washed with $H_2O$ (2 x 10 ml), dried over $MgSO_4$, filtered and concentrated to give 24 mg of 2,4,6-trimethylaniline in 98 % yield with was >99 % pure by GC/MS analysis and $^1H$ NMR. The beads were dried under high vacuum to give 850 mg of (2,3-pentanedione)(methyl)polystyrene. A strong absorbance at 1712 $cm^{-1}$ (C=O) is observed by single bead FTIR.

2.5 Alkylation of (2,4,6-$Me_3Ph)_2DAB(Me)Et$ with (Bromo)PEG Polystyrene

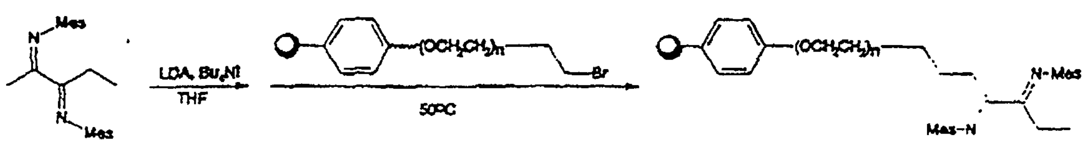


Scheme 14

To a cooled solution (0°C) of (2,4,6-$Me_3Ph)_2DAB(Me)Et$ (0.70 g, 2.09 mmol) in 15 ml dry THF under nitrogen was added LDA (1.63 ml, 2.44 mmol, 1.5 M in THF). After stirring at 0°C for 4 hr, (bromo) PEG polystyrene (2.33 g, 0.70 mmol, 0.30 mmol/g) and $Bu_4NI$ (0.77 g, 2.09 mmol) were added and the reaction mixture was warmed to 50°C and stirred an additional 8 hr after which the resin was filtered and washed extensively with THF (3 x 20 ml), $H_2O$ (3 x 20 mi), and MeOH (3 x 20 ml). After drying under high vacuum, 2.37 g of (2,4,6-$Me_3Ph)_2DAB(Me)Et$ PEG polystyrene was obtained as a yellow resin. A loading capacity of 0.25 mmol/g was calculated based on nitrogen analysis (0.71 % N). Magic angle spin (MAS) $^1H$ NMR 400 MHz, ($CDCl_3$) δ 6.87 (br s, 2H), 3.51 (br s, 2H), 2.76 (br s, 2H), 2.51 (d, 2H, J = 7.6 Hz), 2.28 (s, 6H), 2.01 (s, 12 H), 1.74 (br s, 2 H). 1.03 (t, 3H, J = 6.8 Hz).

2.6 Hydrolysis of (2,4,6-$Me_3Ph)_2DAB(Me)Et$ PEG Polystyrene

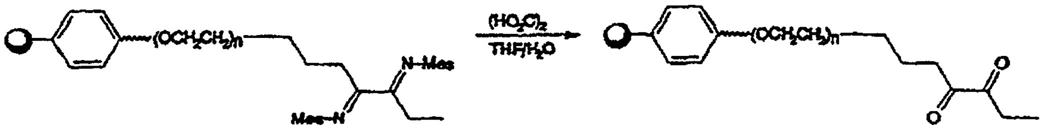


Scheme 15

(2,4,6-$Me_3Ph)_2$DAB(Me)Et PEG polystyrene (0.50 g, 0.12 mmol, 0.25 mmol/g) and oxalic acid (0.10 g, 1.12 mmol) was taken up in 20 ml THF/$H_2O$ (5:1 v/v) and heated to 70°C with gentle stirring for 8 hr. After cooling to room temperature and diluting with 25 ml $Et_2O$, the resin was filtered and the filtrate was washed with $H_2O$ (2 x 10 ml), dried over $MGSO_4$, filtered and concentrated to give 16 mg of 2,4,6-trimethylaniline in quantitative yield which was >99% pure by GC/MS analysis and $^1H$ NMR. The beads were dried under high vacuum to afford 450 mg of beige 2,3-pentanedione PEG polystyrene resin. Magic angle spin (MAS) $^1H$ NMR 400 MHz, ($CDCl_3$) δ 2.80 (m, 2H), 1.90 (m, 2H), 1.08 (t, 3H, J = 6.8 Hz).

2.7 Preparation of (2,4,6-$Me_3Ph)_2$DAB(Me)Et Nickel (II) Dibromide PEG Polystyrene

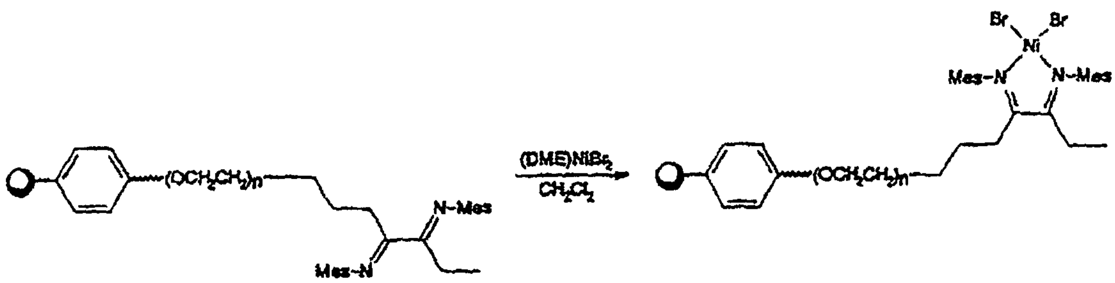


Scheme 16

(2,4,6-$Me_3Ph)_2$DAB(Me)Et PEG polystyrene (0.40 g, 0.10 mmol, 0.25 mmol/g) and (DME)$NiBr_2$ (0.15 g, 0.50 mmol) were taken up in 10 ml dry $CH_2Cl_2$ under nitrogen and stirred at room temperature for 12 hr. The resin was then washed extensively with $CH_2Cl_2$ and anhydrous acetone to give 0.42 g of (2,4,6-$Me_3Ph)_2$DAB(Me)Et nickel (II) dibromide PEG polystyrene as a dark reddish-brown resin. The loading capacity of this resin was calculated to be 0.54 mmol/g based on nickel analysis (3.40% Ni) and 0.57 mmol/g based on bromine analysis (8.67% Br), indicating that some residual nickel (II) dibromide was coordinated to the PEG polystyrene backbone.

2.8 Preparation of (2,4,6-$Me_3Ph)_2$DAB(Me)Et Palladium (II) (Me)Cl PEG Polystyrene

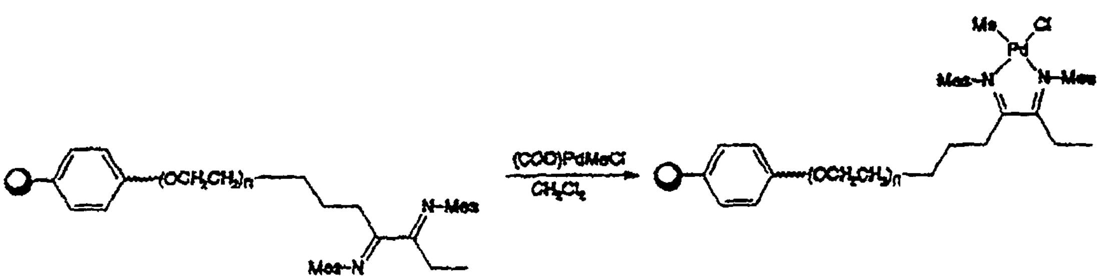


Scheme 17

(2,4,6-$Me_3Ph)_2$DAB(Me)Et PEG polystyrene (0.50 g, 0.12 mmol, 0.25 mmol/g) and (COD)PdMeCl (0.16 g, 0.63 mmol) were taken up in 7 ml dry $CH_2Cl_2$ under nitrogen and stirred at room temperature for 12 hr. The resin was then washed extensively with $CH_2Cl_2$ to give 0.51 g of (2,4,6-$Me_3Ph)_2$DAB(Me)Et Pd (II) (Me)Cl PEG polystyrene as a reddish-orange resin. Magic angle spin (MAS) $^1H$ NMR 400 MHz, ($CDCl_3$) δ 6.97 (br s, 2H), 6.92 (br s, 2H), 2.75 (br s, 2H), 2.45 (br s, 2H)), 2.32 (s, 3H), 2.30 (s, 3H), 2.24 (s, 6 H), 2.21 (br s, 6 H), 1.62 (br s, 2H), 1.03 (br s, 3H), 0.36 (s, 3H).

2.9 Preparation of (2,4,6-$Me_3Ph)_2$DAB(Me)Et Palladium (II) (Me)Cl(methyl) Polystyrene

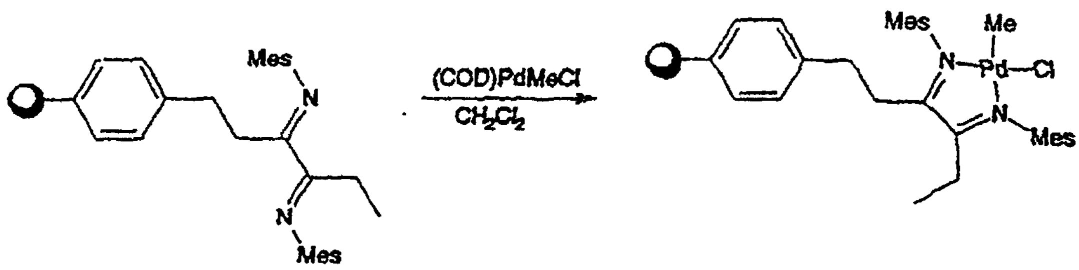


Scheme 18

(2,4,6-$Me_3Ph)_2$DAB(Me)Et (methyl) polystyrene (0.30 g, 0.11 mmol, 0.38 mmol/g) and (COD) PdMeCl (0.15 g, 0.57 mmol) were combined under nitrogen and taken up in 8 ml dry $CH_2Cl_2$. After stirring for 10 hr, the resin was washed extensively with $CH_2Cl_2$ and dried vacuum to afford 0.32 g of (2,4,6-$Me_3Ph)_2$DAB(Me)Et palladium (II) (Me) Cl(methyl)polystyrene as a reddish-orange resin. The loading capacity of this resin was calculated to be 0.32 mmol/g based on palladium analysis (4.15% Pd) and 0.39 mmol/g based on chlorine analysis (3.39% Cl).

Example 2 demonstrates the synthesis of representative diimine ligands utilizing the solid phase combinatorial methods of the present invention. The diimines of Example 2 were synthesized off of the support and subsequently attached to the support prior to undergoing additional modification. Following hydrolysis of the support-attached diimines, a diketone was produced which was utilized for preparation of additional diimine ligands.

**EXAMPLE 3**

Example 3 illustrates the application of the methods of the present invention to the solid phase synthesis of diimine ligands, wherein the diimine is synthesized on the support.

3.1 Solid-Phase Bis-imine Formation

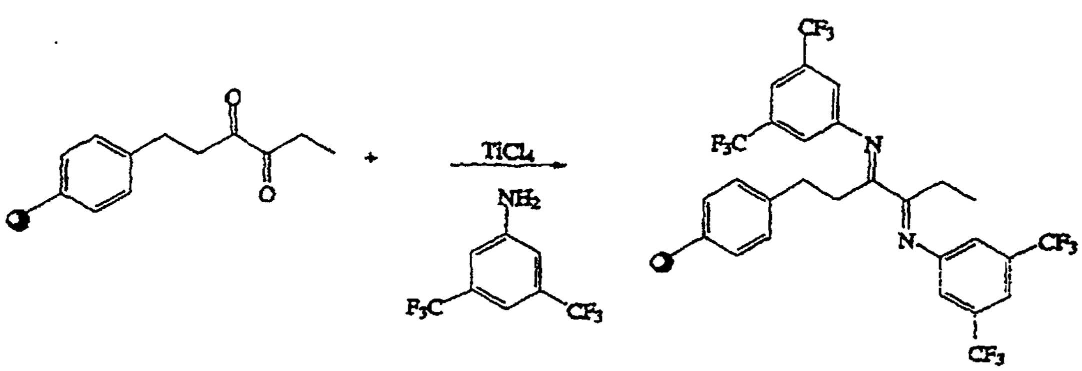


Scheme 19

To a suspension of 2,3 pentanedione (methyl)polystyrene (0.10 g, 0.08 mmol) in 5 ml of dry $CH_2Cl_2$ was added 3,5-bis(trifluoromethyl)aniline (0.25 ml, 1.60 mmol) and $TiCl_4$ (0.80 ml, 0.80 mmol, 1.0 M in $CH_2Cl_2$). The mixture was stirred at room temperature for 24 hr upon which the resin was filtered and washed extensively with $CH_2Cl_2$ (3 x

10 ml), MeOH (3 x 10 ml), $H_2O$ (3 x 10 ml), and dried under high vacuum to give 0.11 g of the desired resin. The loading capacity of this resin was calculated to be 0.15 mmol/g based on nitrogen analysis (0.43 % N).

Example 3 demonstrated that diimines can be formed directly on a resin which has been functionalized with diketone.

## EXAMPLE 4

Example 4 illustrates the utility of the catalysts of the present invention in polymerizing olefins. Both the supported and unsupported catalysts of the invention were assayed for their ability to polymerize ethylene to poly(ethylene). The polymerization of higher olefins such as hexene was also examined.

4.1 Polymerization of Ethylene

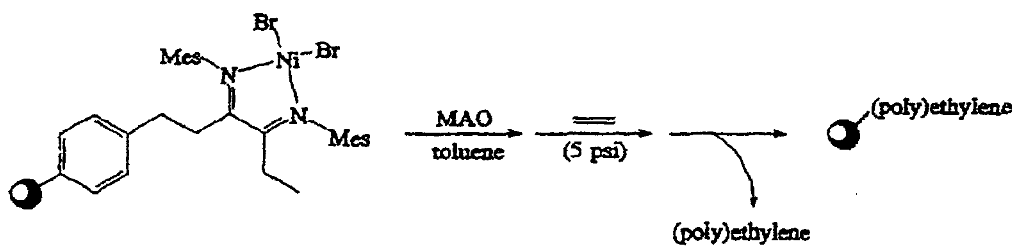


Scheme 20

The above resin-bound nickel(II) dibromide complex (0.16 g, 0.03 mmol) was suspended in 10 ml dry toluene upon which MAO was added (2.00 ml, 300.0 mmol, 10 % wt in toluene). The resin immediately turned dark blue. After stirring for 1 hr, ethylene gas was bubbled through the suspension for 1 min and then the reaction vessel was sealed to a pressure of 5 psi. An internal thermocouple measured a 29°C exotherm over a 20 min period. After stirring for an additional 1.5 hr, the temperature slowly dropped back to room temperature and the viscous solution was filtered and the beads were washed with toluene (3 x 10 ml). The filtrate was concentrated and then quenched with MeOH upon which white rubber-like (poly)ethylene formed immediately. This material was filtered and dried to give 1.60 g of (poly) ethylene. The beads were dried under high vacuum and afforded 1.60 g of material corresponding to a 10-fold mass increase of the polystyrene beads.

An identical procedure was performed with the exception that the MAO activated catalyst was washed with toluene (3 x 10 ml). After the excess MAO was filtered off, the resin-bound catalyst was taken up in 10 ml toluene prior to the introduction of ethylene. An identical outcome was obtained to that described earlier. When this washed resin was taken up in 10 ml dry hexane instead of toluene, less (poly)ethylene was obtained on the bead as well in the filtrate, both weighing 0.26 g.

The above example demonstrated that the supported catalysts of the present invention can catalyze the polymerization of olefins.

4.2 Ethylene polymerization with [(2-Ph)PMI(2,6-$(Pr)_2$Ph)]$NiBr_2$/MAO

To a suspension of 6 mg (0.01 mmol) of [(2-Ph)PMI(2,6-$(Pr)_2$Ph)]$NiBr_2$ in 5 mL of anhydrous, degassed toluene was added 3.3 mL (5 mmol) of 10% MAO in toluene and the resultant green solution was stirred at RT for 1h. This solution was then flushed with ethylene and stirred under 10 psi (68.95 kPa) of ethylene for 2 h. To the reaction mixture was added 4 M HCl (50 mL) and $Et_2O$ (100 mL), the layers were separated, and the organic layer was dried over $MgSO_4$. Removal of the volatiles by rotary evaporation provided 1.3 g of polymeric material.

4.3 Polymerization of Ethylene with (2,4,6-$Me_3Ph)_2DAB$(1-Methoxyethoxypropyl)Et Nickel (II) Dibromide

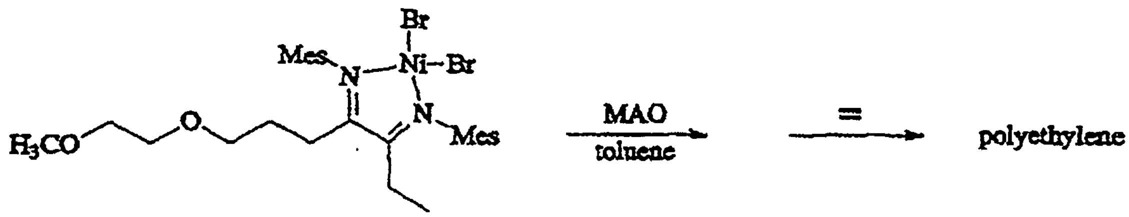


Scheme 21

(2,4,6-$Me_3Ph)_2DAB$(1-methoxyethoxypropyl)ethyl nickel (II) dibromide (0.02 g, 0.03 mmol) was suspended in 15 ml dry toluene upon which MAO was added (2.00 ml, 300.0 mmol, 10% wt in toluene). The solution turned dark blue over a 1 hour period. After stirring for 1 hr, ethylene gas was bubbled through the suspension for 1 min and then the reaction vessel was sealed to a pressure of 5 psi (34.47 kPa). An internal thermocouple measured a 23°C exotherm over a 45 min period. After stirring for an additional 1.5 hr, the temperature slowly dropped back to room temperature and the solution was quenched with MeOH followed by 5 N HCl. The precipitated polyethylene was collected by filtration and afforded 1.38 g of polyethylene after drying under high vacuum.

4.4 Polymerization of Ethylene with (2,4,6-$Me_3Ph)_2DAB$ (Et)$C_2H_4Ph$ Nickel (II) Dibromide

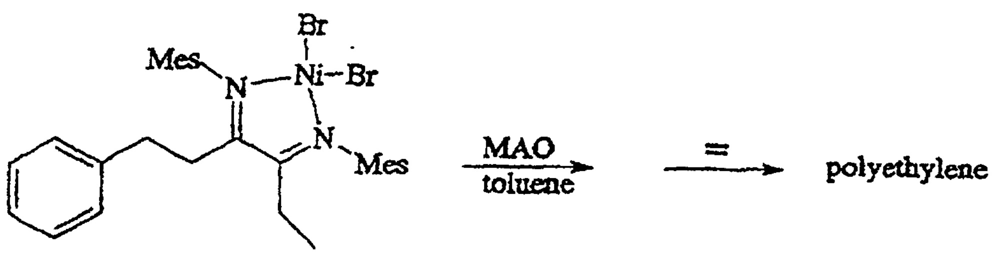


Scheme 22

(2,4,6-$Me_3Ph)_2DAB(Et)C_2H_4Ph$ nickel (II) dibromide (0.02 g, 0.03 mmol) was suspended in IS ml dry toluene upon which MAO was added (2.00 ml, 9.33 mmol, 10% wt in toluene). The solution turned dark blue over a 1 hour period. After stirring for 1 hr, ethylene gas was bubbled through the suspension for 1 min and then the reaction vessel was sealed to a pressure of 5 psi (34.47 kPa). An internal thermocouple measured a 19°C exotherm over a 45 min period. After stirring for an additional 1.5 hr, the temperature slowly dropped back to room temperature and the solution was quenched with MeOH followed by 5 N HCl. The precipitated polyethylene was collected by filtration and afforded 2.10 g of polyethylene after drying under high vacuum.

The above examples demonstrated the utility of the supported and unsupported catalysts of the present invention in olefin polymerization reactions.

4.5 Polymerization of Ethylene with (2,4,6-$Me_3$Ph)$_2$DAB(Me)Et Nickel (II) Dibromide PEG Polystyrene

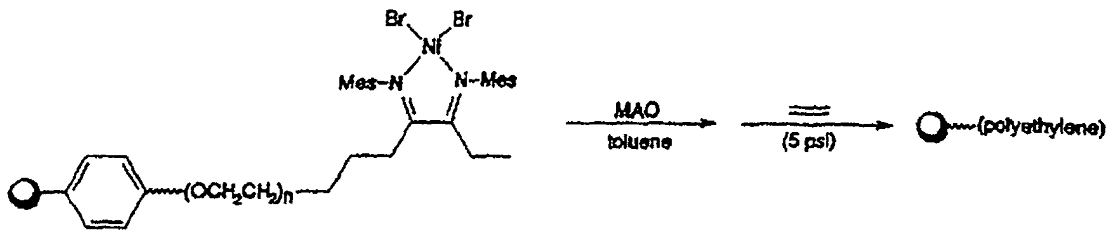


Scheme 23

The above resin-bound nickel(II) dibromide resin (0.20 g, 0.02 mmol, 0.10 mmol/g) was suspended in 20 ml dry toluene upon which MAO was added (2.00 ml, 300.0 mmol, 10% wt in toluene). The resin immediately turned dark blue. After stirring for 1 hr, ethylene gas was bubbled through the suspension for 1 min and then the reaction vessel was sealed to a pressure of 5 psi (34.47 kPa). An internal thermocouple measured a 3°C exotherm over a 45 min period. After stirring for an additional 1.5 hr, the temperature slowly dropped back to room temperature and the solution was filtered and the beads were washed with toluene (3 x 10 ml). The beads were dried under high vacuum and afforded 0.67 g of material corresponding to a 3-fold mass increase of the polystyrene beads. The filtrate afforded no polyethylene.

4.6 Polymerization of Ethylene with (2.4.6-$Me_3$Ph)$_2$DAB(Me)Et Palladium (II) (Me)Cl PEG Polystyrene

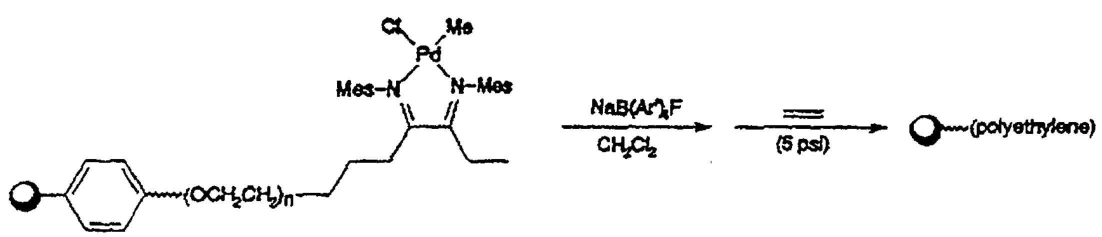


Scheme 24

The above resin-bound palladium (II) (Me)Cl resin (0.20 g, 0.02 mmol, 0.10 mmol/g) was suspended in 20 ml dry $CH_2Cl_2$ upon which NaB(Ar')$_4$F was added (18 mg, 0.02 mmol). The resin turned brownish-red over a I hr period upon which ethylene gas was bubbled through the suspension for 1 min. The reaction vessel was sealed to a pressure of 5 psi (34.47kPa). No exotherm was observed throughout the course of the reaction. After stirring for an additional 1.5 hr, the solution was filtered and the beads were washed with toluene (3 x 10 ml). The beads were dried under high vacuum and afforded 0.25 g of material corresponding to a 20% mass increase of the polystyrene beads. The filtrate afforded no polyethylene.

4.7 Polymerization of Ethylene with $(2,4,6\text{-}Me_3Ph)_2$DAB(Me)Et Palladium (II) (Me)Cl (methyl) Polystyrene

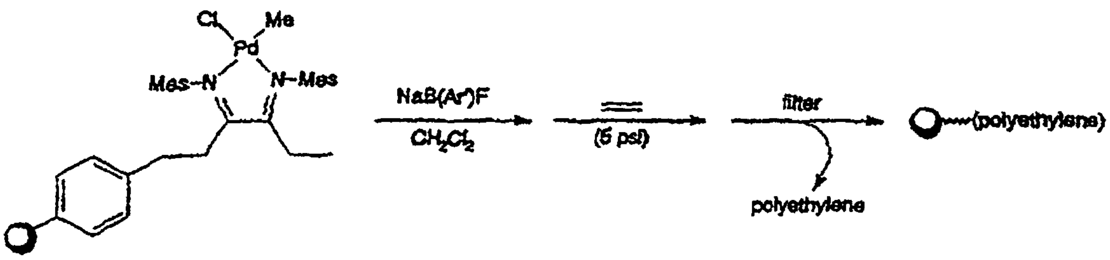


Scheme 25

The above resin-bound palladium (II) (Me)Cl resin (0.10 g, 0.03 mmol, 0.32 mmol/g) was suspended in 25 ml dry $CH_2Cl_2$ upon which $NaB(Ar')_4F$ was added (30 mg, 0.03 mmol). The resin turned brownish-red over a 1 hr period upon which ethylene gas was bubbled through the suspension for 1 min. The reaction vessel was sealed to a pressure of 5 psi (34.47 kPa). A 23°C exotherm was observed throughout the course of the reaction. After stirring for an additional 1.5 hr, the solution was filtered and the beads were washed with toluene (3 x 10 ml). The beads were dried under high vacuum and afforded 0.25 g of material corresponding to a 100% mass increase of the polystyrene beads. Workup of the filtrate afforded 2.28 g of polyethylene as a colorless gum. Gel permeation chromatography (toluene, 23°C, polystyrene reference): $M_n$ = 18,518; $M_w$ = 31,811; $M_w/M_n$ = 1.72.

4.8 Polymerization of Ethylene with $(2,4,6\text{-}Me_3Ph)_2$DAB (Et)$C_2H_4$Ph Palladium (II) (Me)Cl

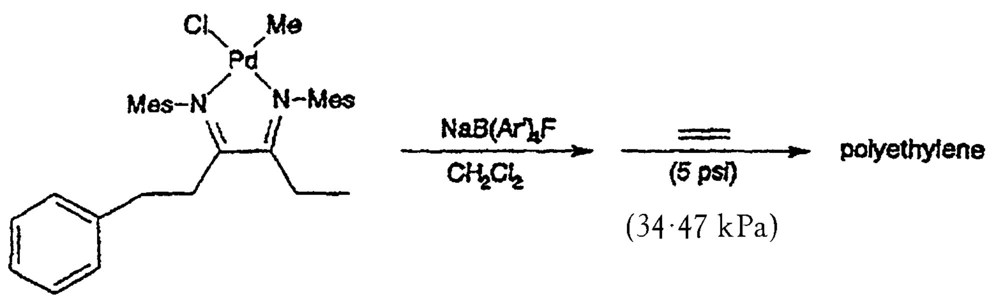


Scheme 26

$(2,4,6\text{-}Me)_2$DAB(Me)Et Palladium (II) (Me)Cl (0.02 g, 0.03 mmol) was dissolved in 25 ml dry $CH_2Cl_2$ upon which $NaB(Ar')_4F$ was added (30 mg, 0.03 mmol). The solution turned brownish-red over a 1 hr period upon which ethylene gas was bubbled through the suspension for 1 min. The reaction vessel was sealed to a pressure of 5 psi (34.47 kPa). A 28°C exotherm was observed throughout the course of the reaction. After stirring for an additional 2.5 hr, the solution was filtered through celite. Workup of the filtrate afforded 3.50 g of polyethylene as a colorless gum. Gel permeation chromatography (toluene, 23°C, polystyrene reference): $M_a$ = 21,016; $M_w$ = 31,471; $M_w/M_n$ = 1.50.

4.9 Hexene polymerization with [(2-Ph)PMI(2,6-$(Pr)_2$Ph)]$NiBr_2$/MAO

To a suspension of 6 mg (0.01 mmol) of [(2-Ph)PMI(2,6-$(Pr)_2$Ph)]$NiBr_2$ in 1 mL of anhydrous, degassed toluene was added 3.3 mL (5 mmol) of 10% MAO in toluene and the resultant green solution was stirred at RT for 1h. To this

solution was then added 8.4 g (100 mmol) of hexene and the solution was stirred under $N_2$ for 24 h. To the reaction mixture was added 4 M HCl (50 mL) and $Et_2O$ (100 mL), the layers were separated, and the organic layer was dried over $MgSO_4$. Removal of the volatiles by rotary evaporation provided 3.9 g (46%) of polymeric material.

## EXAMPLE 5

Example 5 details the preparation of a pyridyl imine ligand and its nickel complex. The catalyst was used to polymerize both hexene and ethylene. The synthetic route to the pyridyl imine nickel complex is displayed in Scheme 27.

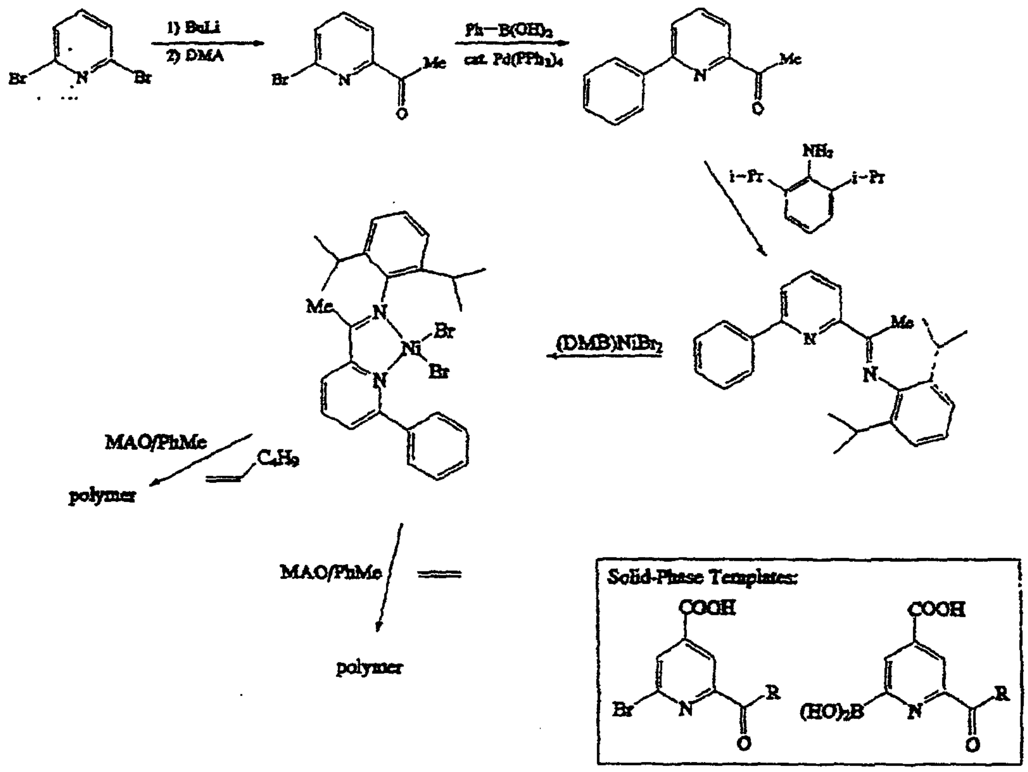


Scheme 27

### 5.1 Preparation of 2-acetyl-6-bromopyridine

To a solution of 3.00 g (12.7 mmol) of 2,6-dibromopyridine in 20 mL anhydrous. $Et_2O$ at -78°C was added dropwise over 30 min. 8.0 mL (12.8 mmol) of 1.6 M *n*-BuLi in cyclohexane. After stirring for 3 h at -78°C, 8.2 mL (88 mmol) of *N,N*-dimethylacetamide was added dropwise and the solution was stirred at -78°C for 1 h. On warming to RT, $Et_2O$ (100 mL) and saturated aqueous $NH_4Cl$ (50 mL) were added and the layers were separated. The organic layer was dried over $Na_2SO_4$ and the volatiles were removed by rotary evaporation. The resulting yellow solid was recrystallized from hexanes to provide 1.8 g (71 %) of 2-acetyl-6-bromopyridine as colorless crystals. $^1H$ NMR ($CDCl_3$): $\delta$2.81 (s, 3H); 7.67-7.77 (m, 2 H); 8.22 (dd, *J* = 6.8, 1.6 Hz, 1 H). Mass Spec.: *m*/*e* 200.

### 5.2 Preparation of 2-acetyl-6-phenylpyridine

To a Schlenk tube charged with a solution of 200 mg (1.0 mmol) of 2-acetyl-6-bromopyridine and 23 mg (0.02 mmol) of $(Ph_3P)_4Pd$ in 10 mL of degassed toluene was added a solution. of 150 mg (1.2 mmol) phenylboronic acid and 270 mg (2.5 mmol) $Na_2CO_3$ in 8 mL of degassed 4:1 $H_2O$/MeOH. The biphasic mixture was heated to 80°C with rapid stirring for h. On cooling to RT, $Et_2O$ (50 mL) was added and the layers were separated. The organic layer was dried over $Na_2SO_4$ and the volatiles were removed by rotary evaporation. The resulting oil was chromatographed on silica with 10-50% $CH_2Cl_2$/hexanes cluent to provide 176 mg (89%) of 2-acetyl-6-phenylpyridine as a white powder. $^1H$ NMR ($CDCl_3$); $\delta$ 2.84 (s, 3H); 7.43-7.62 (m, 3 H); 7.91-8.08 (m, 3 H); 8.18 (d, *J* = 6.6 Hz, 2H). Mass Spec.: *m*/*e* 197.

5.3 Preparation of 2-acetyl-6-phenylpyridine 2,6-di(Isopropyl)phenyl imine [(2-Ph)PMI(2,6-(Pr)$_2$Ph)]

A solution of 197 mg (mmol) of 2-acetyl-6-phenylpyridine and 266 mg (1.5 mmol) of 2,6-diisopropylaniline in 5 mL anhydrous MeOH and 0.1 mL of 0.1 M $H_2SO_4$ in MeOH was heated to 50°C for 12h. The volatiles were removed by rotary evaporation and the crude material chromatographed on silica with 5% EtOAc/hexanes eluent to provide 287 mg (80%) of (2-Ph)PMI(2,6-(Pr)$_2$Ph) as a yellow solid. $^1$H NMR ($CDCl_3$): δ1.17 (ddd, *J* = 4.6, 1.7, 0.7 Hz, 12H); 2.23 (d, *J* = 2.5 Hz, 3 H); 2.73 (dq, *J* = 6.8, 2.5 Hz); 7.10-7.25 (m, 3 H); 7.60-7.75 (m, 2 H); 7.90-8.06 (m, 2 H); 8.33-8.40 (m, 1 H). Mass Spec.: *m*/*e* 356.

5.4 Preparation of [(2-Ph)PMI(2,6-(Pr)$_2$Ph)]NiBr$_2$

A suspension of 71 mg (0.2 mmol) (2-Ph)PMI(2,6-(Pr)$_2$Ph) and 62 mg (0.2 mmol) of (dimethoxyethane)nickel (II)bromide in anhydrous $CH_2Cl_2$ was stirred at RT under $N_2$ for 48 h. The volatiles were removed by rotary evaporation and the solid was washed several times with hexanes to provide 101 mg (88%) of [(2-Ph)PMI(2,6-(Pr)$_2$Ph)]NiBr$_2$ as an orange powder.

The above example demonstrated that pyridyl imines can be prepared by the methods of the present invention and that these imines are of use in polymerizing olefins. Solid phase analogues of the above catalysts are prepared using the starting materials shown in Scheme 13 (inset), above.

## EXAMPLE 6

This example illustrates reaction schemes which can be used to prepare a variety of [2,0], [2,1], and [2,2] ligand libraries. Such [2,0], [2,1], and [2,2] ligand libraries can be prepared using solution or solid phase methodologies from a salen-based scaffold using the synthetic method outlined in Scheme 14, wherein $R^1$ and $R^2$ are defined as in the section above describing diimine libraries.

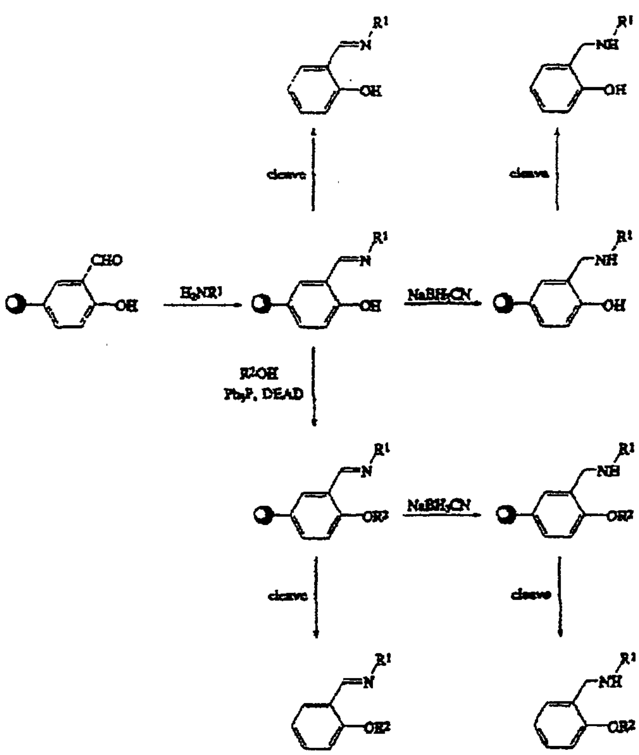


Scheme 28

Scheme 28 describes chemistry relevant to both solution and solid phase methodologies. When this chemistry is performed via solid phase chemistries the scaffold is bound to a solid particle represented by the ball in the above

figure.

The [2,0] ligand libraries can be converted into organometallic libraries using the displacement or oxidative addition methods described above for the diimine systems. The [2,1] ligand libraries can be converted into organometallic libraries using oxidative addition or metathesis reactions. Oxidative addition of the heteroatom - proton bound to a low valent metal precursor to form a hydride or hydrocarbyl ligand-metal complex is an effective method of creating reactive organometallic libraries. Metathesis reactions are also useful for producing organometallic libraries from [2,1] ligand libraries. The Bronsted acidic libraries described in the above figure can be used directly in metathesis reactions by contacting said libraries with metal reagents (including main group alkyls such as trimethylaluminum) containing leaving group ligands capable of abstracting the acidic proton on the [2,1] ligand. Alternatively, the [2,1] ligand libraries can be deprotonated to form metal salt libraries, which can be further reacted with metal complexes to undergo a metathesis reaction. Other metathesis reactions, such as those resulting in the loss of tin or silyl byproduct can also be envisioned.

Diamide based organometallic libraries can be prepared from diamino ligand libraries using oxidative addition or metathesis reactions similar to those described above. The diamino ligand libraries can be prepared using the synthetic procedure described in Figures 2B, 7, and 11.

Tetradentate [4,0] ligand libraries can be constructed by combining two [2,0] ligand fragments as illustrated in Scheme 15. One example of such a combination, is illustrated in the figure below. [4,0] ligand-metal libraries can be prepared by contacting the [4,0] ligand with a suitable transition metal precursor in a manner similar to that described for the preparation of [2,0] bis-imine-metal libraries.

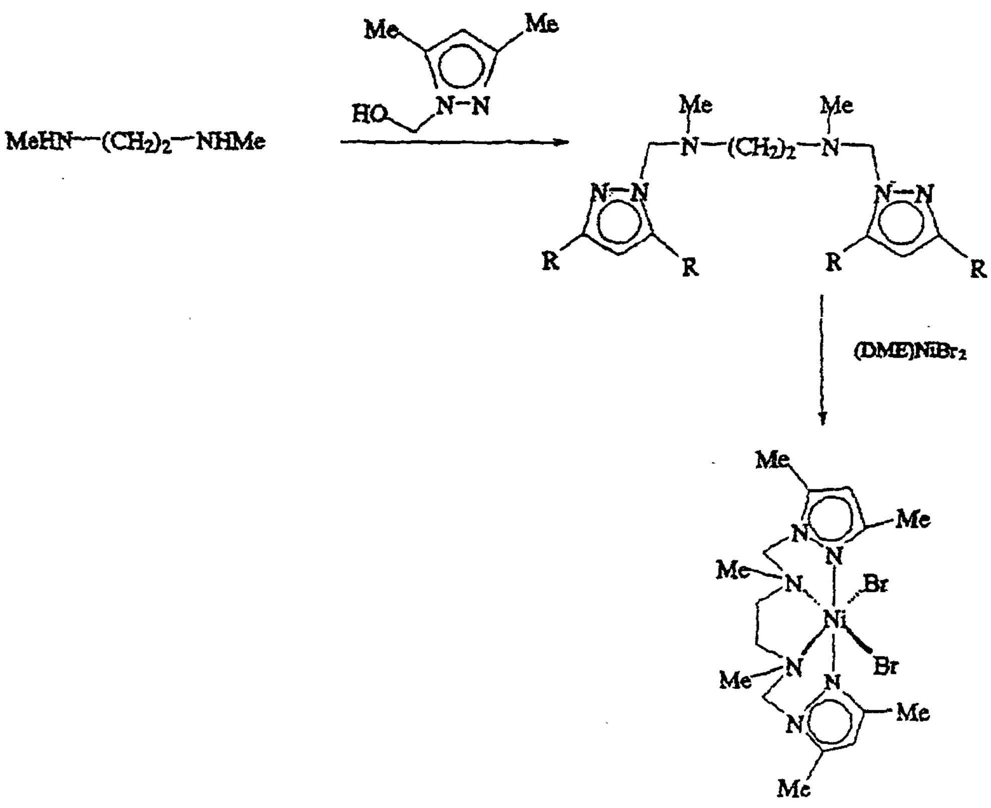


Scheme 29

It is to be understood that the above description is intended to be illustrative and not restrictive. Many embodiments will be apparent to those of skill in the art upon reading the above description. The scope of the invention should, therefore, be determined not with reference to the above description, but should instead be determined with reference to the appended claims, along with the full scope of equivalents to which such claims are entitled.

## Claims

1. A method for preparing an array of activated metal ligand compounds to enable the measurement of the effects of changes in, for example, the ligand core, substituents on the ligand core the metal, counterions, activators, reaction conditions, solvents and additives, comprising

   a. forming an array of spatially segregated metal ligand compounds in predefined regions of a substrate, wherein a first metal ligand compound is in a first region on said substrate and a second metal ligand compound is in a second region on said substrate, wherein said first metal ligand compound and said second metal ligand compound are different; and
   b. providing one or more activators to said first and second regions, wherein said activators are ionizing agents or alkylating agents.

2. A method according to Claim 1 comprising:

   a. synthesising a first metal binding organic ligand and a second metal binding organic ligand on first and second regions on a substrate, wherein said first and second metal binding ligande are different; and
   b. delivering a first metal precursor to said first metal binding ligand and a second metal precursor to said second metal binding ligand to form a first metal ligand compound and a second metal ligand compound, wherein said first metal precursor and said second metal precursor are the same or different ;
   c. reacting said first metal ligand compound with a first activator to form a first activated metal ligand compound and reacting said second metal ligand compound with a second activator to form a second activated metal ligand compound wherein said first and second activators are the same or different.

3. A method according to Claim 1 or Claim 2 comprising:

   a. delivering a first metal binding ligand and a second metal binding ligand to first and second regions on a substrate, wherein said first and second metal binding ligands are different;
   b. delivering a first metal precursor to said first region and a second metal precursor to said second region, wherein said first metal precursor and said second metal precursor are the same or different; and
   a delivering a first activator to said first region and delivering a second activator to said second region wherein said first and second activators are the same or different.

4. A method according to Claim 2 or Claim 3 further comprising deprotonating each of said first and second metal binding ligands prior to delivering said metal ions.

5. A method according to any of the preceding Claims wherein there are more than three activated metal ligand compounds in said array.

6. A method according to any of the preceding Claims wherein there are at least 10 different activated metal ligand compounds in said array.

7. A method according to any of the preceding Claims wherein there are at least 20 different activated metal ligand compounds in said array.

8. A method according to any of the preceding Claims wherein said activators are independently selected from the group consisting of alumoxanes and $[Q]^+[NCA]^-$, where $[Q]^+$ is a reactive cation, $[NCA]^-$ is a non-co-ordinating anion.

9. A method according to any of Claims 1 to 7 wherein said activators are independently selected from the group consisting of Lewis acids and ion exchange activators.

10. A method according to any of Claims 1 to 7 wherein said activators are independently selected from the group consisting of methylalumoxane and $B(C_8F_5)_3$.

11. A method according to any of the preceding Claims wherein said first and second metal ligand compounds are derived from metals which are independently selected from the group consisting of main group metals and transition metals.

12. A method according to Claim 11 wherein said first and second metal ligand compounds are derived from metals which are independently from the group consisting of Pd, NI, Pt, Ir, Rh, Cr, Mo, W and Co.

13. A method according to any of the preceding Claims wherein the ligands have a coordination number (CN) independently selected from the group consisting of 1, 2 and 3.

14. A method according to any of the preceding Claims wherein the ligands have a charge independently selected from the group consisting of 0, -1, -2, -3 and -4,

15. A method according to any of the preceding Claims wherein the ligands have a coordination number (CN) and charge independently selected from the group consisting of

i. CN = 2, charge = -2
ii. CN = 2, charge = -1
iii. CN = 1, charge = -1
iv. CN = 2, charge = neutral
v. CN = 3, charge = -1
vi. CN = 1, charge = -2
vii. CN = 3, charge = -2
viii. CN = 2, charge = -3 and
ix. CN = 3, charge = -3.

16. A method according to any of the preceding Claims wherein said substrate is non-porous and located within a sample chamber which is filled with reactant gas and each metal ligand compound of the array is then activated.

17. A method according to Claim 16 in which the reactant gas is an olefin, or diolefin or acetylenically unsaturated compound.

18. A method according to any of the preceding Claims wherein said substrate comprises wells as regions.

**Patentansprüche**

1. Verfahren zur Herstellung einer Anordnung von aktivierten Metall-Ligand-Verbindungen, um die Messung der Auswirkungen von Veränderungen von beispielsweise dem Ligandenkern, Substituenten an dem Ligandenkern, dem Metall, Gegenionen, Aktivatoren, Reaktionsbedingungen, Lösungsmitteln und Additiven zu ermöglichen, bei dem

a. eine Anordnung räumlich abgesonderter Metall-Ligand-Verbindungen in vordefinierten Bereichen eines Substrats gebildet wird, wobei sich eine erste Metall-Ligand-Verbindung in einem ersten Bereich auf dem Substrat befindet und eine zweite Metall-Ligand-Verbindung in einem zweiten Bereich auf dem Substrat befindet, wobei sich die erste Metall-Ligand-Verbindung und die zweite Metall-Ligand-Verbindung unterscheiden, und
b. auf dem ersten und dem zweiten Bereich ein oder mehrere Aktivatoren bereitgestellt werden, wobei die Aktivatoren Ionisierungsmittel oder Alkylierungsmittel sind.

2. Verfahren nach Anspruch 1, bei dem

a. ein erster metallbindender organischer Ligand und ein zweiter metallbindender organischer Ligand auf einem ersten und einem zweiten Bereich auf einem Substrat synthetisiert werden, wobei der erste und der zweite metallbindende Ligand verschieden sind, und
b. ein erster Metallvorläufer dem ersten metallbindenden Liganden und ein zweiter Metallvorläufer dem zweiten metallbindenden Liganden zugeführt wird, um eine erste Metall-Ligand-Verbindung und eine zweite Metall-Ligand-Verbindung zu bilden, wobei der erste Metallvorläufer und der zweite Metallvorläufer gleich oder verschieden sind,
c. die erste Metall-Ligand-Verbindung mit einem ersten Aktivator unter Bildung einer ersten aktivierten Metall-Ligand-Verbindung umgesetzt wird und die zweite Metall-Ligand-Verbindung mit einem zweiten Aktivator unter Bildung einer zweiten aktivierten Metall-Ligand-Verbindung umgesetzt wird, wobei der erste und der zweite Aktivator gleich oder verschieden sind.

**3.** Verfahren nach Anspruch 1 oder Anspruch 2, bei dem

a. ein erster metallbindender Ligand und ein zweiter metallbindender Ligand einem ersten und einem zweiten Bereich auf einem Substrat zugeführt werden, wobei der erste und der zweite metallbindende Ligand verschieden sind,
b. ein erster Metallvorläufer dem ersten Bereich und ein zweiter Metallvorläufer dem zweiten Bereich zugeführt werden, wobei der erste Metallvorläufer und der zweite Metallvorläufer gleich oder verschieden sind, und
c. ein erster Aktivator dem ersten Bereich zugeführt wird und ein zweiter Aktivator dem zweiten Bereich zugeführt wird, wobei der erste und der zweite Aktivator gleich oder verschieden sind.

**4.** Verfahren nach Anspruch 2 oder Anspruch 3, bei dem ferner der erste und der zweite metallbindende Ligand vor der Zuführung der Metallionen deprotoniert werden.

**5.** Verfahren nach einem der vorhergehenden Ansprüche, bei dem mehr als drei aktivierte Metall-Ligand-Verbindungen in der Anordnung vorhanden sind.

**6.** Verfahren nach einem der vorhergehenden Ansprüche, bei dem mindestens 10 verschiedene aktivierte Metall-Ligand-Verbindungen in der Anordnung vorhanden sind.

**7.** Verfahren nach einem der vorhergehenden Ansprüche, bei dem mindestens 20 verschiedene aktivierte Metall-Ligand-Verbindungen in der Anordnung vorhanden sind.

**8.** Verfahren nach einem der vorhergehenden Ansprüche, bei dem die Aktivatoren unabhängig ausgewählt sind aus der Gruppe bestehend aus Alumoxanen und $[Q]^+[NCA]^-$, wobei $[Q]^+$ ein reaktives Kation ist, $[NCA]^-$ ein nicht koordinierendes Anion ist.

**9.** Verfahren nach einem der Ansprüche 1 bis 7, bei dem die Aktivatoren unabhängig ausgewählt sind aus der Gruppe bestehend aus Lewissäuren und Ionenaustauschaktivatoren.

**10.** Verfahren nach einem der Ansprüche 1 bis 7, bei dem die Aktivatoren unabhängig ausgewählt sind aus der Gruppe bestehend aus Methylalumoxan und $B(C_6F_5)_3$.

**11.** Verfahren nach einem der vorhergehenden Ansprüche, bei dem die erste und die zweite Metall-Ligand-Verbindung von Metallen abgeleitet sind, die unabhängig ausgewählt sind aus der Gruppe bestehend aus Hauptgruppenmetallen und Übergangsmetallen.

**12.** Verfahren nach Anspruch 11, bei dem die erste und die zweite Metall-Ligand-Verbindung von Metallen abgeleitet sind, die unabhängig ausgewählt sind aus der Gruppe bestehend aus Pd, Ni, Pt, Ir, Rh, Cr, Mo, W und Co.

**13.** Verfahren nach einem der vorhergehenden Ansprüche, bei dem die Liganden eine Koordinationszahl (CN) haben, die unabhängig ausgewählt ist aus der Gruppe bestehend aus 1, 2 und 3.

**14.** Verfahren nach einem der vorhergehenden Ansprüche, bei dem die Liganden eine Ladung haben, die unabhängig ausgewählt ist aus der Gruppe bestehend aus 0, -1, -2, -3 und -4.

**15.** Verfahren nach einem der vorhergehenden Ansprüche, bei dem die Liganden eine Koordinationszahl (CN) und Ladung haben, die unabhängig ausgewählt sind aus der Gruppe bestehend aus:

(i) CN = 2, Ladung = -2,
(ii) CN = 2, Ladung = -1,
(iii)CN = 1, Ladung = -1,
(iv) CN = 2, Ladung = neutral,
(v) CN = 3, Ladung = -1,
(vi) CN = 1, Ladung = -2,
(vii)CN = 3, Ladung = -2,
(viii) CN = 2, Ladung = -3 und
(ix) CN = 3, Ladung = -3.

16. Verfahren nach einem der vorhergehenden Ansprüche, bei dem das Substrat nicht porös ist und sich innerhalb einer Probenkammer befindet, die mit Reaktantgas gefüllt wird, und jede Metall-Ligand-Verbindung der Anordnung aktiviert wird.

17. Verfahren nach Anspruch 16, bei dem das Reaktantgas ein Olefin oder Diolefin oder eine acetylenisch ungesättigte Verbindung ist.

18. Verfahren nach einem der vorhergehenden Ansprüche, bei dem das Substrat Mulden als Bereiche umfasst.

**Revendications**

1. Procédé pour la préparation d'une gamme de composés métal-ligand activés afin de permettre la mesure des effets de variations dans, par exemple, le noyau de ligands, des substituants sur le noyau de ligands, le métal, des ions complémentaires, des activateurs, les conditions réactionnelles, les solvants et les additifs, comprenant les étapes consistant

   a. à former une gamme de composés métal-ligand séparés spatialement dans des régions prédéfinies d'un substrat, un premier composé métal-ligand étant présent dans une première région sur ledit substrat et un second composé métal-ligand étant présent dans une seconde région sur ledit substrat, ledit premier composé métal-ligand et ledit second composé métal-ligand étant différents ; et
   b. à fournir un ou plusieurs activateurs auxdites première et seconde régions, lesdits activateurs étant des agents ionisants ou alkylants.

2. Procédé suivant la revendication 1, comprenant les étapes consistant :

   a. à synthétiser un premier ligand organique de liaison à un métal et un second ligand organique de liaison à un métal sur des première et seconde régions sur un substrat, lesdits premier et second ligands de liaison à un métal étant différents ; et
   b. à délivrer un premier précurseur métallique audit premier ligand de liaison à un métal et un second précurseur métallique audit second ligand de liaison à un métal pour former un premier composé métal-ligand et un second composé métal-ligand, ledit premier précurseur métallique et ledit second précurseur métallique étant identiques ou différents, et
   c. à faire réagir ledit premier composé métal-ligand avec un premier activateur pour former un premier composé métal-ligand activé et à faire réagir ledit second composé métal-ligand avec un second activateur pour former un second composé métal-ligand activé, lesdits premier et second activateurs étant identiques ou différents.

3. Procédé suivant la revendication 1 ou la revendication 2, comprenant les étapes consistant :

   a. à délivrer un premier ligand de liaison à un métal et un second ligand de liaison à un métal à des première et seconde régions sur un substrat, lesdits premier et second ligands de liaison à un métal étant différents ;
   b. à délivrer un premier précurseur métallique à ladite première région et un second précurseur métallique à ladite seconde région, ledit premier précurseur métallique et ledit second précurseur métallique étant identiques ou différents ; et
   c. à délivrer un premier activateur à ladite première région et à délivrer un second activateur à ladite seconde région, lesdits premier et second activateurs étant identiques ou différents.

4. Procédé suivant la revendication 2 ou la revendication 3, comprenant en outre la déprotonation de chacun des premier et second ligands de liaison à un métal avant de délivrer les ions métalliques.

5. Procédé suivant l'une quelconque des revendications précédentes, dans lequel il existe plus de trois composés métal-ligand activés dans la gamme.

6. Procédé suivant l'une quelconque des revendications précédentes, dans lequel il existe au moins 10 composés métal-ligand activés différents dans la gamme.

7. Procédé suivant l'une quelconque des revendications précédentes, dans lequel il existe au moins 20 composés métal-ligand activés différents dans la gamme.

**8.** Procédé suivant l'une quelconque des revendications précédentes, dans lequel les activateurs sont choisis indépendamment dans le groupe consistant en des alumoxanes et des composés de formule $[Q]^+[NCA]^-$, dans laquelle $[Q]^+$ représente un cation réactif et [NCA] représente un anion non coordinant.

**9.** Procédé suivant l'une quelconque des revendications 1 à 7, dans lequel les activateurs sont choisis indépendamment dans le groupe consistant en des acides de Lewis et des activateurs échangeurs d'ions.

**10.** Procédé suivant les revendications 1 à 7 précédentes, dans lequel les activateurs sont choisis indépendamment dans le groupe consistant en le méthylalumoxane et $B(C_6F_5)_3$.

**11.** Procédé suivant l'une quelconque des revendications précédentes, dans lequel les premier et second composés métal-ligand sont dérivés de métaux qui sont choisis indépendamment dans le groupe consistant en métaux des groupes principaux et métaux de transition.

**12.** Procédé suivant la revendication 11, dans lequel les premier et second composés métal-ligand sont dérivés de métaux qui sont choisis indépendamment dans le groupe consistant en Pd, Ni, Pt, Ir, RH, Cr, Mo, W et Co.

**13.** Procédé suivant l'une quelconque des revendications précédentes, dans lequel les ligands ont un indice de coordination (IC) choisi indépendamment dans le groupe consistant en les valeurs 1, 2 et 3.

**14.** Procédé suivant l'une quelconque des revendications précédentes, dans lequel les ligands ont une charge choisie indépendamment dans le groupe consistant en les valeurs 0, -1, -2, -3 et -4.

**15.** Procédé suivant l'une quelconque des revendications précédentes, dans lequel les ligands ont un indice de. coordination (IC) et une charge choisis indépendamment dans le groupe consistant en

i. IC = 2, charge = -2
ii. IC = 2, charge = -1
iii. IC = 1, charge = -1
iv. IC = 2, charge = neutre
v. IC = 3, charge = -1
vi. IC = 1, charge = -2
vii. IC = 3, charge = -2
viii. IC = 2, charge = -3, et
ix. IC = 3, charge = -3.

**16.** Procédé suivant l'une quelconque des revendications précédentes, dans lequel le substrat est non poreux et est situé dans une chambre d'échantillon qui est remplie avec un gaz réactionnel et chaque composé métal-ligand de la gamme est ensuite activé.

**17.** Procédé suivant la revendication 16, dans lequel le gaz réactionnel est une oléfine, une dioléfine ou un composé à insaturation acétylénique.

**18.** Procédé suivant l'une quelconque des revendications précédentes, dans lequel le substrat comprend des puits, comme régions.

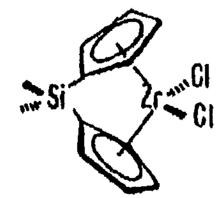

A

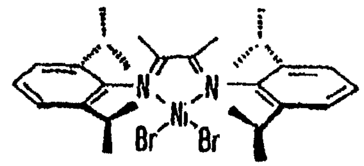

B

FIG. 1.

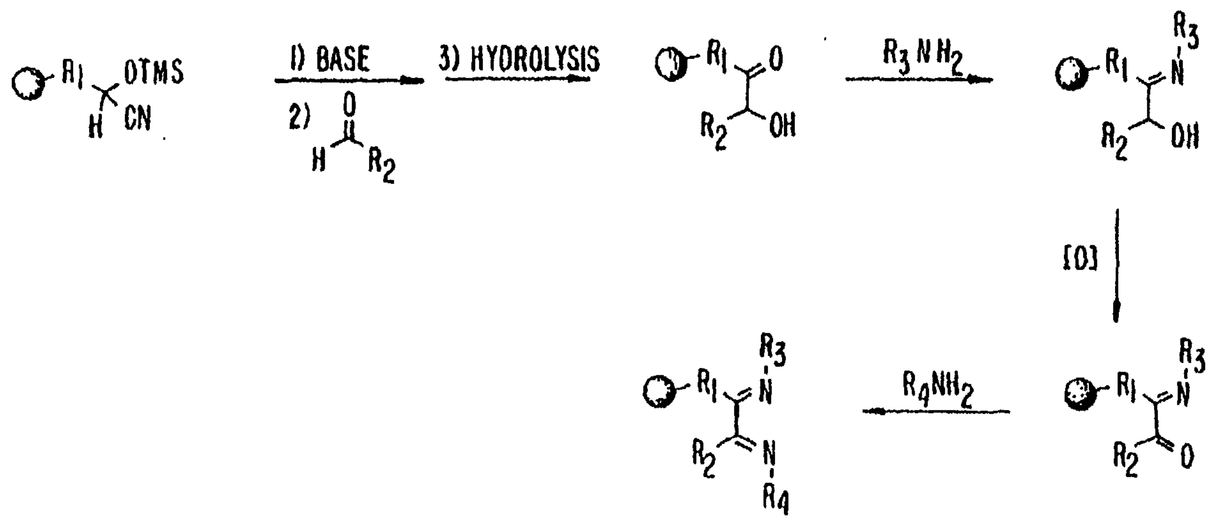


FIG. 2A.

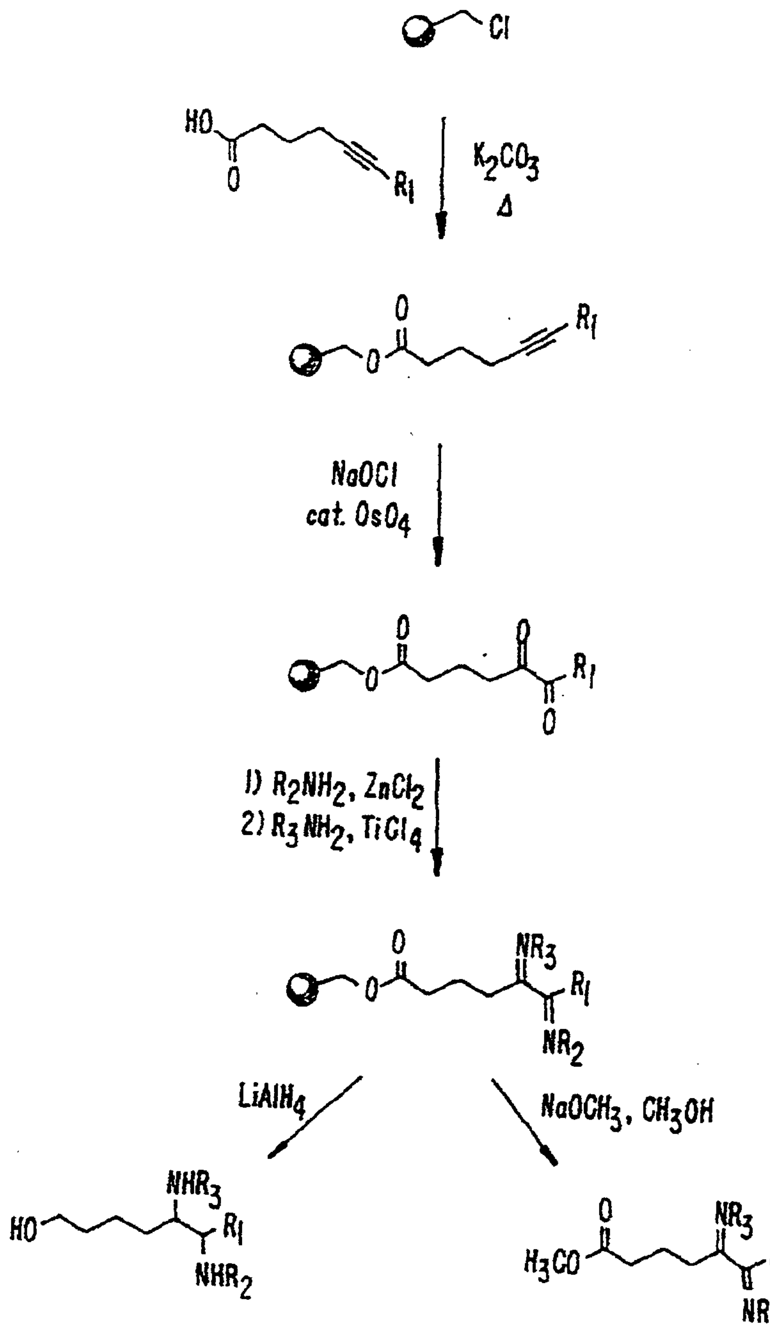
K2CO3
Δ
NaOCl
cat. OsO4
1) R2NH2, ZnCl2
2) R3NH2, TiCl4
LiAlH4
NaOCH3, CH3OH

*FIG. 2B.*

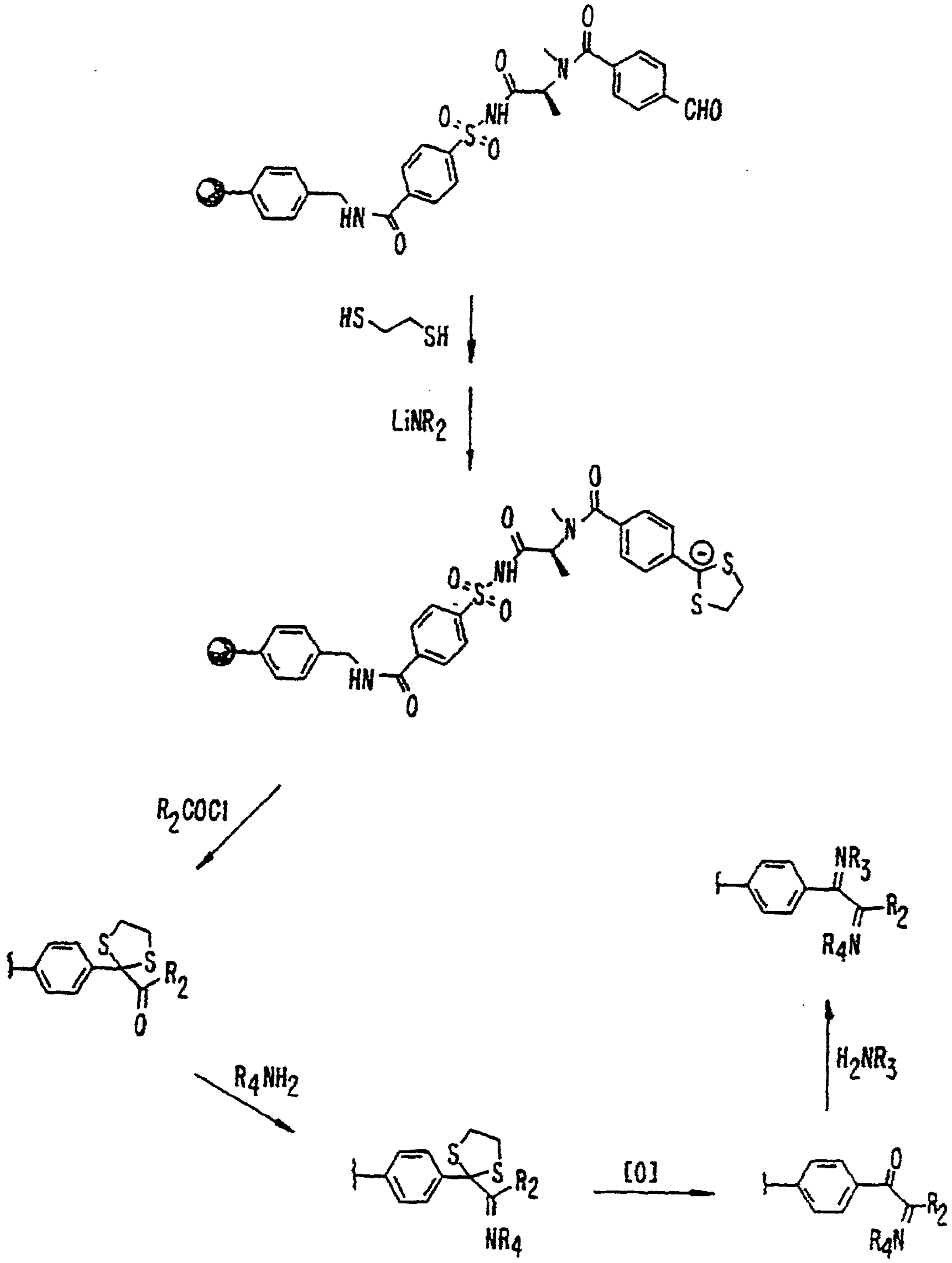


FIG. 3A.

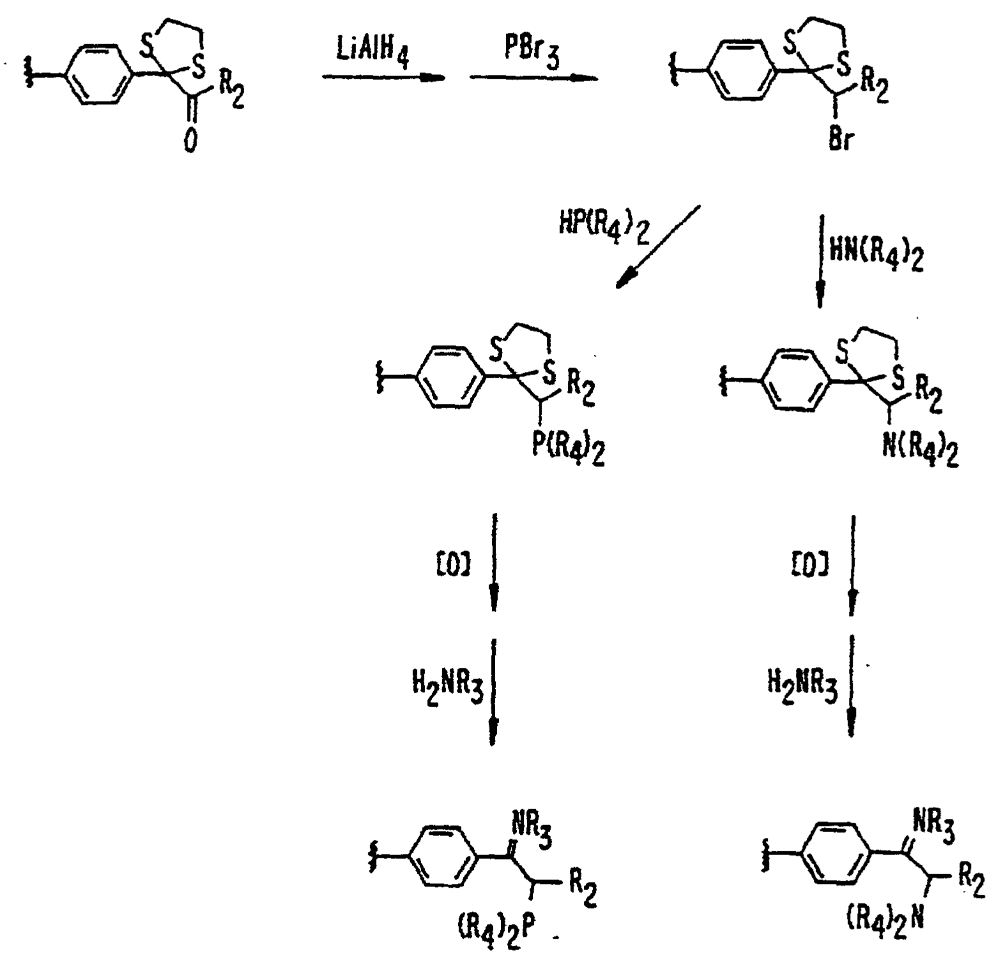


FIG. 3B.

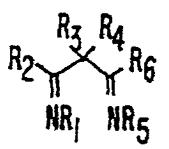

A

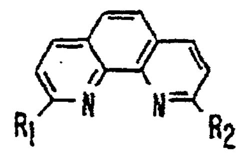

B

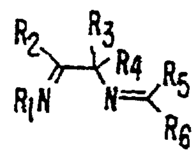

C

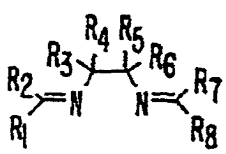

D

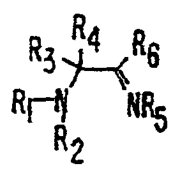

E

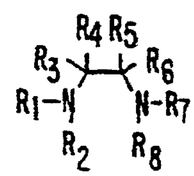

F

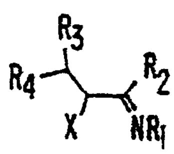

G

$X = OR_5, SR_5, PR_5R_6$

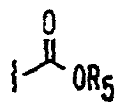

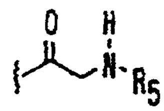

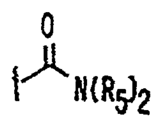

*FIG. 4.*

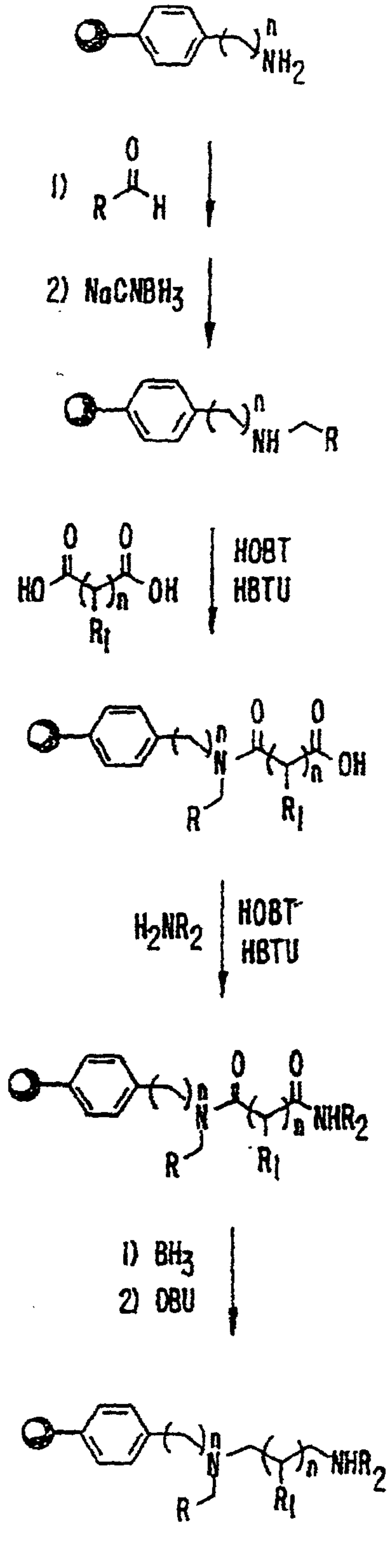


FIG. 5.

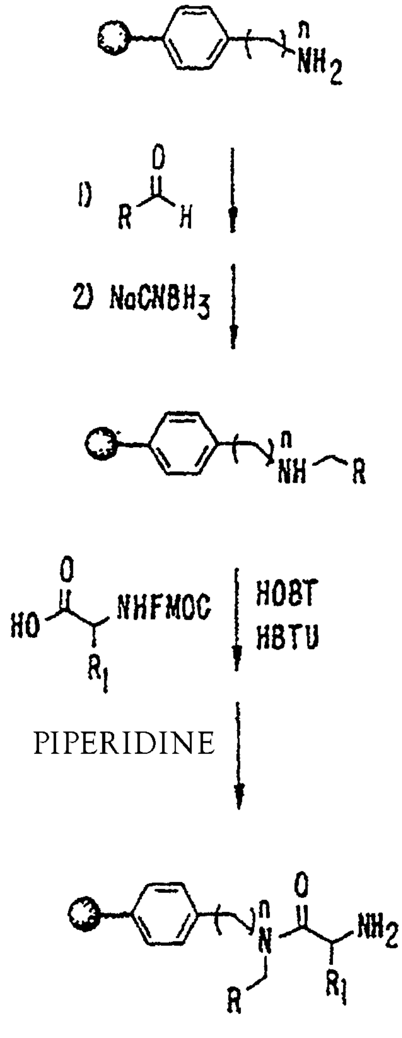


FIG. 6.

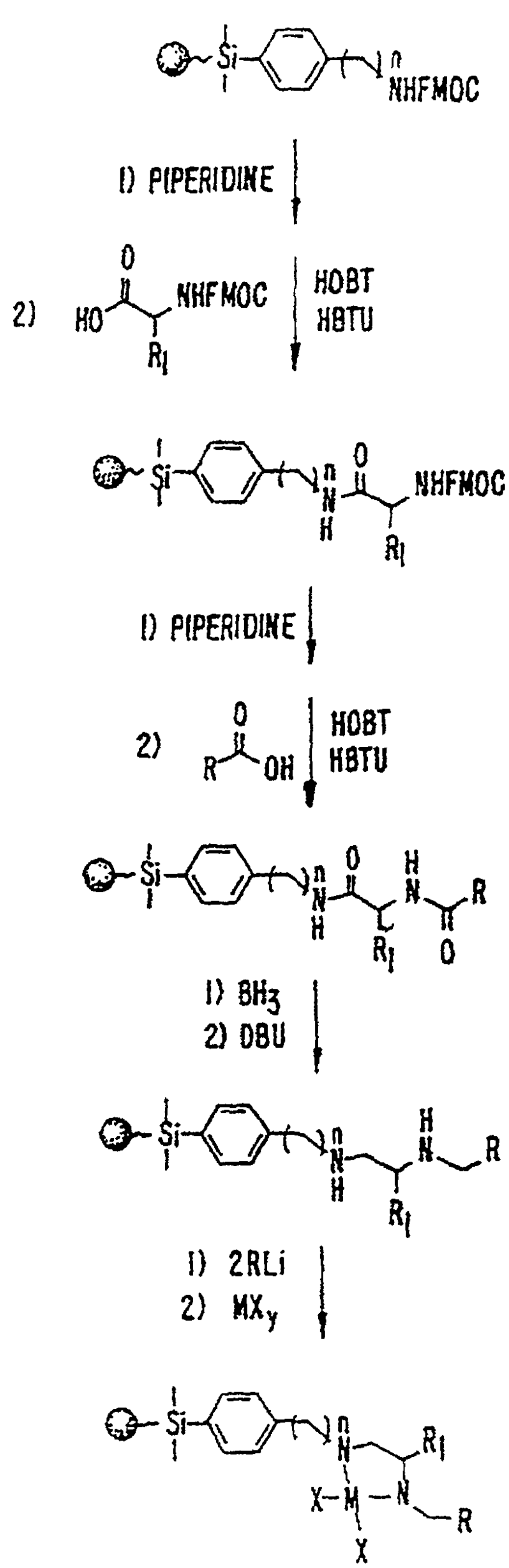
1) PIPERIDINE
2)
HOBT
HBTU
1) PIPERIDINE
2)
HOBT
HBTU
1) BH3
2) DBU
1) 2RLi
2) MXy

*FIG. 7.*

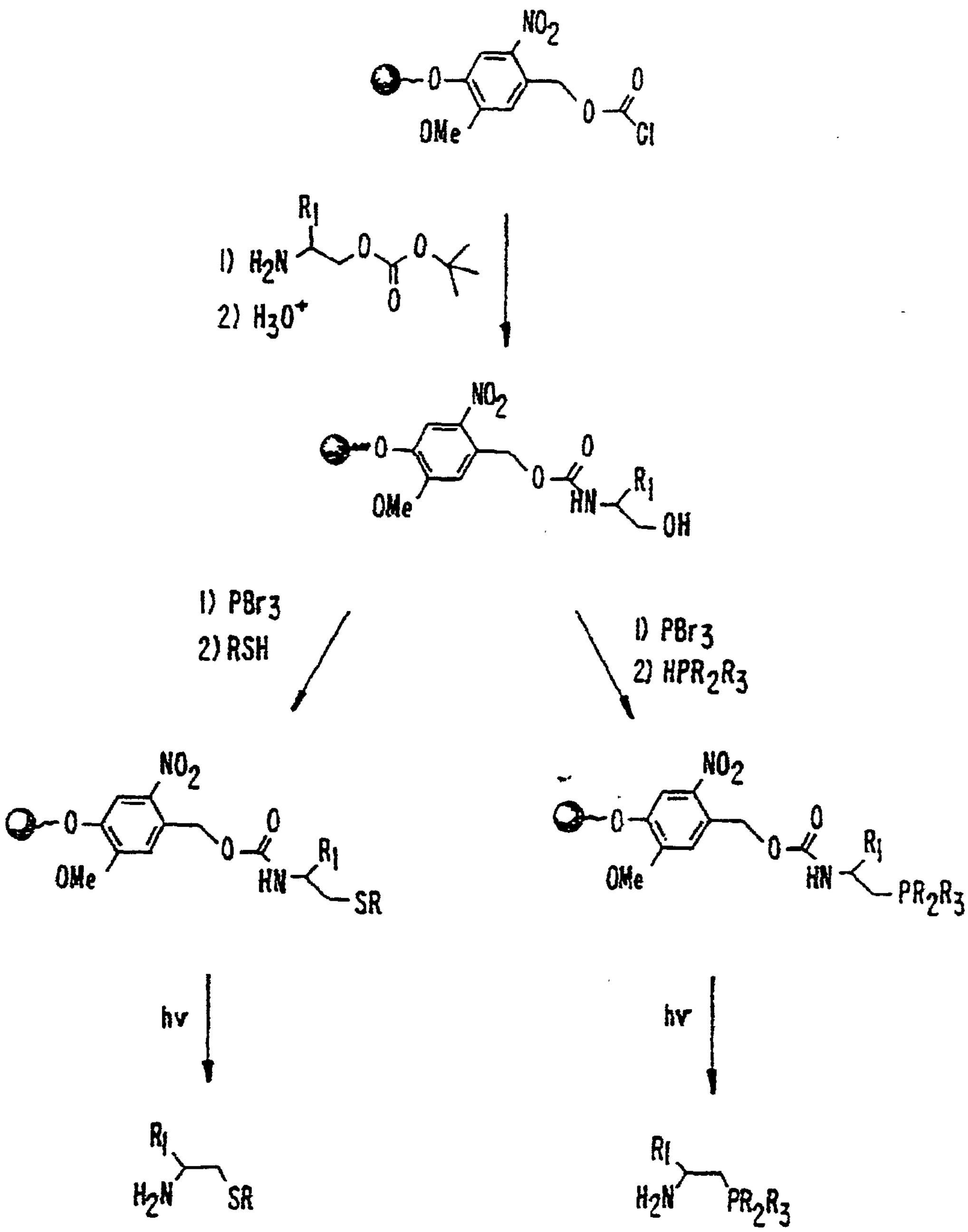


*FIG. 8.*

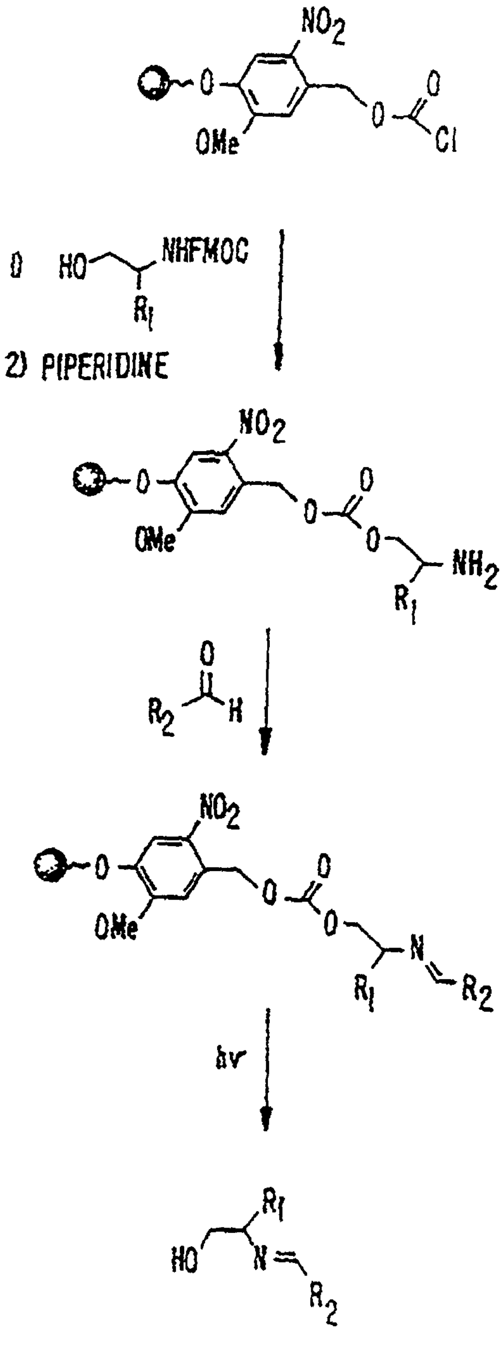


*FIG. 9.*

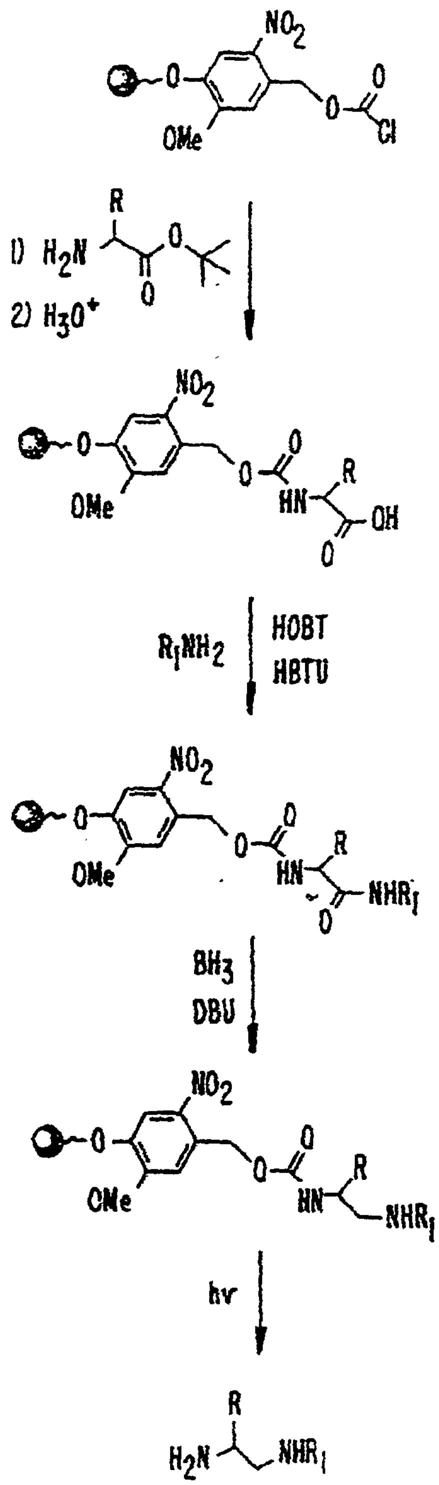


*FIG. 10.*

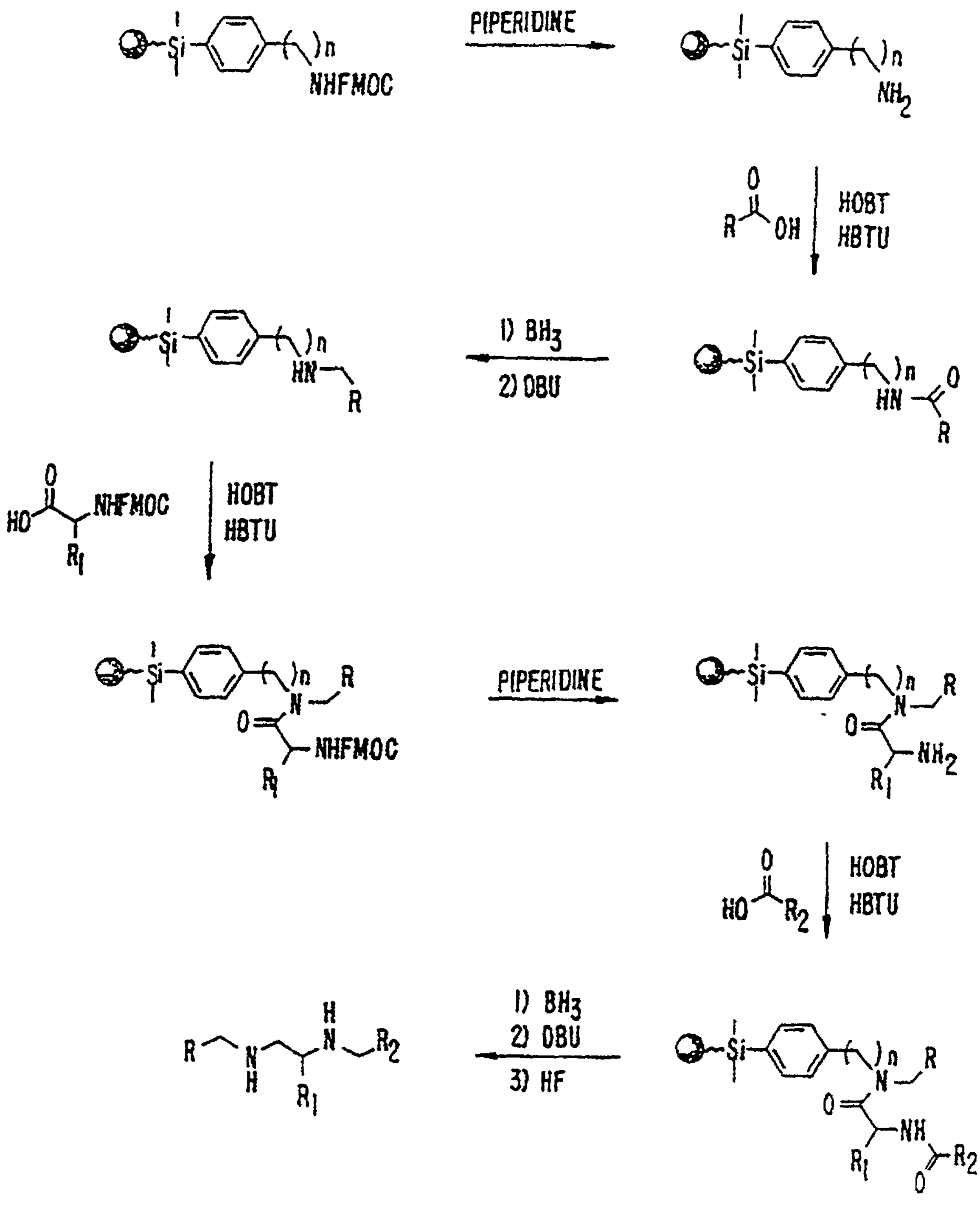
PIPERIDINE
HOBT
HBTU
1) BH3
2) DBU
HOBT
HBTU
PIPERIDINE
HOBT
HBTU
1) BH3
2) DBU
3) HF

*FIG. 11.*

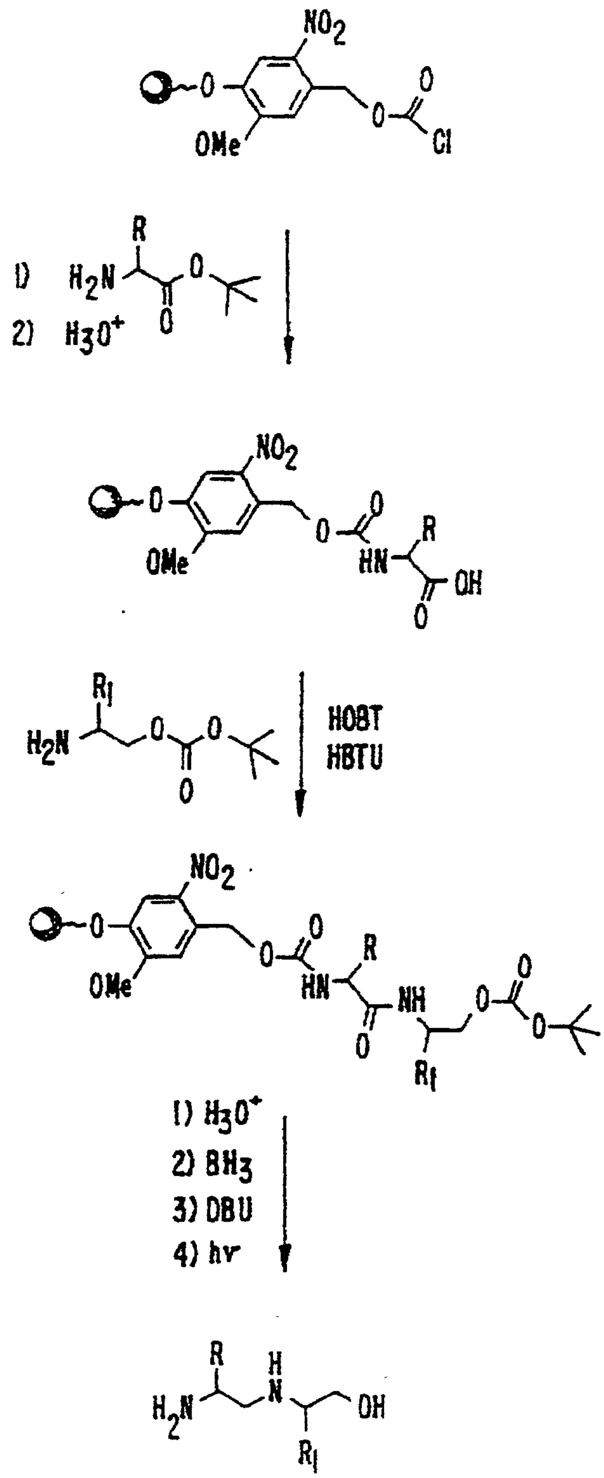


*FIG. 12.*

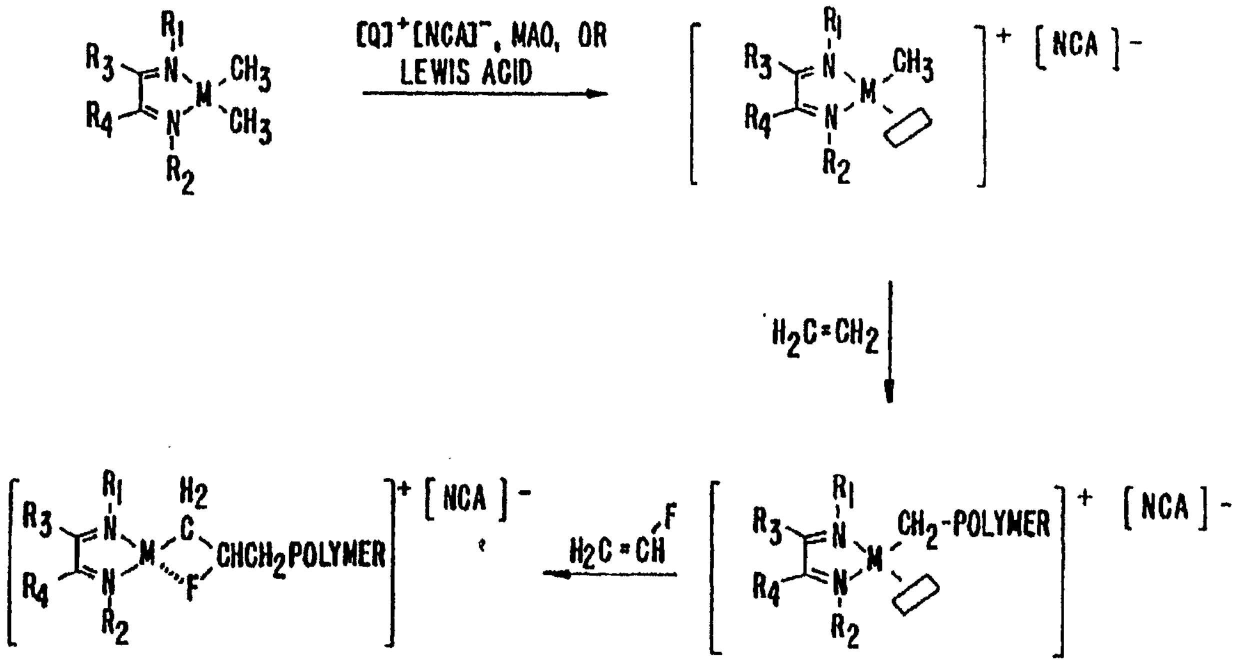


POLAR FUNCTIONALITY (F) CAN CHELATE TO METAL CENTER AND POTENTIALLY BLOCK VACANT SITE.

FIG. 13A.

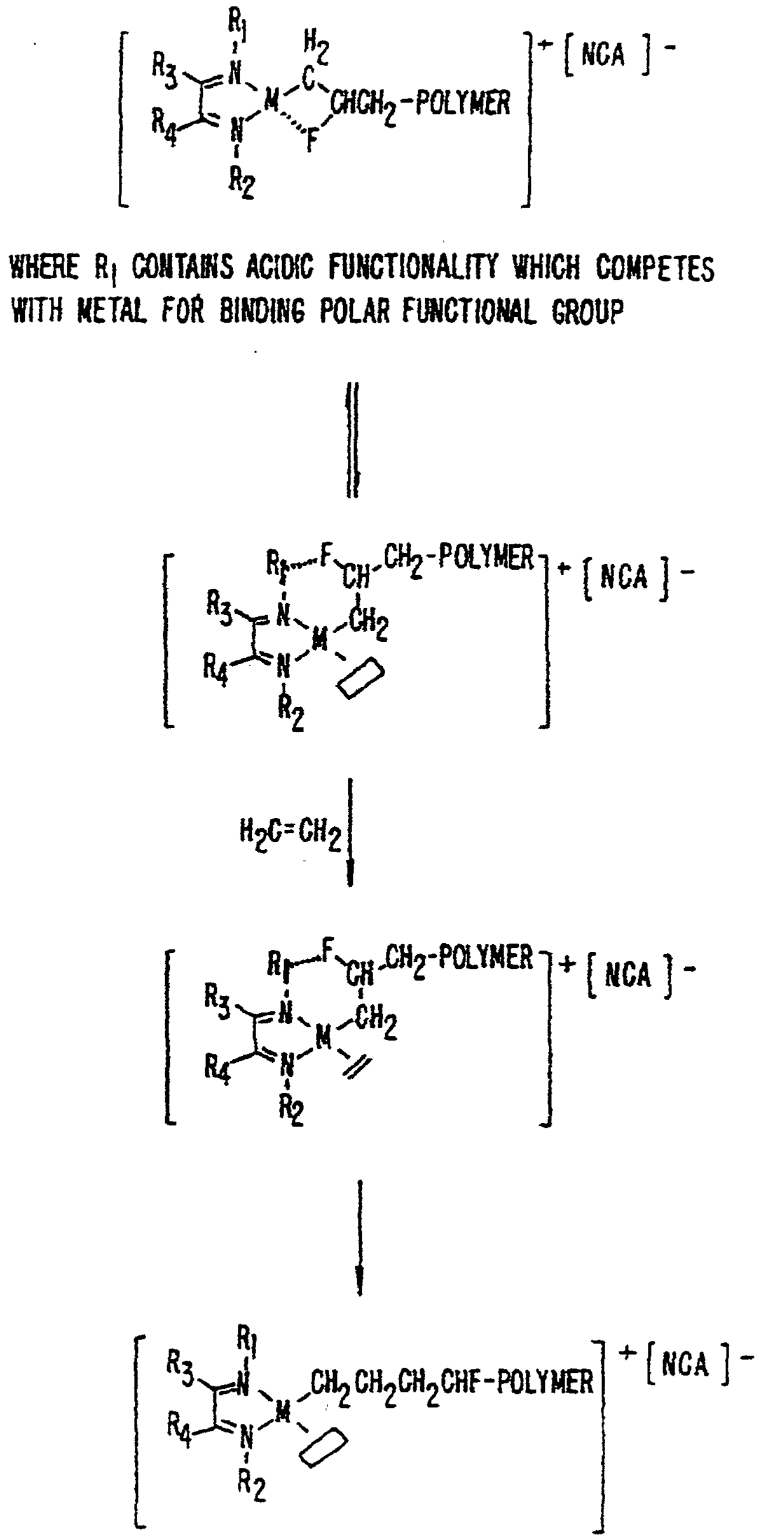
WHERE $R_1$ CONTAINS ACIDIC FUNCTIONALITY WHICH COMPETES WITH METAL FOR BINDING POLAR FUNCTIONAL GROUP
$H_2C=CH_2$

*FIG. 13B.*

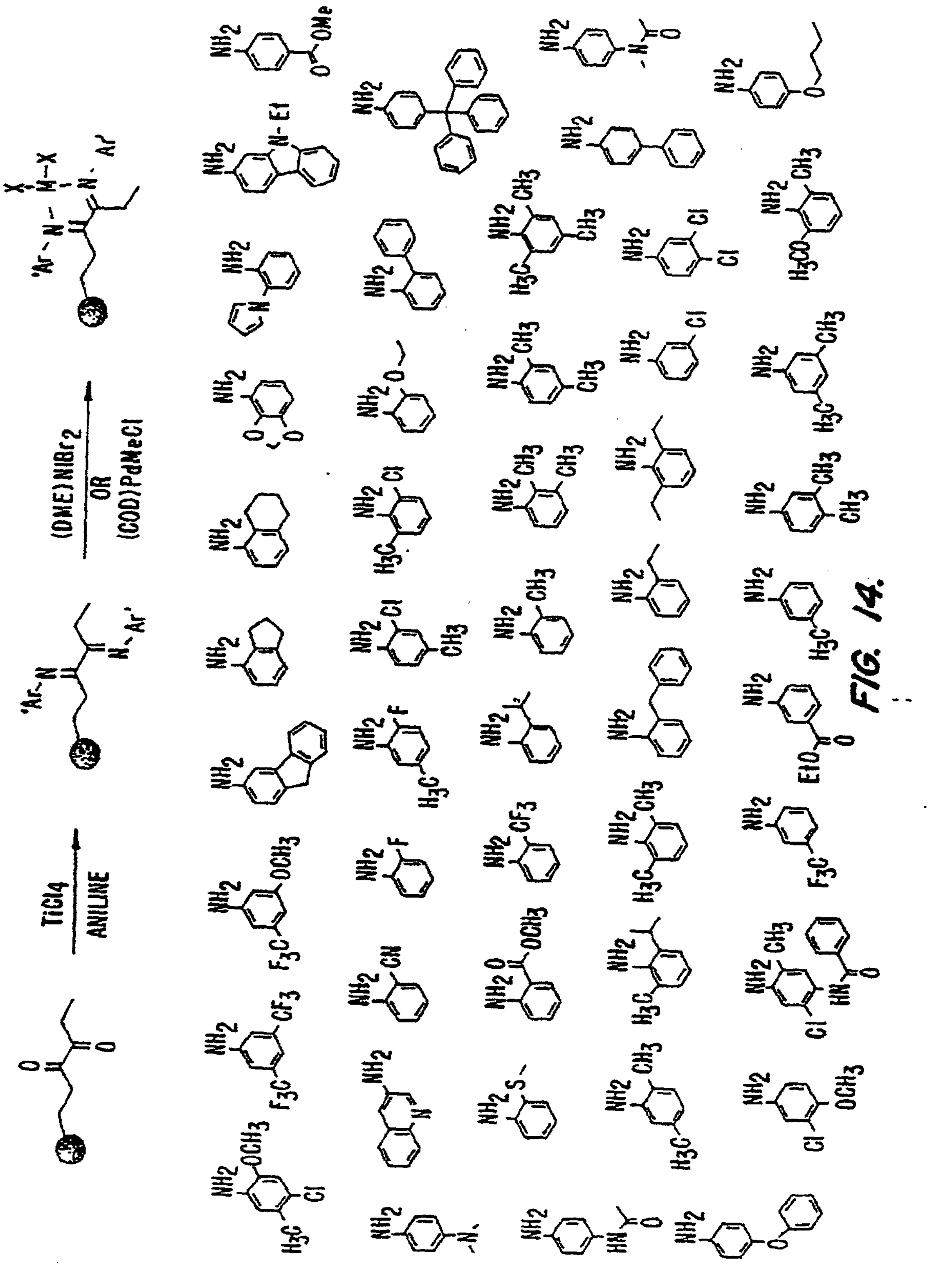


FIG. 14.

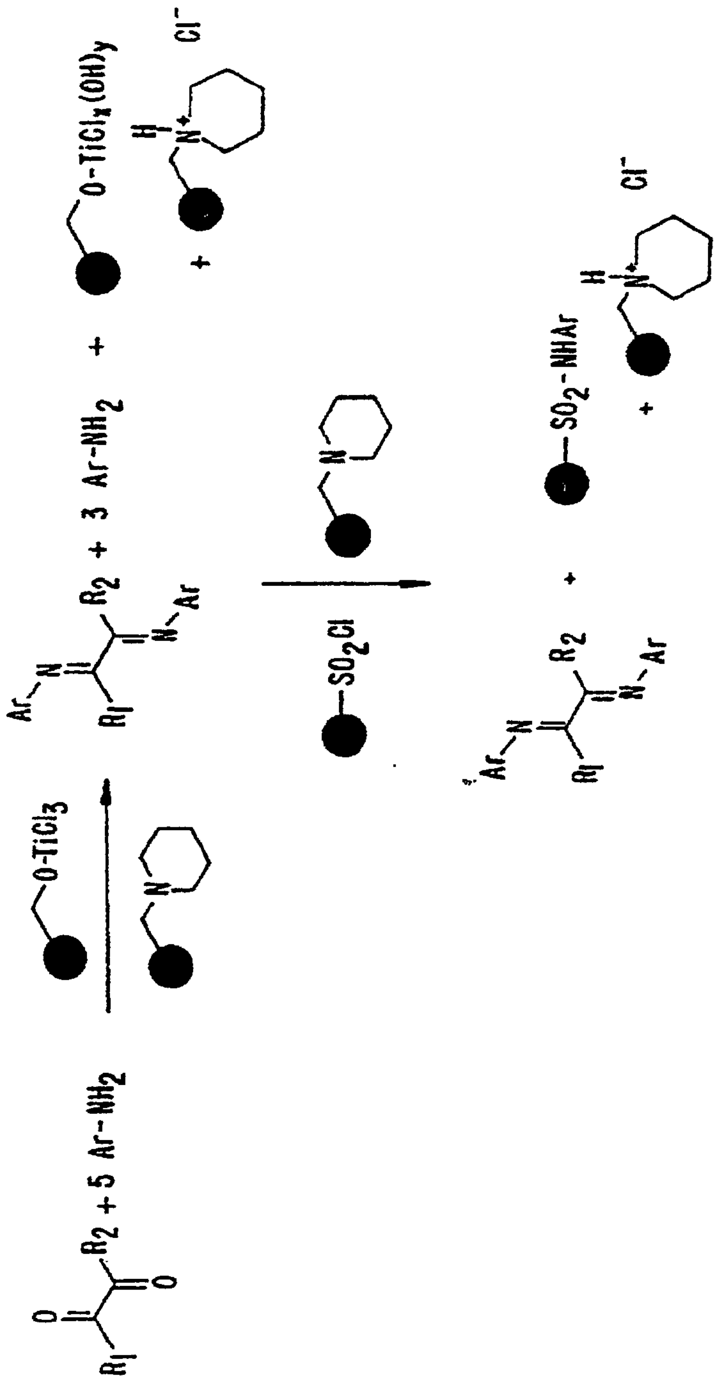

FIG. 15.

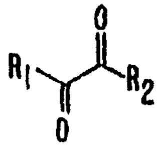

| $R_1$ | $R_2$ |
| --- | --- |
| H | H |
| H | Me |
| Me | Me |
| Me | Et |
| Me | Pr |
| Me | Bu |
| Me | *i*-Bu |
| Me | Ph |
| Me | $CF_3$ |
| Et | Et |
| Ph | Ph |
| $CF_3$ | Ph |
| $CF_3$ | $CF_2CF_3$ |
| $CF_3$ | $CF(CF_3)_2$ |

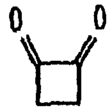

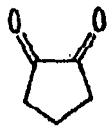

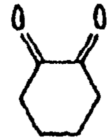

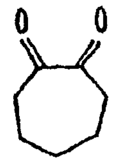

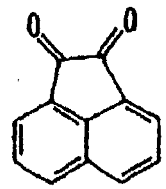

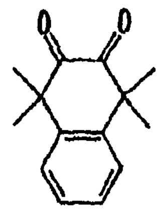

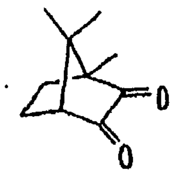

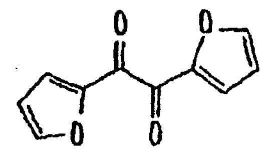

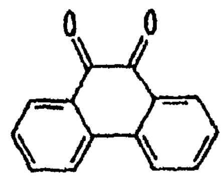

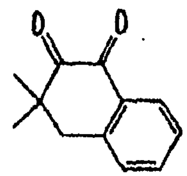

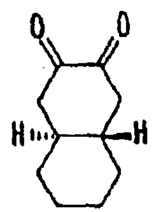

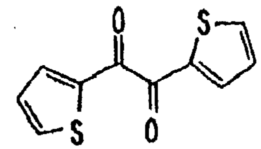

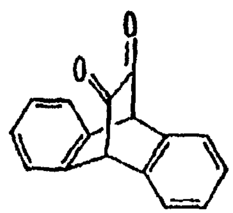

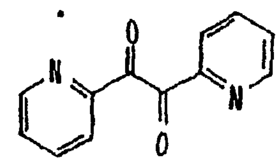

FIG. 16.

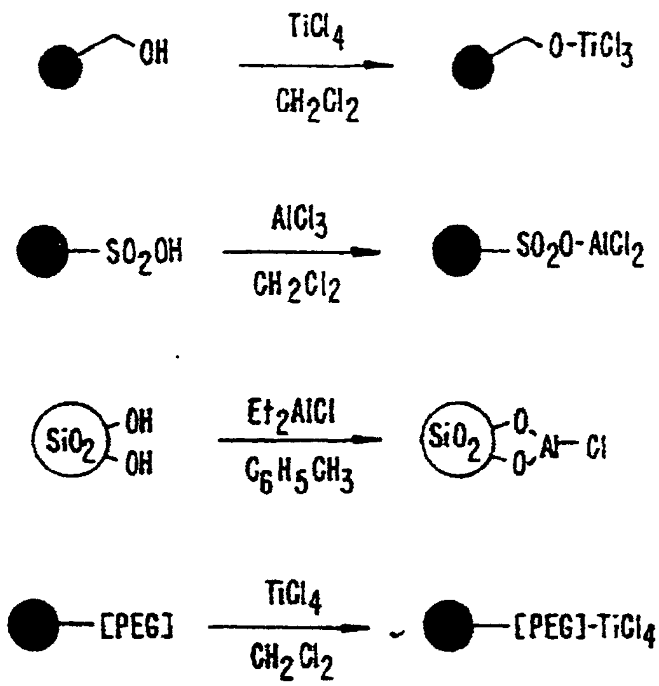


FIG. 17.